# EUROPÄISCHE PATENTSCHRIFT

(11) **EP 3 487 200 B1**
(45) Veröffentlichungstag und Bekanntmachung des Hinweises auf die Patenterteilung: **25.03.2026**
(21) Anmeldenummer: 18203101.3
(22) Anmeldetag: 29.10.2018
(51) Int. Cl.: H04W 12/065, H04W 12/67, H04W 12/68, H04W 12/30, H04L 9/40, G06F 21/31, G06F 21/32, H04W 12/40, H04W 12/33

(54) **VERHALTENSBASIERTE AUTHENTIFIZIERUNG MIT RÜCKFALLPOSITION**
BEHAVIOUR-BASED AUTHENTICATION WITH FALL-BACK POSITION
AUTHENTIFICATION BASÉE SUR LE COMPORTEMENT À L'AIDE DE LA POSITION DE RETOUR

(30) Priorität: 17.11.2017 DE 102017220545
(43) Veröffentlichungstag der Anmeldung: 22.05.2019
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- EP-A2- 2 733 635
- WO-A1-2016/130268
- US-A1- 2011 016 534

## Beschreibung

Die Erfindung betrifft ein Verfahren und ein System zur verhaltensbasierten Authentifizierung eines Nutzers unter Verwendung eines mobilen, tragbaren Kommunikationssystems.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die oftmals frei wählbar sind, sind entweder zu kurz und leicht zu merken, was jedoch den Nachteil hat, dass sie schneller zu erraten sind und somit nur ein geringes Maß an Sicherheit bieten. Passwörter, welche ein hohes Maß an Sicherheit bieten, sind demgegenüber oft lang und komplex. Insbesondere die Verwendung von Groß- und Kleinschreibung, sowie von Zahlen und/oder Sonderzeichen gestaltet die Eingabe sicherer Passwörter oft aufwendig. Dies gilt umso mehr, wenn es sich bei dem mobilen Kommunikationssystem beispielsweise um ein Smartphone handelt, bei welchem die Eingabe über ein Touchscreen-Display mit eingeblendeten Tastenfeldern erfolgt. Oftmals liegt dabei zudem eine Mehrfachbelegung der Tastenfelder vor und/oder die Größe der eingeblendeten Tastenfelder ist kleiner als die Fingerkuppen des Nutzers. Fingerabdrucksensoren haben den Nachteil, dass der Nutzer extra einen vorbestimmten Finger auf diesem platzieren muss. Hält er das mobile, tragbare Kommunikationssysteme in der falschen Hand kann der Fingerabdrucksensoren den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Die WO 2016/130268 A1 beschreibt Techniken zum Implementieren einer kontinuierlichen Authentifizierung eines Nutzers eines mobilen Geräts in dem mobilen Gerät. Diese Techniken umfassen ein Verfahren, welches ein Sammeln von Verhaltensinformationen des Nutzers des mobilen Geräts während einer kontinuierlichen Authentifizierungssitzung, ein Analysieren der Verhaltensinformationen zum Bestimmen einer Bewertung, ein Erzeugen eines Vertrauensgradwerts basierend auf der Bewertung und ein Bestimmen umfasst, dass der Nutzer des mobilen Geräts ein berechtigter Nutzer des mobilen Geräts ist, basierend auf dem erzeugten Konfidenzwert.

Die EP 2 733 635 A2 beschreibt ein mobiles Kommunikationsgerät, welches mehrere erste Eingabegeräte umfasst, die in der Lage sind, Eingabedaten passiv zu sammeln, ein zweites Eingabegerät, das in der Lage ist, Antwortdaten basierend auf einer Abfrage zu sammeln, und einen Prozessor, der dazu in der Lage ist, einen Sicherheitsgrad (LOA) zu bestimmen, dass sich ein Besitz des mobilen Kommunikationsgeräts nicht geändert hat, basierend auf einem statistischen Verhaltensmodell und den passiv empfangenen Eingangsdaten, und den LOA mit einem Sicherheitsschwellenwert zu vergleichen. Wenn der LOA über dem Sicherheitsschwellenwert liegt, ist der Prozessor in der Lage, eine gegebene Operation des mobilen Geräts auszuführen, ohne Antwortdaten von dem zweiten Eingabegerät zu benötigen. Wenn der LOA unter den Sicherheitsschwellenwert fällt, ist der Prozessor in der Lage, die Aufgabe zu erzeugen, die gegebene Operation des mobilen Geräts in Antwort auf gültige Antwortdaten durchzuführen und dem statistischen Verhaltensmodell in Reaktion auf den Empfang der gültigen Antwortdaten kürzlich eingegebene Daten hinzuzufügen.

Die US 2011/016534 A1 beschreibt ein Verfahren und ein System zum impliziten Authentifizieren eines Nutzers für einen Zugriff auf kontrollierte Ressourcen. Das System empfängt eine Anforderung zum Zugriff auf die kontrollierten Ressourcen. Das System bestimmt eine Nutzerverhaltensbewertung basierend auf einem Nutzerverhaltensmodell und aktuellen Kontextdaten über den Nutzer. Die Nutzerverhaltensbewertung erleichtert das Identifizieren eines Übereinstimmungsgrades zwischen einem oder mehreren jüngsten Nutzerereignissen und einem vergangenen Nutzerverhaltensmuster. Die aktuellen Kontextdaten, die eine Vielzahl von Datenströmen umfassen, werden von einem oder mehreren Nutzergeräten gesammelt, ohne dass der Nutzer dazu aufgefordert wird, eine Aktion auszuführen, die explizit der Authentifizierung zugeordnet ist. Die Vielzahl von Datenströmen stellen eine Basis zum Bestimmen der Nutzerverhaltensbewertung bereit, wohingegen ein Datenstrom allein eine unzureichende Basis für die Bestimmung der Nutzerverhaltensbewertung bereitstellt. Das System die Nutzerverhaltensbewertung auch für eine Zugriffssteuerung der kontrollierten Ressource bereit.

Der Erfindung liegt demgegenüber die Aufgabe zugrunde, ein verbessertes Verfahren zur Authentifizierung eines Nutzers zu ermöglichen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Die Erfindung schlägt ein Verfahren und ein System zur verhaltensbasierten Authentifizierung eines Nutzers gegenüber einem mobilen, tragbaren Kommunikationssystem vor. Die Grundlage der verhaltensbasierten Authentifizierung ist ein individuelles intrinsisches Verhalten des Nutzers, welches durch eine natürliche Verhaltensweise des Nutzers definiert ist. Die verhaltensbasierte Authentifizierung ermöglicht es dem Nutzer dadurch Zugriff auf sein mobiles, tragbares Kommunikationssystem zu erlangen, dass er sich so verhält, wie er es gewohnt ist.

Ferner ist als eine Rückfallposition eine nicht verhaltensbasierte Authentifizierung des Nutzers vorgesehen, falls die verhaltensbasierte Authentifizierung fehlschlägt. Beispielsweise umfasst die nicht verhaltensbasierte Authentifizierung durch Eingabe eines vordefinierten Authentifizierungsmerkmals, wie etwa einen Benutzernamen, ein Kennwort, ein Einmalkennwort, eine persönliche Identifikationsnummer, eine Transaktionsnummer, ein Muster und/oder ein biometrisches Merkmal. Dies kann den Vorteil haben, dass selbst im Falle eines Fehlschlags der verhaltensbasierten Authentifizierung oder falls für den Nutzer in einer bestimmten Situation eine verhaltensbasierte Authentifizierung nicht möglich oder von diesem nicht gewünscht ist. Beispielsweise kann ein Sensor zur Erfassung des Verhaltens des Nutzers eine Fehlfunktion aufweisen oder vollständig ausfallen. Ferner kann es sich bei dem für die verhaltensbasierte Authentifizierung erfassten Verhalten beispielsweise um eine grobmotorische Geste, wie etwa Laufen handeln. Infolge einer Verletzung oder sonstigen Unpässlichkeit, kann das Laufen für den Nutzer kurzfristig schwierig sein bis unmöglich sein. Zudem kann es Situationen geben, in denen es für den Nutzer unpassenden zu laufen, beispielsweise aufgrund beengter räumlicher Verhältnisse oder weil der Nutzer sich still verhalten möchte. Eine nicht verhaltensbasierte Authentifizierung bietet somit eine effiziente und sichere Rückfallposition zur Absicherung der verhaltensbasierten Authentifizierung, insbesondere in Ausnahmesituationen.

Ausführungsformen betreffen ein Verfahren zur Authentifizierung eines aktuellen Nutzers gegenüber einem mobilen, tragbaren Kommunikationssystem. Das mobile, tragbare Kommunikationssystem ist dazu konfiguriert, verhaltensbasierte Daten des Nutzers zu erfassen. Das Verfahren umfasst eine verhaltensbasierte Authentifizierung durch das mobile, tragbare Kommunikationssystem mit folgenden Schritten:
- Erfassen von verhaltensbasierten Daten des aktuellen Nutzers,
- Auswerten der erfassten verhaltensbasierten Daten,
- Erzeugen eines ersten Authentifizierungssignals, falls die ausgewerteten verhaltensbasierten Daten des aktuellen Nutzers einem charakteristischen Verhalten eines registrierten Nutzers des mobilen, tragbaren Kommunikationssystems entsprechen, wobei das erste Authentifizierungssignal eine erfolgreiche Authentifizierung des aktuellen Nutzers signalisiert.

Das mobile, tragbare Kommunikationssystem ist ferner dazu konfiguriert zumindest ein vordefiniertes Authentifizierungsmerkmal des Nutzers zu erfassen, wobei es sich bei dem zumindest einen vordefinierten Authentifizierungsmerkmal um ein Merkmal eines für den registrierten Nutzer charakteristischen Wissens, eines für den registrierten Nutzer charakteristischen Besitzes und/oder einer für den registrierten Nutzer charakteristischen biologischen Eigenschaft handelt. Zudem umfasst das Verfahren, falls die ausgewerteten verhaltensbasierten Daten des aktuellen Nutzers keinem charakteristischen Verhalten des registrierten Nutzers entsprechen, als Rückfallposition ferner eine verhaltensunabhängige Authentifizierung auf Basis des zumindest einen vordefinierten Authentifizierungsmerkmal durch das mobile, tragbare Kommunikationssystem mit folgenden Schritten:
- Erfassen des zumindest einen vordefinierten Authentifizierungsmerkmals des aktuellen Nutzers,
- Auswerten des erfassten vordefinierten Authentifizierungsmerkmals,
- Erzeugen eines zweiten Authentifizierungssignals, falls das ausgewertete vordefinierte Authentifizierungsmerkmal des aktuellen Nutzers einem charakteristischen Wissen, Besitz und/oder einer biologischen Eigenschaft des registrierten Nutzers entspricht, wobei das zweite Authentifizierungssignal eine erfolgreiche Authentifizierung des aktuellen Nutzers signalisiert.

Nach Ausführungsformen umfasst das mobile, tragbare Kommunikationssystem einen Prozessor und einen ersten Sensor, wobei das zumindest eine vordefinierte Authentifizierungsmerkmal des aktuellen Nutzers von dem ersten Sensor erfasst wird. Ferner umfasst die verhaltensunabhängige Authentifizierung auf Basis des zumindest einen vordefinierten Authentifizierungsmerkmal folgende durch den Prozessor ausgeführte Schritte:
- Senden eines Signals an den aktuellen Nutzer, welches eine Aufforderung zum Nachweis des zumindest einen vordefinierten Authentifizierungsmerkmals umfasst,
- Empfang des von dem ersten Sensor erfassten vordefinierten Authentifizierungsmerkmals des aktuellen Nutzers,

Dabei erfolgt das Auswerten des erfassten vordefinierten Authentifizierungsmerkmals durch den Prozessor und umfasst:
- Vergleichen des empfangenen Authentifizierungsmerkmals mit zumindest einem in einem geschützten Speicherbereich eines Speichers des mobilen, tragbaren Kommunikationssystems gespeicherten Referenzwert für das charakteristische Wissen, den charakteristischen Besitz und/oder die charakteristische biologische Eigenschaft des registrierten Nutzers,
   wobei eine ausreichende Übereinstimmung zwischen dem empfangenen Authentifizierungsmerkmal und dem Referenzwert Voraussetzung für das Erzeugen des zweiten Authentifizierungssignals ist.

Unter einem geschützten Speicherbereich wird hier ein Bereich eines elektronischen Speichers verstanden, auf den ein Zugriff, das heißt ein Lesezugriff oder ein Schreibzugriff, nur über einen mit dem Speicher gekoppelten Prozessor möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Nach Ausführungsformen ist der Referenzwert verschlüsselt gespeichert. In diesem Fall wird das eingegebene Authentifizierungsmerkmals vor dem Vergleichen mit demselben kryptographischen Schlüssel wie der Referenzwert, etwa einem öffentlichen Schlüssel eines asymmetrischen Schlüsselpaars, verschlüsselt. Der Vergleich erfolgt dann zwischen dem verschlüsselten Authentifizierungsmerkmal und dem verschlüsselten Referenzwert. Ausführungsformen können den Vorteil haben, durch eine verschlüsselte Speicherung des Referenzwerts, dessen Sicherheit zusätzlich erhöht werden kann.

Nach Ausführungsformen umfasst das zumindest eine vordefinierte Authentifizierungsmerkmal zum Nachweis eines charakteristischen Wissens eine alphanumerische Zeichenfolge oder ein geometrisches Muster, zum Nachweis eines charakteristischen Besitzes eine Kennung eines ID-Token und/oder zum Nachweis einer charakteristischen biologischen Eigenschaft einen Messwert der biologischen Eigenschaft.

Ausführungsformen können den Vorteil haben, dass sie eine effektive Rückfallposition bereitstellen, falls die verhaltensbasierte Authentifizierung fehlschlagen sollte. Die Gründe für eine fehlgeschlagene verhaltensbasierte Authentifizierung können dabei beliebig sein. Sie können beispielsweise in einer fehlerhaften oder ungenauen Erfassung der verhaltensbasierten Daten des Nutzers begründet sein oder in einer vorübergehenden oder nachhaltigen Änderung des Verhaltens des Nutzers. Beispielsweise umfassen die verhaltensbasierten Daten grobmotorische Bewegungsdaten des Nutzers. Hat sich der Nutzer verletzt, sodass er sein charakteristisches Bewegungsmuster vorübergehend grundlegend ändern muss, ist er etwa zeitweise an das Bett oder einen Rollstuhl gebunden oder auf Gehhilfen angewiesen, erlaubt ihm das vordefinierte Authentifizierungsmerkmal eine verhaltensunabhängige Authentifizierung.

Die alphanumerische Zeichenfolge oder das geometrische Muster kann der Nutzer beispielsweise über eine Nutzerschnittstelle, wie etwa ein Touch-Display, eingeben. Bei der alphanumerischen Zeichenfolge kann es nach Ausführungsformen um eine reine Zahlenfolge, eine reine Buchstabenfolge oder eine gemischte Zeichenfolge aus Zahlen, Buchstaben und/oder Sonderzeichen handeln. Ebenso kann es sich bei der alphanumerischen Zeichenfolge um eine Antwort auf eine hinterlegte Frage handeln, welche dem Nutzer zur verhaltensunabhängigen Authentifizierung angezeigt wird.

Bei dem vordefinierten Authentifizierungsmerkmal kann es sich ebenso um Wissen, wie etwa eine Passwortphrase, handeln, welche der Nutzer über eine entsprechende Nutzerschnittstelle, wie etwa ein Mikrophon, mittels Spracheingabe eingibt. Dies kann beispielsweise vorteilhaft sein, wenn der Nutzer in der Handhabung des das mobile, tragbare Kommunikationssystem gerade eingeschränkt ist, etwa weil die Bewegungsmöglichkeiten seiner Hände eingeschränkt sind.

Ferner kann zum Zwecke einer verhaltensunabhängigen Authentifizierung die Kennung eines ID-Token durch den Nutzer bereitgestellt werden.

Der Begriff ID-Token bezeichnet eine Vorrichtung, welche einen Identifikator (ID) bzw. eine Kennung umfasst, wie beispielsweise einen sogenannten USB-Stick, eine Chipkarte, oder ein Dokument. Insbesondere bezeichnet der Begriff ID-Token eine tragbare elektronische Vorrichtung, welche einen Prozessor zum Ausführen von Programminstruktionen und einen Speicher zum Speichern von Programminstruktionen umfasst,
Unter einem Dokument wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Nach Ausführungsformen weist der ID-Token keine eigene Energieversorgung auf. Als Energiequelle kann vielmehr eine Vorrichtung zum Ernten (energy harvesting) von Energie dienen, welche von dem Terminal an das ID Token übertragen wird, wie beispielsweise eine RFID-Antenne.

Ein Identifikator (ID), auch als Kennung bezeichnet, ist ein mit einer bestimmten Identität verknüpftes Merkmal zur eindeutigen Identifizierung eines Objekts, insbesondere eines Datenobjekts, dem der Identifikator zugeordnet ist. Ein Identifikator kann beispielsweise Zahlen, Buchstaben, Sonderzeichen sowie Kombinationen aus diesen umfassen.

Die Kennung wird dem mobilen, tragbaren Kommunikationssystem von dem ID-Token beispielsweise über eine drahtlose Kommunikationsschnittstelle übermittelt. Dabei kann die Kennung beispielsweise mit einem privaten kryptographischen Schlüssel eines asymmetrischen Schlüsselpaars signiert sein, welches dem Besitzer des ID-Tokens zugeordnet ist. Dieser private kryptographische Schlüssel, welcher als Signierschlüssel dient, ist beispielsweise in einem geschützten Speicherbereich eines Speichers des ID-Tokens gespeichert. Die Signatur kann durch das mobile, tragbare Kommunikationssystem mittels des öffentlichen kryptographischen Schlüssels des entsprechenden asymmetrischen Schlüsselpaars, welcher als Signaturprüfschlüssel dient, geprüft werden. Die Übertragung der Kennung kann verschlüsselt erfolgen, beispielsweise mittels Ende-zu-Ende-Verschlüsselung. Der öffentlichen kryptographischen Schlüssel wird beispielsweise von einem Zertifikat einer PKI umfasst, welches die Authentizität des öffentlichen Schlüssels belegt.

Unter einem Zertifikat wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die **PKI** stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einer Ende-zu-Ende-Verschlüsselung wird hier eine Verschlüsselung einer Verbindung zwischen einem Sender und einem Empfänger verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer eine Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Zum Nachweis einer charakteristischen biologischen Eigenschaft des Nutzers erfasst das mobile, tragbare Kommunikationssystem beispielsweise ein entsprechendes biometrisches Merkmal, welches als Nachweis der biologischen Eigenschaft des Nutzers dient. Beispielsweise positioniert der Nutzer einen seiner Finger auf einem dafür vorgesehenen Fingerabdrucksensor, sodass das mobile, tragbare Kommunikationssystem den Fingerabdruck des Nutzers erfassen kann.

Eine verhaltensunabhängige Authentifizierung, welche sich auf einen erfolgreichen Nachweis eines Wissens, eines Besitzes oder einer biologischen Eigenschaft des Nutzers stützt, mag im Allgemeinen aus Sicht des Nutzers aufwendiger und umständlicher sein, als eine verhaltensbasierte Authentifizierung. Eine verhaltensbasierte Authentifizierung hat den Vorteil, dass sie on-the-fly erfolgen kann, d.h. die Authentifizierung erfolgt auf Basis des üblichen Verhaltens des Nutzers, ohne dass dieser hierfür irgendwelche zusätzlichen Handlungen vornehmen müsste. Da die verhaltensunabhängige Authentifizierung, wie hier vorgeschlagen, aber nur als Rückfallposition verwendet wird, falls die verhaltensbasierte Authentifizierung fehlschlägt, wird der zusätzliche Aufwand den die verhaltensunabhängige Authentifizierung für den Nutzer im Vergleich zur verhaltensbasierte Authentifizierung darstellt durch die geringe Anzahl an Fällen kompensiert, in denen auf diese zurückgegriffen wird bzw. zurückgegriffen werden muss. Der weit überwiegende Fall der Authentifizierungen im Alltag erfolgt mithin effizient und effektive mittels verhaltensbasierter Authentifizierung und nur in Ausnahmefällen wird auf die verhaltensunabhängige Authentifizierung zurückgegriffen. Im Vergleich zu einem rein auf verhaltensunabhängigen Authentifizierungsansätzen basierenden Verfahren bieten das hier vorgeschlagene Verfahren mit seinem hybriden Ansatz die Vorteile einer höheren Effizient verbunden mit einer hohen Ausfallsicherheit.

Nach Ausführungsformen liegt eine ausreichende Übereinstimmung zwischen dem empfangenen Authentifizierungsmerkmal und dem gespeicherten Referenzwert vor, falls der Grad der Übereinstimmung einen vordefinierten Schwellenwert überschreitet.

Ausführungsformen können den Vorteil haben, dass abhängig vom Schwellenwert das Sicherheitsniveau der verhaltensunabhängigen Authentifizierung eingestellt werden kann. Soll ein hohes Sicherheitsniveau gewährleitet werden, kann der Schwellenwert so gewählt werden, dass für eine erfolgreiche Authentifizierung eine Identität zwischen empfangenem Authentifizierungsmerkmal und dem Referenzwert notwendig ist. Ist für den vorliegenden Fall oder grundsätzlich ein niedrigeres Sicherheitsniveau ausreichend, so kann der Schwellenwert niedriger gewählt werden, sodass eine Authentifizierung auch im Falle von Abweichungen, insbesondere im Falle von geringfügigen Abweichungen, zwischen empfangenem Authentifizierungsmerkmal und Referenzwert erfolgreich sein kann. Hierbei können insbesondere Fehlertoleranzen beim Erfassen des empfangenen Authentifizierungsmerkmals berücksichtigt werden.

Nach Ausführungsformen sind für ein Authentifizierungsmerkmal eine Mehrzahl unterschiedlicher Schwellenwerte gespeichert, welche jeweils einem anderen Sicherheitsniveau zugeordnet sind. Zum Vergleich zwischen empfangenem Authentifizierungsmerkmal und gespeicherten Referenzwerten wird bestimmt, welches Sicherheitsniveau der Authentifizierung zugrunde gelegt werden soll, und ein Schwellenwert mit dem entsprechenden Sicherheitsniveau aus der Mehrzahl von Schwellenwerten ausgewählt. Beispielsweise wird ein Schwellenwert mit einem identischen Sicherheitsniveau ausgewählt oder, falls kein Schwellenwert mit identischem Sicherheitsniveau vorliegt, der kleinste Schwellenwert aus einer Gruppe aller Schwellenwerte der Mehrzahl von Schwellenwerten, welche einem höheren Sicherheitsniveau als dem zugrunde gelegten Sicherheitsniveau zugeordnet sind.

Die Authentifizierung zugrunde zulegenden Sicherheitsniveaus sind beispielsweise vordefiniert und in dem Speicher des mobilen, tragbaren Kommunikationssystems, etwa als ein Verzeichnis, hinterlegt. Beispielsweise sind die Sicherheitsniveaus davon abhängig für welche Anwendung eine Authentifizierung erfolgt. Beispielsweise können Anwendungen, welche eine Kauffunktion oder eine Online-Banking-Funktion, etwa eine Online-Überweisung, umfassen, ein höheres Sicherheitsniveau erfordern, als Anwendungen, welche keine solchen Funktionen umfassen. Nach Ausführungsformen können einer Anwendung auch mehrere Sicherheitsniveaus zugeordnet sein. Beispielsweise ist für ein Aufrufen einer entsprechenden Anwendung eine Authentifizierung mit einem niedrigeren Sicherheitsniveau notwendig, als für ein Ausführen einer der zuvor genannten Funktionen, welche ein höheres Sicherheitsniveau erfordern. So ist zum Ausführen einer Kauf- oder Online-Banking-Funktion beispielsweise eine zusätzliche Authentifizierung mit höherem Sicherheitsniveau notwendig. Nach Ausführungsformen kann das für die Authentifizierung notwendige Sicherheitsniveau auch von der Anwendung, für welche die Authentifizierung ausgeführt werden soll, vorgegeben werden.

Nach Ausführungsformen liegt eine ausreichende Übereinstimmung zwischen dem empfangenen Authentifizierungsmerkmal und dem gespeicherten Referenzwert vor, falls das empfangene Authentifizierungsmerkmal und der Referenzwert identisch sind. Ausführungsformen können den Vorteil haben, dass ein hohes Maß an Sicherheit gewährleistet werden kann.

Nach Ausführungsformen wird eine Mehrzahl von Authentifizierungsmerkmalen erfasst und jeweils mit einem zugehörigen Referenzwert einer Mehrzahl von gespeicherten Referenzwerten verglichen, wobei eine ausreichende Übereinstimmung zwischen den empfangenen Authentifizierungsmerkmalen und den Referenzwerten vorliegt, falls eine gewichtete Summe der individuellen Übereinstimmungen zwischen den einzelnen Authentifizierungsmerkmalen und den zugehörigen Referenzwerten einen vordefinierten Schwellenwert überschreitet.

Ausführungsformen können den Vorteil haben, dass durch die Berücksichtigung einer Mehrzahl von Authentifizierungsmerkmalen bei der Authentifizierung, die Sicherheit erhöht werden kann. Ferner kann durch die Gewichtung der individuellen Übereinstimmungen der Erfassbarkeit des jeweiligen Authentifizierungsmerkmal und/oder dem Sicherheitsniveau des Schwellenwerts bzw. Authentifizierungsmerkmal Rechnung getragen werden. Authentifizierungsmerkmale, deren Erfassung höhere Ungenauigkeiten und/oder welche ein geringeres Sicherheitsniveau aufweisen, z.B. weil die Wahrscheinlichkeit groß ist, dass zwei verschiedene Personen beide das entsprechende Merkmal aufweise, werden beispielsweise geringer gewichtet. Bei der Gewichtung kann ferner berücksichtigt werden, welchem Sicherheitsniveau der Schwellenwert des jeweiligen Referenzwerts zugeordnet ist. Ist der Schwellenwert einem geringeren Sicherheitsniveau zugeordnet, kann die Übereinstimmung beispielsweise geringer gewichtet werden, da sie in einem geringeren Maß zur Sicherheit des Authentifizierungsverfahrens beiträgt.

Durch die Verwendung einer Mehrzahl von Authentifizierungsmerkmalen kann eine Mehrfaktorauthentifizierung implementiert werden. Nach Ausführungsformen handelt es sich bei der Mehrzahl von erfassten Authentifizierungsmerkmalen um eine Auswahl an Authentifizierungsmerkmalen, welche erfasst werden können und für welche zugehörigen Referenzwerte vorliegen. Die Auswahl kann beispielsweise abhängig von einem Gesamtsicherheitsniveau erfolgen, welchem die Authentifizierung genügen soll. Soll die Authentifizierung einem höheren Gesamtsicherheitsniveau genügen, so kann beispielsweise die Anzahl an ausgewählten Authentifizierungsmerkmalen erhöht werden. Genügt ein geringeres Gesamtsicherheitsniveau für die Authentifizierung, so kann beispielsweise die Anzahl an ausgewählten Authentifizierungsmerkmalen verringert werden. Ferner können zum Erreichen eines höheren Gesamtsicherheitsniveaus Authentifizierungsmerkmalen ausgewählt werden, denen selbst bzw. deren Schwellenwerten höhere Sicherheitsniveaus zugordnet sind. Genügt bereits ein niedrigeres Gesamtsicherheitsniveau, so können beispielsweise Authentifizierungsmerkmalen ausgewählt werden, denen selbst bzw. deren Schwellenwerten niedrigere Sicherheitsniveaus zugordnet sind. Beispielsweise sind die Authentifizierungsmerkmale und/oder die den Authentifizierungsmerkmalen zugeordneten Sicherheitsniveaus in Klassen unterteilt. Je nachdem, welches Gesamtsicherheitsniveau erreicht werden soll werden beispielsweise Authentifizierungsmerkmale bzw. Referenzwerte aus unterschiedlichen Klassen ausgewählt.

Nach Ausführungsformen erfolgt die Auswahl der individuellen Authentifizierungsmerkmale zufällig, wobei das zu erreichende Sicherheitsniveau als Randbedingung festgelegt wird. Mit anderen Worten kann die Auswahl der Anzahl und/oder der individuellen Authentifizierungsmerkmale, welche für eine erfolgreiche verhaltensunabhängige Authentifizierung nachgewiesen werden müssen, zufällig ausgewählt und den Benutzer vorgegeben werden, solange das Gesamtsicherheitsniveau der Auswahl größer und/oder gleich dem für die entsprechende Authentifizierung notwendigen Sicherheitsniveau ist. Ausführungsformen können den Vorteil haben, dass ein Dritter, welcher sich unberechtigter Weise in den Besitz des mobilen, tragbaren Kommunikationssystems bringt im Vorhinein nicht wissen kann, welche Authentifizierungsmerkmale er für eine erfolgreiche Authentifizierung vorweisen muss. Mithin wird es dem Dritten deutlich erschwert sich in den Besitz der benötigten Authentifizierungsmerkmale zu bringen bzw. diese zu fälschen. Dadurch wird die Sicherheit des Verfahrens weiter erhöht.

Nach Ausführungsformen wird bei einem Fehlschlagen des Nachweises eines der Authentifizierungsmerkmale zufällig ein weiteres Authentifizierungsmerkmal als Ersatz ausgewählt. Somit kann die Sicherheit weiter erhöht werden, da verhindert werden kann, dass ein unberechtigter Dritter mehrere Varianten für ein Authentifizierungsmerkmal ausprobiert, um die richtige zu finden.

In einer weiteren Ausführungsform muss sich der Nutzer nach einer Erstinbetriebnahme gegenüber dem mobilen, tragbaren Kommunikationssystem authentifizieren. Bei dieser Authentifizierung handelt es sich beispielswiese um eine verhaltensunabhängige Authentifizierung. Bei dieser verhaltensunabhängigen Authentifizierung kann es sich beispielsweise um ein verhaltensunabhängige Authentifizierung unter Verwendung einer Initialisierungs- bzw. Transport-PIN als Authentifizierungsmerkmal handeln, für welche eine Referenzwert bereits im Zuge der Herstellung in dem geschützten Bereich des Speichers des mobilen, tragbaren Kommunikationssystems hinterlegt wurde. Beispielsweise ist dieser Referenzwert, etwa über eine ROM-Maske, festverdrahtet in das mobile, tragbare Kommunikationssystem eingebracht. Beispielsweise ist der Referenzwert auf einer in das mobile, tragbare Kommunikationssystem eingebrachten Chipkarte, wie etwa einer SIM-Karte, gespeichert.

Eine Authentifizierung nach einer Erstinbetriebnahme kann beispielsweise eine Eingabe des entsprechenden Initialisierungs- bzw. Transport-PIN erfordern, welche einem berechtigten Nutzer beispielsweise im Zuge eines rechtmäßigen Erwerbs des Systems zur Verfügung gestellt wird. Nach weiteren Ausführungsformen kann die Authentifizierung nach einer Erstinbetriebnahme beispielsweise auch eine Eingabe bzw. ein Senden eines initialen Authentifizierungstokens in bzw. an das System umfassen. Das initiale Authentifizierungstoken kann beispielsweise von einem zentralen Authentifizierungsservice bereitgestellt werden, demgegenüber sich der Nutzer als berechtigter Nutzer authentifiziert hat.

Durch das Authentifizieren gegenüber dem System nach der Erstinbetriebnahme ergibt sich somit in vorteilhafter Weise, dass nur der berechtigte Nutzer das noch untrainierte System nutzen kann. Im Falle einer Erstinbetriebnahme erfolgt nach und/oder zusammen mit der zuvor genannten Authentifizierung des berechtigten Nutzers, falls diese erfolgreich ist, beispielsweise eine automatische Personalisierung des mobilen, tragbaren Kommunikationssystems auf den berechtigten Nutzer. Im Zuge der Authentifizierung und/oder danach werden Daten für eine verhaltensbasierte Authentifizierung des berechtigten Nutzers erfasst und zu dem Vergleichsdatensatz hinzugefügt. Somit wird das Klassifikationsmodul auf den entsprechenden Nutzer trainiert, d.h. das mobile, tragbare Kommunikationssystem wird personalisiert. Schlägt die zuvor genannte Authentifizierung des berechtigten Nutzers fehl, so werden beispielsweise keine Daten erfasst oder erfasste Daten werden nicht zu dem Vergleichsdatensatz hinzugefügt.

Nach Ausführungsformen muss sich der aktuelle Nutzer des mobilen, tragbaren Kommunikationssystems nach einer Erstinbetriebnahme gegenüber dem mobilen, tragbaren Kommunikationssystem unter Verwendung einer verhaltensunabhängigen initialen Authentifizierung auf Basis zumindest eines vordefinierten initialen Authentifizierungsmerkmals authentifizieren, wobei es sich bei dem vordefinierten initialen Authentifizierungsmerkmal um ein Merkmal eines für einen berechtigten initialen Nutzer charakteristischen Wissens und/oder charakteristischen Besitzes handelt, wobei in dem geschützten Speicherbereich des Speichers des mobilen, tragbaren Kommunikationssystems zumindest ein initialer Referenzwert für das charakteristische Wissen und/oder den charakteristischen Besitz des berechtigten initialen Nutzers gespeichert ist.

Bei dem Wissen kann es sich beispielsweise um einen initialen Code zur Erstinbetriebnahme des mobilen, tragbaren Kommunikationssystems handeln. Nach Ausführungsformen wird dieser Code dem Nutzer zum Zwecke der Erstinbetriebnahme von einer unabhängigen Instanz bereitgestellt. Beispielsweise erhält er den entsprechenden Code per Post, per Email und/oder auf einem unabhängigen Datenträger.

In einer weiteren Ausführungsform muss der Nutzer das mobile, tragbare Kommunikationssystem nach der Erstinbetriebnahme personalisieren.

Nach Ausführungsformen sendet das mobile, tragbare Kommunikationssystem nach der Erstinbetriebnahme ein Signal an den aktuellen Nutzer, welches eine Aufforderung zu einer Personalisierung des mobilen, tragbaren Kommunikationssystems durch den aktuellen Nutzer enthält, welche einen Empfang des zumindest einen Referenzwerts für das vordefinierte Authentifizierungsmerkmal durch das mobilen, tragbaren Kommunikationssystem und ein Speichern des Referenzwerts in dem geschützten Speicherbereich des Speichers umfasst, wobei die verhaltensunabhängige initiale Authentifizierung eine Voraussetzung für die Personalisierung ist.

Wird das mobile, tragbare Kommunikationssystem zum ersten Mal zur verhaltensbasierten Authentifizierung verwendet, sendet das mobile, tragbare Kommunikationssystem ein Signal an den Nutzer. Das Signal umfasst die Aufforderung zur Personalisierung des mobilen, tragbaren Kommunikationsgeräts durch den Nutzer durch ein gezieltes bzw. vorgegebenes Verhalten, welches mindestens einen Vergleichsdatensatz generiert. Beispielsweise wird der Nutzer aufgefordert mit dem mobilen, tragbaren Kommunikationsgerät zu laufen oder zu gehen.

Durch das Personalisieren des mobilen, tragbaren Kommunikationssystems nach der Erstinbetriebnahme aufgrund eines entsprechenden Signals ergibt sich in vorteilhafter Weise, dass der Nutzer das Verfahren zur verhaltensbasierten Authentifizierung gegenüber dem System möglichst früh anwenden kann. Das Personalisieren nach der Erstinbetriebnahme umfasst dabei das Erfassen von Daten, um daraus den entsprechenden Vergleichsdatensatz aufzubauen.

Nach Ausführungsformen umfasst das Personalisierung des mobilen, tragbaren Kommunikationssystems ferner einen Empfang des Referenzwerts für das vordefinierte Authentifizierungsmerkmal über den zweiten Sensor und ein Speichern des Referenzwerts in dem geschützten Speicherbereich des Speichers. Ausführungsformen können den Vorteilhaben, dass sie es dem Nutzer im Zuge der Personalisierung ermöglichen ein oder mehrere Authentifizierungsmerkmale für eine nicht verhaltensbasierte Authentifizierung als Rückfallposition festzulegen, falls eine verhaltensbasiere Authentifizierung fehlschlägt.

Nach Ausführungsformen umfassen die verhaltensbasierten Daten grobmotorische Bewegungsdaten, wobei das mobile, tragbare Kommunikationssystem mindestens einen zweiten Sensor zur Erfassung der grobmotorischen Bewegungsdaten und ein Grobmotorikklassifikationsmodul aufweist,
wobei der zweite Sensor zur Erfassung der grobmotorischen Bewegungsdaten einer grobmotorischen Bewegung des aktuellen Nutzers des mobilen, tragbaren Kommunikationssystems ausgebildet ist,
wobei das Grobmotorikklassifikationsmodul zur Erkennung eines generischen grobmotorischen Bewegungsmusters mit Hilfe von Trainingsdatensätzen einer Nutzerkohorte trainiert ist, wobei das Grobmotorikklassifikationsmodul durch den Prozessor des mobilen, tragbaren Kommunikationssystems ausgeführt wird,
wobei das Erfassen und Auswerten der verhaltensbasierten Daten umfasst:
   a) Wiederholtes Ausführen der folgenden Schritte:
      i. Erfassen der grobmotorischen Bewegungsdaten durch den mindestens einen zweiten Sensor des mobilen, tragbaren Kommunikationssystems, wobei die grobmotorischen Bewegungsdaten die Bewegungsdaten der grobmotorischen Bewegung des aktuellen Nutzers sind,
      ii. Eingabe der grobmotorischen Bewegungsdaten in das Grobmotorikklassifikationsmodul,
      iii. Generieren mindestens eines ersten Konfidenzwertes durch das Grobmotorikklassifikationsmodul, wobei der erste Konfidenzwert eine Wahrscheinlichkeit dafür angibt, dass die eingegebenen grobmotorischen Bewegungsdaten Bewegungsdaten einer grobmotorischen Bewegung des registrierten Nutzers sind,
      iv. Speichern des mindestens einen ersten Konfidenzwertes in dem Speicher des mobilen, tragbaren Kommunikationssystems,
   b) Zugreifen auf den Speicher des mobilen, tragbaren Kommunikationssystems, um mindestens einen der gespeicherten ersten Konfidenzwerte aus dem Speicher auszulesen,
   c) Generieren des Klassifikationsergebnisses unter Verwendung des mindestens einen ersten Konfidenzwertes,
   d) Auswerten des mindestens einen ersten Klassifikationsergebnisses gemäß einem vorgegebenen Prüfungskriterium, wobei eine erfolgreiche verhaltensbasierte Authentifizierung des aktuellen Nutzers vorliegt, falls das Prüfungskriterium erfüllt ist.

Viele mobile, tragbare Kommunikationssysteme, wie Smartphones, sind heutzutage mit Sensoren ausgestattet, welche eine Lage des entsprechenden Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung gilt, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen, ebenso wie beispielsweise feinmotorische Bewegungen, auf seine eigene Art und Weise aus. Somit kann einem bestimmten Nutzer eines mobilen, tragbaren Kommunikationssystems ein ganz bestimmtes, charakteristisches Bewegungsprofil, d.h. grob- und/oder feinmotorisches Bewegungsprofil, zugeordnet werden. Anhand dieses Bewegungsprofils ist der Nutzer identifizierbar. Die durch den Bewegungssensor erfassten Daten werden einem solchen Bewegungsprofil zugeordnet. Das mobile, tragbare Kommunikationssystem ist ferner mit einem Klassifikationsmodul ausgestattet, welches dazu trainiert ist, die Bewegungsmuster des Nutzers zu erkennen.

Der Sensor des Kommunikationssystems kann ein interner Sensor zur Erfassung einer Bewegung des Kommunikationssystems sein (oder umfassen), wobei die Bewegung des Kommunikationssystems durch eine grob- und/oder feinmotorische Bewegung des aktuellen Nutzers des Kommunikationssystems verursacht wird, z.B. während der Nutzer das Kommunikationsgerät bei sich trägt. Die verhaltensbasierten Daten können Bewegungsdaten der Bewegung des Kommunikationssystems umfassen. Nach Ausführungsformen umfassen die verhaltensbasierten Daten somit Bewegungsdaten einer Bewegung des Kommunikationssystems, wobei die Bewegung des Kommunikationssystems durch eine grob- und/oder feinmotorische Bewegung des aktuellen Nutzers des Kommunikationssystems verursacht wird, während der Nutzer das Kommunikationsgerät bei sich trägt.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart allen Nutzern gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Bewegungsdaten einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welches zuvor ebenfalls trainiert wurde.

Bei einer verhaltensbasierten Authentifizierung eines Nutzers unter Verwendung eines mobilen, tragbaren Kommunikationssystems wird zwischen zwei Typen von Nutzern unterschieden. Einerseits ist der in dem Kommunikationssystem registrierte Nutzer derjenige Nutzer, den das System erkennen soll. Andererseits ist der aktuelle Nutzer derjenige Nutzer, der das System aktuell bedienen bzw. benutzen möchte, wofür er sich authentifizieren muss. Kann der aktuelle Nutzer mit dem in dem Kommunikationssystem registrierten Nutzer durch den Authentifizierungsprozess identifiziert werden, so wird dem aktuellen Nutzer der Zugriff auf das Kommunikationssystem gewährt. Stimmt der aktuelle Nutzer nicht mit dem in dem Kommunikationssystem registrierten Nutzer überein, so identifiziert das Kommunikationssystem den aktuellen Nutzer als eine andere, nicht nutzungsberechtigte Person und verweigert den Zugriff. Im Folgenden wird mit "der Nutzer" der aktuelle Nutzer des Kommunikationssystems bezeichnet. Ist der in dem Kommunikationssystem registrierte Nutzer gemeint, ist dies explizit als "der registrierte Nutzer" gekennzeichnet.

Ein mobiles, tragbares Kommunikationssystem kann zum Beispiel umfassen: ein Smartphone, ein Tablet, einen Personal Digital Assistant, einen Pager, Smart-Glasses, eine Smart-Watch, ein Navigationsgerät, einen Activity Tracker, ein Gerät zur Erfassung medizinischer Daten, insbesondere physiologischer Daten wie ein Pulsmessgerät oder ein Blutdruckmessgerät. Zum Ausführen der verhaltensbasierten Authentifizierung sowie der verhaltensunabhängigen Authentifizierung ist das mobile, tragbare Kommunikationssystem dazu konfiguriert elektronische Daten zu verarbeiten und weist nach Ausführungsformen mindestens einen Sensor zum Erfassen einer grobmotorischen Bewegung sowie einen Sensor zum Erfassen eines verhaltensunabhängigen Authentifizierungsmerkmals auf.

Beispielsweise kann ein mobiles, tragbares Kommunikationssystem ein Smartphone umfassen, wobei das Smartphone einen Sensor zur Erfassung einer grobmotorischen Bewegung des Gehens sowie ein Touch-Display zur Eingabe eines für den registrierten Nutzer charakteristischen Wissens, wie etwa eine alphanumerische Zeichenfolge, aufweist. Nach weiteren Ausführungsformen weist das Smartphone zusätzlich oder alternative beispielsweise eine Kommunikationsschnittstelle zur Kommunikation mit einem ID-Token auf, sodass der registrierten Nutzer als charakteristischen Besitze den Besitz des entsprechenden ID-Token nachweisen kann. Wobei der Nachweis eine Kommunikation zwischen dem Smartphone und dem ID-Token über die entsprechende Kommunikationsschnittstelle umfasst. Nach weiteren Ausführungsformen weist das Smartphone zusätzlich oder alternative beispielsweise einen Sensor zum Erfassen eines oder mehrerer biometrischer Merkmale, wie etwa einen Fingerabdrucksensor, einen Pulsmesser oder einen Irissensor, als einer für den registrierten Nutzer charakteristischen biologischen Eigenschaf auf.

Beispielhaft kann ein mobiles, tragbares Kommunikationssystem ein Smartphone und/oder eine Smart-Watch umfassen, wobei das Smartphone einen Sensor zur Erfassung der grobmotorischen Bewegung des Gehens aufweist und die Smart-Watch den Puls und den Blutdruck des Nutzers misst. Anhand eines Vergleichs der Daten des Nutzers und des registrierten Nutzers kann der Nutzer als der registrierte Nutzer identifiziert werden oder nicht.

Ein solches mobiles, tragbares Kommunikationssystem weist zur Ausführung der verhaltensbasierten Authentifizierung eines Nutzers mindestens einen Sensor (z.B. einen internen Bewegungssensor des Kommunikationssystems) zur Erfassung von Daten einer grobmotorischen Bewegung des Nutzers, ein Grobmotorikklassifikationsmodul, ein Betriebssystem, einen Prozessor und einen internen Speicher auf. Der Sensor zur Erfassung der Daten ist dazu konfiguriert, eine grob- und/oder feinmotorische Bewegung des Nutzers zu erfassen, z.B. mittels einer Erfassung einer Bewegung des Kommunikationssystem, die durch die grob- und/oder feinmotorische Bewegung des Nutzers verursacht wird. Das Grobmotorikklassifikationsmodul ist für die Klassifikation der Daten konfiguriert, auf das Erkennen einer grob- und/oder feinmotorischen Bewegung des Nutzers trainiert, implementiert ein Maschinenlernverfahren und wird durch den Prozessor des mobilen, tragbaren Kommunikationssystems ausgeführt, wobei das Betriebssystem dazu in der Lage ist den Zugriff auf das mobile, tragbare Kommunikationssystem aufgrund des Erfolgs der Authentifizierung zu steuern.

Das durch das Grobmotorikklassifikationsmodul implementierte Maschinenlernverfahren bezeichnet ein Verfahren, mit dem das Grobmotorikklassifikationsmodul in der Lage ist, sich an den Nutzer des mobilen, tragbaren Kommunikationssystems anzupassen. Anpassen bezeichnet in diesem Sinne das Justieren und gegebenenfalls Neukonfigurieren von Klassifikationsparametern, anhand derer der Nutzer korrekt identifiziert werden kann. Das Maschinenlernverfahren ist nicht beschränkt auf einen bestimmten Algorithmus. Gemäß Ausführungsformen ist das Maschinenlernverfahren ein speziell für das maschinelle Lernen entwickelter Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Die verhaltensbasierte Authentifizierung eines Nutzers gegenüber einem mobilen tragbaren Kommunikationssystem kann in zwei operative Abschnitte unterteilt werden. Abschnitt A umfasst ein wiederholtes Ausführen der folgenden Schritte:
- Erfassen grobmotorischer Bewegungsdaten durch den mindestens einen Sensor des mobilen, tragbaren Kommunikationssystems,
- Eingabe der grobmotorischen Bewegungsdaten in das Grobmotorikklassifikationsmodul,
- Generieren mindestens eines ersten Konfidenzwertes durch das Grobmotorikklassifikationsmodul,
- Speichern des mindestens einen ersten Konfidenzwertes in dem Speicher des mobilen, tragbaren Kommunikationssystems und
- Trainieren des Grobmotorikklassifikationsmoduls mit den grobmotorischen Bewegungsdaten des Nutzers, um das Grobmotorikklassifikationsmodul auf ein nutzerspezifisches grobmotorisches Bewegungsmuster zu trainieren unter der Voraussetzung, dass gemäß dem ersten Klassifikationsergebnis der Nutzer der im mobilen, tragbaren Kommunikationssystem registrierte Nutzer ist.

Diese Schritte werden wiederholt ausgeführt, wodurch fortlaufend Konfidenzwerte generiert und in dem Speicher des mobilen, tragbaren Kommunikationssystems gespeichert werden.

Im zweiten Abschnitt B der verhaltensbasierten Authentifizierung reagiert das mobile, tragbare Kommunikationssystem auf eine Authentifizierungsanfrage an ein für die Authentifizierung konfiguriertes Anwendungsprogramm, welches auf dem mobilen, tragbaren Kommunikationssystem implementiert ist, und/oder das Betriebssystem des mobilen, tragbaren Kommunikationssystems. Die entsprechende Authentifizierungsanfrage kann durch das mobile, tragbare Kommunikationssystem selbst generiert werden. Beispielsweise wird die Authentifizierungsanfrage von dem Betriebssystem des mobilen, tragbaren Kommunikationssystems generiert. Ferner kann die Authentifizierungsanfrage von einem auf dem mobilen, tragbaren Kommunikationssystem ausgeführten bzw. aufgerufenen Anwendungsprogramm gestellt werden. Nach weiteren Ausführungsformen empfängt das mobile, tragbare Kommunikationssystem die Authentifizierungsanfrage über eine Kommunikationsschnittstelle.

Schlägt beispielsweise die verhaltensbasierte Authentifizierung fehl, können etwa keine verhaltensbasierten Daten des aktuellen Nutzers erfasst werden, sind die erfassten verhaltensbasierten Daten derart fehlerhaft, dass keine Auswertung durchgeführt werden kann, oder entsprechen die ausgewerteten verhaltensbasierten Daten keinem charakteristischen Verhalten des registrierten Nutzers, so wird eine verhaltensunabhängige Authentifizierung durchgeführt. Beispielsweise die verhaltensbasierte Authentifizierung wird bei einem Fehlschlag wiederholt bis eine vordefinierte maximale Anzahl an Wiederholungen erreicht ist. Ist die vordefinierte maximale Anzahl an Wiederholungen erreicht wird nach Ausführungsformen die verhaltensunabhängige Authentifizierung durchgeführt.

Die verhaltensunabhängige Authentifizierung eines Nutzers gegenüber einem mobilen tragbaren Kommunikationssystem erfolgt beispielswiese in einem zusätzlichen Abschnitt, d.h. einem dritten operativen Anschnitt C. Falls die verhaltensunabhängige Authentifizierung erfolgreich ist, wird ein zweites Authentifizierungssignal erzeugt, welches eine erfolgreiche verhaltensunabhängige Authentifizierung des Nutzers signalisiert. Ist auch die verhaltensbasierte Authentifizierung, so wird dem Nutzer kein Zugriff gewährt.

Abschnitt C umfasst beispielsweise ein Ausführen der folgenden Schritte:
- Erfassen des zumindest einen vordefinierten Authentifizierungsmerkmals des aktuellen Nutzers,
- Auswerten des erfassten vordefinierten Authentifizierungsmerkmals,
- Erzeugen eines zweiten Authentifizierungssignals, falls das ausgewertete vordefinierte Authentifizierungsmerkmal des aktuellen Nutzers einem charakteristischen Wissen, Besitz und/oder einer biologischen Eigenschaft des registrierten Nutzers entspricht, wobei das zweite Authentifizierungssignal eine erfolgreiche Authentifizierung des aktuellen Nutzers signalisiert.

Nach Ausführungsformen kann Abschnitt C ferner folgende Schritte umfasst:
- Senden eines Signals an den aktuellen Nutzer, welches eine Aufforderung zum Nachweis des zumindest einen vordefinierten Authentifizierungsmerkmals umfasst,
- Empfang des von dem ersten Sensor erfassten vordefinierten Authentifizierungsmerkmals des aktuellen Nutzers,
   wobei das Auswerten des erfassten vordefinierten Authentifizierungsmerkmals umfasst:
   - Vergleichen des empfangenen Authentifizierungsmerkmals mit zumindest einem in einem geschützten Speicherbereich eines Speichers des mobilen, tragbaren Kommunikationssystems gespeicherten Referenzwert für das charakteristische Wissen, den charakteristischen Besitz und/oder die charakteristische biologische Eigenschaft des registrierten Nutzers,
   - wobei eine ausreichende Übereinstimmung zwischen dem empfangenen Authentifizierungsmerkmal und dem Referenzwert Voraussetzung für das Erzeugen des zweiten Authentifizierungssignals ist.

Ausführungsformen können den Vorteil haben, dass sie im Falle einer nicht erfolgreichen verhaltensbasierten Authentifizierung eine effiziente Rückfallposition bereitstellen, welche eine Authentifizierung auf Basis eines verhaltensunabhängigen Authentifizierungsmerkmals ermöglicht. Bei diesem Authentifizierungsmerkmal handelt es sich um ein vordefiniertes Merkmal, welches charakteristisch für den registrierten Nutzer ist und als Authentifizierungsmerkmals für den registrierten Nutzer festgelegt wurde. Dieses Authentifizierungsmerkmal umfasst beispielsweise ein Wissen, welches nur der registrierte Nutzer besitzt, wie etwa eine PIN, ein individuelles körperliches Charakteristikum des registrierten Nutzers, wie etwa ein Fingerabdruck, oder einen Besitz einer für den registrierten Nutzer charakteristischen Vorrichtung, wie etwa einem ID-Token.

Nach Ausführungsformen umfasst das nachzuweisende vordefinierte Authentifizierungsmerkmal eines der folgenden Merkmale: einen Benutzernamen, ein Kennwort, ein Einmalkennwort, eine persönliche Identifikationsnummer, eine Transaktionsnummer, ein Muster und/oder ein biometrisches Merkmal. Diese Merkmale können den Vorteil haben, dass sie eine effiziente Eingabe und/oder Prüfung der eingegebenen Merkmale ermöglichen. Die Eingabe bzw. Erfassung der Merkmale erfolgt durch den zweiten Sensor, bei welchem es sich beispielsweise um eine Nutzerschnittstelle, wie etwa eine Tastatur, ein Touchpad bzw. Touchscreen, ein Mikrophon, eine Kamera, oder einen biometrischen Sensor zur Erfassung eines biometrischen Merkmals handeln kann.

Nach weiteren Ausführungsformen ist für eine vordefinierte Gruppe von Authentifizierungen ausschließlich eine verhaltensunabhängige Authentifizierung vorgesehen. Nach Ausführungsformen ist für die weiteren Authentifizierungen als Grundeinstellung eine verhaltensbasierte Authentifizierung und nur im Falle eines Fehlschlagens der verhaltensbasierten Authentifizierung ein Ausführen einer verhaltensunabhängigen Authentifizierung als Rückfallposition vorgesehen. Die vordefinierte Gruppe von Authentifizierungen kann beispielsweise Authentifizierung des Nutzers umfassen, welche auf Authentifizierungsanfragen von Anwendungen mit sehr hohen Sicherheitsanforderungen beruhen. Beispielsweise handelt es sich bei der Authentifizierung um eine Authentifizierung im Zuge einer Online-Überweisung oder im Zuge einer Online-Bestellung. Nach Ausführungsformen überschreitet zudem beispielsweise der Überweisungsbetrag oder der Bestellwert einen vordefinierten Schwellenwert. Solange der Schwellenwert nicht überschritten wird erfolgt die Authentifizierung beispielswiese unter Verwendung eines verhaltensbasierten Authentifizierungsverfahrens mit einer verhaltensunabhängigen Authentifizierung als Rückfallposition im Falle eines Fehlschlagens der verhaltensbasierten Authentifizierung. Wird der Schwellenwert überschritten, wird ausschließlich eine verhaltensunabhängige Authentifizierung ausgeführt. Bei den zuvor genannten Authentifizierungen handelt es sich beispielsweise um zusätzliche Authentifizierungen, welche zur Bestätigung der Online-Überweisung oder Online-Bestellung angefragt werden.

Ausführungsformen können den Vorteil haben, dass als Grundeinstellung eine verhaltensbasierte Authentifizierung vorgesehen ist, welche keine zusätzlichen Aktionen des Nutzers erfordert, sondern diesen auf Basis seines Verhaltens authentifiziert. Sollte es zu Problemen kommen, kann eine verhaltensunabhängigen Authentifizierung als Rückfallposition verwendet werden. Somit kann stets die Möglichkeit einer erfolgreichen des registrierten Nutzers sichergestellt werden. Dadurch, dass die für den Nutzer weniger aufwendige verhaltensbasierten Authentifizierung den Normalfall bildet und die für den Nutzer aufwendigere verhaltensunabhängigen Authentifizierung nur in Ausnahmefällen zum Einsatz kommt, kann die Effizienz des Verfahrens deutlich gesteigert werden im Vergleich zu einem Verfahren, welches beispielswiese im Normalfall ausschließlich auf verhaltensunabhängigen Authentifizierungen basieren würde. Die Beschränkung auf ausschließlich verhaltensunabhängige Authentifizierungen in Ausnahmefällen, in welchen hohe Sicherheitsanforderungen zu erfüllen sind, kann den Vorteil haben, dass sowohl die entsprechenden hohen Sicherheitsanforderungen erfüllt werden können und zum anderen die Effizienz bezogen auf eine Mehrzahl von Authentifizierungen unter Alltagsbedingungen deutlich erhöht werden kann.

Die Verwendung ausschließlicher verhaltensunabhängiger Authentifizierungen in Ausnahmefällen kann ferner den Vorteil haben, dass der Nutzer durch die Anfrage nach der verhaltensunabhängigen Authentifizierung explizit auf die vorliegende Ausnahmesituation hingewiesen wird und diesem intuitive verdeutlicht wird, dass eine Authentifizierungen unter höheren Sicherheitsanforderungen als üblich notwendig ist und er ein hohes Maß an Aufmerksamkeit bezüglich weiteren Handlungen an der Tag legen sollte. Das Ausführen einer solchen verhaltensunabhängigen Authentifizierung umfasst somit eine bewusste Entscheidung des Nutzers hierzu, da im Allgemeinen eine zusätzliche Aktion durch den Nutzer notwendig ist, wie etwa eine Eingabe bzw. ein Bereitstellen eines verhaltensunabhängigen Authentifizierungsmerkmals, beispielswiese muss der Nutzer eine alphanumerische Zeichenfolge eingeben, einen Finger auf einem Fingerabdrucksensor positionieren und/oder einen ID-Token bereitstellen. Es kann dadurch verhindert werden, dass sich der Nutzer unbewusst durch sein übliches Verhalten authentifiziert und damit versehentlich ein Ausführen einer Funktion des mobilen, tragbaren Kommunikationssystems autorisiert, welche er eigentlich nicht ausführen möchte. Beispielsweise wird so verhindert, dass der Nutzer auf eine Authentifizierungsanfrage im Fall einer Funktion mit hohen Sicherheitsanforderungen ausversehen weiter klickt und sich durch sein Verhalten authentifiziert.

Nach Ausführungsformen ist eine verhaltensbasierte Authentifizierung mit einer verhaltensunabhängigen Authentifizierung als Rückfallposition für eine Auswahl von Anwendungen vorgesehen, während für alle weiteren Anwendungen eine ausschließlich verhaltensunabhängige Authentifizierung vorgehsehen ist. Nach Ausführungsformen umfasst die Auswahl beispielsweise Anwendungen, welche der registrierte Nutzer für die verhaltensbasierte Authentifizierung mit verhaltensunabhängiger Authentifizierung als Rückfallposition freigegeben hat und/oder welche der Nutzer bereits zuvor mindestens einmal ausgeführt hat und/oder für welche sich der Nutzer bereits zumindest einmal unter Verwendung der ausschließlich verhaltensunabhängigen Authentifizierung authentifiziert hat und/oder deren Ausführung Teil des charakteristischen Verhaltens des Nutzers ist. Beispielsweise wird eine Anwendung der Auswahl hinzugefügt, wenn der Nutzer diese eine vordefinierte Anzahl an Malen ausgeführt hat und/oder wenn der Nutzer sich gegenüber den Anwendung eine vordefinierte Anzahl an Malen verhaltensunabhängig authentifiziert hat und/oder wenn das Klassifikationsmodul, genauer gesagt das Anwendungsklassifikationsmodul, dazu trainiert ist/wurde, das Ausführen der entsprechenden Anwendung als Teil des charakteristischen Verhaltens des Nutzers zu klassifiziert.

Eine Anwendung kann beispielsweise ein Anwendungsprogramm bzw. eine Applikation umfassen, welche auf dem mobilen, tragbaren Kommunikationssystem implementiert ist und/oder über das mobile, tragbare Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Eine solches Anwendungsprogramm kann beispielsweise dazu konfiguriert sein eine nützliche oder gewünschte, nicht systemtechnische Funktionalität zu bearbeiten oder zu unterstützen.

Auf die Authentifizierungsanfrage hin greift der Prozessor des mobilen, tragbaren Kommunikationssystems auf den Speicher zu und liest mindestens einen ersten Konfidenzwert aus. Der mindestens eine erste Konfidenzwert wird dann verwendet, um ein Klassifikationsergebnis zu generieren. Diese wird gegen ein bestimmtes, vordefiniertes Prüfungskriterium geprüft. Erfüllt das Klassifikationsergebnis das Prüfungskriterium, so wird gemäß einer Ausführungsform ein Signal erzeugt, wobei das Signal die Information des Erfolges der Authentifizierung des Nutzers gegenüber dem mobilen, tragbaren Kommunikationssystem umfasst. Wird das Prüfungskriterium durch das Klassifikationsergebnis nicht erfüllt, so wird dem Nutzer der Zugriff auf das Kommunikationssystem bzw. eine Anwendung verweigert und eine verhaltensunabhängige Authentifizierung als Rückfallposition ausgeführt. Ist die verhaltensunabhängige Authentifizierung erfolgreich, wird dem Nutzer Zugriff gewährt, ist sie nicht erfolgreich, bleibt dem Nutzer der Zugriff verwehrt.

Gemäß einer Ausführungsform werden die verhaltensbasierten Daten durch den mindestens einen Sensor als Datenstrom (Stream) erfasst.

Durch die Erfassung der verhaltensbasierten Daten als Stream ergibt sich vorteilhafterweise eine maximal sensible Einteilung der ersten Konfidenzwerte pro Zeiteinheit. Es werden kontinuierlich verhaltensbasierte Daten erfasst, welche kontinuierlich zu ersten Konfidenzwerten verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Konfidenzwerte kann jederzeit ein Klassifikationsergebnis aus den zeitnah generierten Konfidenzwerten generiert werden, ohne dass das mobile, tragbare Kommunikationssystem erst abwarten muss, bis ein vorbestimmtes Messintervall abgelaufen und aktuelle verhaltensbasierte Daten verarbeitet wurden. Ferner werden kontinuierlich neue erste Konfidenzwerte generiert, so dass bei einer Authentifizierungsanfrage aktuelle erste Konfidenzwerte zur Verfügung stehen, sofern sich der Nutzer in der nahen Vergangenheit bewegt hat.

In einer weiteren Ausführungsform umfasst das mobile, tragbare Kommunikationssystem ein Anwendungsklassifikationsmodul. Das Anwendungsklassifikationsmodul ist konfiguriert um Anwendungsdaten eines Nutzers zu klassifizieren und nutzerspezifische Anwendungsmuster in den Anwendungsdaten zu finden.

Die Anwendungsdaten können beispielsweise die folgenden Datentypen umfassen:
- Positionsdaten des mobilen, tragbaren Kommunikationssystems
- Anwendungsnutzungsdaten des Nutzers
- Biometrische Daten des Nutzers
- Verbindungsdaten des mobilen, tragbaren Kommunikationssystems
- Kalender- und Uhrzeitdaten.

Die Positionsdaten des mobilen, tragbaren Kommunikationssystems werden durch ein Verfahren zur Positionsbestimmung durch einen Positionssensor des mobilen, tragbaren Kommunikationssystems erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifizierung des Nutzers gegenüber dem mobilen, tragbaren Kommunikationssystems ergibt sich in vorteilhafter Weise, dass ein regelmäßiger Aufenthaltsort des Nutzers (zum Beispiel zu Hause, bei der Arbeit oder an anderen Orten, die er regelmäßig aufsucht) erfasst wird. Ein unberechtigter Nutzer, insbesondere ein Dieb, der das mobile, tragbare Kommunikationssystem benutzt, wird sich in der Regel nicht an den Orten aufhalten, welche der registrierte Nutzer regelmäßig aufsucht. Dadurch ist das mobile, tragbare Kommunikationssystem in der Lage zu erkennen, ob der Nutzer der registrierte Nutzer ist. Damit können die Positionsdaten zur Verbesserung der verhaltensbasierten Authentifizierung beitragen.

Die Anwendungsnutzungsdaten umfassen ein Anwendungsnutzungsverhalten des Nutzers, wobei das Anwendungsnutzungsverhalten Informationen umfasst, welche beschreiben, wann welche Anwendungen vom Nutzer auf dem mobilen, tragbaren Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen der Anwendungsnutzungsdaten des Nutzers in das verhaltensbasierte Authentifizierungsverfahren steigt die Sicherheit des mobilen, tragbaren Kommunikationssystems, da ein unberechtigter Nutzer, insbesondere ein Dieb, welcher das mobile, tragbare Kommunikationssystem gestohlen hat, auch die Anwendungsnutzungsverhalten des Nutzers imitieren müsste, um Zugriff auf Anwendungen, die einer Authentifizierung bedürfen, bzw. zu dem mobilen, tragbaren Kommunikationssystem zu erlangen.

Die biometrischen Daten können durch einen Sensor zur Erfassung von biometrischen Daten erfasst werden. Dabei können die biometrischen Daten unter anderem ein Maß des Gesichts, Stimmfrequenzen des Nutzers, ein EEG-Signal des Nutzers, eine Fingerform, eine Ohrmuschelform, ein Retina- oder Irismuster, ein Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin sein mobiles, tragbares Kommunikationssystem benutzt und/oder sich authentifizieren möchte. In dem Moment, in dem der Nutzer sein mobiles, tragbares Kommunikationssystem benutzt und/oder sich authentifizieren möchte, kann je nach ausgeführter Anwendung davon ausgegangen werden, dass der Nutzer auf den Bildschirm des Systems schaut. Dies ist beispielsweise bei einer Chat- oder Nachrichtenanwendung der Fall. Da handelsübliche Smartphones und andere Systeme mit Kameras ausgestattet sind, welche auch auf der Seite des Bildschirms auf dem mobilen, tragbaren Kommunikationssystem positioniert sind, ist es möglich, dass eine Hintergrundanwendung des mobilen, tragbaren Kommunikationssystems ein Foto des Nutzers aufnimmt, während er das mobile, tragbare Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das mobile, tragbare Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten ähnlich wie die verhaltensbasierten Daten kontinuierlich erfassbar sind, da der Nutzer die Smart-Watch während des regulären Gebrauchs an seinem Handgelenk trägt.

In einer weiteren Ausführungsform umfasst das mobile, tragbare Kommunikationssystem einen Sensor zur Erfassung eines Fingerabdrucks des Nutzers. In vorteilhaften Ausführungsformen ist der Sensor an Stellen des mobilen, tragbaren Kommunikationssystems positioniert, an denen der Nutzer mit seinen Fingerspitzen das mobile, tragbare Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers gegenüber einem mobilen, tragbaren Kommunikationssystem ergibt sich in vorteilhafter Weise, dass die Daten, welche zur Authentifizierung herangezogen werden, höchst persönlich vom Benutzer abhängig sind. Insbesondere biometrische Daten bieten eine hohe Fälschungssicherheit, wodurch die Sicherheit der Authentifizierung gesteigert wird.

Die Verbindungsdaten des mobilen, tragbaren Kommunikationssystems mit anderen kommunikationsfähigen Geräten wie zum Beispiel Computern, kommunikationsfähigen Haushaltsgeräten oder einzelnen, mobilen, tragbaren Kommunikationsgeräten und -systemen können dazu verwendet werden, ein typisches Verbindungsmuster des Nutzers aufzuzeigen. So können zum Beispiel einzelne Geräte über WLAN, Bluetooth, Radio Frequency Identification (RFID), Near Field Communikation (NFC) oder ein Kabel mit dem mobilen, tragbaren Kommunikationssystem verbunden werden. So kann für den Nutzer ein Verbindungsprofil angelegt werden, welches Informationen über die regelmäßigen Verbindungen des mobilen, tragbaren Kommunikationssystems mit weiteren Geräten enthält.

Beispielsweise kann ein Nutzer das mobile, tragbare Kommunikationssystem mit dem privaten WLAN einer Wohnung oder einem öffentlichen WLAN verbinden. In einer weiteren Ausführungsform verbindet der Nutzer das mobile, tragbare Kommunikationssystem mit Haushaltsgeräten und/oder einem Computer über das Internet oder ein Intranet, wodurch sich ein nutzerspezifisches Verbindungsprofil ergibt. Dieses Nutzungsprofil kann beispielsweise, ohne darauf beschränkt zu sein eine Waschmaschine, einen Trockner, einen Kühlschrank oder ähnliche Haushaltsgeräte, sowie Geräte eines Smart-Home-Systems, wie etwa Beleuchtung, Alarmanlage, Klimaanlage, Heizung, Audioanlage(n), Video- bzw. Fernsehanlage(n), und/oder einen PC umfassen, welche der Nutzer zu Hause über das Internet, ein Intranet oder individuelle Funkverbindungen ansteuert.

In einer weiteren Ausführungsform wird eine Authentifizierungsanfrage durch ein mit dem mobilen, tragbaren Kommunikationssystem über eine Kommunikationsverbindung kommunikative verbundenen Gerät an das Betriebssystem des mobilen, tragbaren Kommunikationssystems und/oder ein für die Authentifizierung konfiguriertes Anwendungsprogramm, welches auf dem mobilen, tragbaren Kommunikationssystem implementiert ist, gesendet, um den Nutzer gegenüber dem Gerät zu authentifizieren, welche mit dem mobilen, tragbaren Kommunikationssystem kommunikativ verbunden sind. Somit dient das mobilen, tragbaren Kommunikationssystem als Vermittlungsinstanz zur Authentifizierung des Nutzers gegenüber dem entsprechenden Gerät. Bei der Kommunikationsverbindung kann es sich beispielsweise um eine kabelbasierte oder kabellose Verbindung über eine Kommunikationsschnittstelle des mobilen, tragbaren Kommunikationssystems handeln. Nach Ausführungsformen ist die Kommunikation zwischen dem mobilen, tragbaren Kommunikationssystem und dem verbundenen Gerät kryptographisch Verschlüsselt, beispielsweise mittels Ende-zu-Ende-Verschlüsselung.

Durch die Verwendung der Verbindungsdaten des Nutzers zur verhaltensbasierten Authentifizierung des Nutzers gegenüber dem mobilen, tragbaren Kommunikationssystem ergibt sich in vorteilhafter Weise, dass ein unberechtigter Nutzer die Geräte kennen und ggf. Zugriff auf die Geräte besitzen muss, mit denen der registrierte Nutzer normalerweise das mobile, tragbare Kommunikationsgerät verbindet.

Durch die Verwendung der Verbindungsdaten zur verhaltensbasierten Authentifizierung eines Nutzers gegenüber dem mobilen, tragbaren Kommunikationssystem ergibt sich in vorteilhafter Weise, dass der aktuelle Nutzer, welcher zum Beispiel eine Smartwatch trägt, sich über das Tragen der Smartwatch gegenüber dem mobilen, tragbaren Kommunikationssystem authentifizieren kann. Somit fungiert die Smartwatch als eine Art Schlüssel, welche den Zugriff auf das mobile, tragbare Kommunikationssystem, eine auf dem Kommunikationssystem ausgeführte Anwendung, einem mit dem Kommunikationssystem verbundenen Gerät oder einer auf dem verbundenen Gerät ausgeführten Anwendung freigibt. Ein Dieb, welcher das mobile, tragbare Kommunikationssystem gestohlen hat, müsste also auch die Smartwatch in seinen Besitz bringen, um Zugriff zu erlangen.

Kalender- und/oder Uhrzeitdaten können durch eine im mobilen, tragbaren Kommunikationssystem implementierte Uhr oder eine externe Uhr, deren Signal durch einen Sensor, insbesondere ein Funksignal durch einen Funksensor, des mobilen, tragbaren Kommunikationssystems empfangen wird, erfasst werden.

In einer weiteren Ausführungsform werden die Verbindungsdaten des mobilen, tragbaren Kommunikationssystems mit anderen Geräten und/oder die Positionsdaten des mobilen, tragbaren Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers gegenüber dem mobilen, tragbaren Kommunikationssystem ergibt sich in vorteilhafter Weise, dass insbesondere durch die Kommunikation mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein mobiles, tragbares Kommunikationssystem liest. Die Verwendung der Kalender- und/oder Uhrzeitdaten haben somit eine erhöhte Sicherheit des mobilen, tragbaren Kommunikationssystems zur Folge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist.

In einer weiteren Ausführungsform wird der Abstand zwischen zwei oder mehreren Kommunikationsgeräten eines mobilen, tragbaren Kommunikationssystems aufgrund der Signalstärke des Signals der Drahtlosverbindung zwischen den Geräten ermittelt. Ein solches Drahtlosverbindungssignal kann beispielsweise ein Bluetooth-Signal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers gegenüber einem mobilen, tragbaren Kommunikationssystem verwendet werden.

Das Erfassen des Abstandes zweier Geräte eines mobilen, tragbaren Kommunikationssystems als Teil der Anwendungsdaten und das Verwenden des Abstandes zur verhaltensbasierten Authentifizierung des Nutzers gegenüber dem mobilen, tragbaren Kommunikationssystem ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das mobilen, tragbaren Kommunikationssystem zu erlangen.

Nach Ausführungsformen wird der Abstand dazu verwendet, um ein grobmotorische Bewegungsmuster des Nutzers zu erkennen.

Um die Anwendungsdaten zur verhaltensbasierten Authentifizierung des Nutzers gegenüber einem mobilen, tragbaren Kommunikationssystem zu verwenden, werden folgende Schritte ausgeführt:
- Erfassen der Anwendungsdaten,
- Eingabe der Anwendungsdaten in das Anwendungsklassifikationsmodul,
- Generieren mindestens eines zweiten Konfidenzwertes durch das Anwendungsklassifikationsmodul,
- Speichern des mindestens einen zweiten Konfidenzwertes in dem Speicher des mobilen, tragbaren Kommunikationssystems und
- Trainieren des Anwendungsklassifikationsmoduls mit den Anwendungsdaten des Nutzers, um das Anwendungsklassifikationsmodul auf ein nutzerspezifisches Anwendungsverhaltensmuster zu trainieren unter der Voraussetzung, dass nach dem Klassifikationsergebnis der Nutzer der im System registrierte Nutzer ist.

Beim Generieren des Klassifikationsergebnisses wird nicht nur der mindestens eine erste Konfidenzwert, welcher auf den verhaltensbasierten Daten des Sensors zur Erfassung grobmotorischer Bewegung beruht, verwendet, sondern auch der mindestens eine zweite Konfidenzwert, welcher sich aus den Anwendungsdaten des Nutzers ergibt.

In einer weiteren Ausführungsform umfasst das mobile, tragbare Kommunikationssystem ein Feinmotorikklassifikationsmodul, welches dazu ausgebildet ist eine feinmotorische Bewegung des Nutzers zu erfassen und einen Sensor zur Erfassung einer feinmotorischen Bewegung in Form von feinmotorischen Bewegungsdaten.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand und/oder Fingermuskulatur, aber auch den Muskeln des Mundes, der Augen und des Gesichtes. Die feinmotorische Bewegung, welche durch einen feinmotorischen Sensor des mobilen, tragbaren Kommunikationssystems erfasst wird, kann etwa eine bestimmte Bewegung der Finger umfassen.

In Ausführungsformen werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das mobile, tragbare Kommunikationssystem tätigt. Eine solche Eingabe kann beispielsweise, ohne darauf beschränkt zu sein, das Tippen von Wörtern bzw. Wischen von Wörtern, d.h. einem zu Tippen analogen Eingabeverfahren, bei welchem der oder die Finger bei Auswahl von Buchstaben den Kontakt zur Bildschirmoberfläche jedoch beibehält. auf einer virtuellen Tastatur, das Nachfahren von auf dem Bildschirm gezeigten geometrischen Figuren oder eine andere Bewegung mit der der Nutzer eine Eingabe tätigt sein. Ferner können feinmotorischen Bewegungen Änderungen der Ausrichtung, wie etwa des Neigungswinkels, des mobilen, tragbaren Kommunikationssystems während der Nutzung umfassen.

Ein Sensor zur Erfassung einer feinmotorischen Bewegung kann als beispielsweise als optisches System oder als Touchpad bzw. Touchscreen, insbesondere, jedoch ohne darauf beschränkt zu sein, ein resistiver Touchscreen, ein oberflächenkapazitiver Touchscreen, ein projiziert-kapazitiver Touchscreen oder ein induktiver Touchscreen ausgebildet sein.

Um die feinmotorischen Bewegungsdaten zur feinmotorischen Authentifizierung des Nutzers gegenüber einem mobilen, tragbaren Kommunikationssystem zu verwenden, werden die folgenden Schritte ausgeführt:
- Erfassen der feinmotorischen Bewegungsdaten,
- Eingabe der feinmotorischen Bewegungsdaten in das Feinmotorikklassifikationsmodul,
- Generieren mindestens eines dritten Konfidenzwertes durch das Feinmotorikklassifikationsmodul,
- Speichern des mindestens einen dritten Konfidenzwertes in dem Speicher des mobilen, tragbaren Kommunikationssystems und
- Trainieren des Feinmotorikklassifikationsmoduls mit den feinmotorischen Bewegungsdaten des aktuellen Nutzers, um das Feinmotorikklassifikationsmodul auf ein nutzerspezifisches feinmotorisches Bewegungsmuster zu trainieren unter der Voraussetzung, dass nach dem Klassifikationsergebnis der aktuelle Nutzer der im mobilen, tragbaren Kommunikationssystem registrierte Nutzer ist.

Beim Prüfen des Klassifikationsergebnisses gegen das Prüfungskriterium wird nicht nur der mindestens eine erste Konfidenzwert, welcher auf den verhaltensbasierten Daten des Sensors zur Erfassung der grobmotorischen Bewegung beruht, verwendet, sondern auch der mindestens eine dritte Konfidenzwert, welcher sich aus den feinmotorischen Bewegungsdaten des Nutzers ergibt.

Durch das Verwenden einer feinmotorischen Bewegung eines Nutzers erhöht sich die Sicherheit der verhaltensbasierten Authentifizierung, da weitere Parameter nötig sind, um den Nutzer gegenüber dem mobilen, tragbaren Kommunikationssystem zu authentifizieren.

In einer weiteren Ausführungsform wird nach einem fehlgeschlagenen Authentifizierungsversuch der Nutzer dazu aufgefordert eine Eingabe in das mobile, tragbare Kommunikationssystem zu tätigen, um eine feinmotorische Bewegung des Nutzers erfassen zu können. Die Eingabe kann dabei beispielsweise das Nachmalen einer bestimmten Figur auf dem Bildschirm oder die Eingabe eines vordefinierten Wortes bzw. die Eingabe mehrerer Wörter umfassen. Die Wörter und/oder Muster können durch das System oder den Nutzer vordefiniert oder zufällig ausgewählt sein. Beispielsweise werden die entsprechenden Wörter und/oder Muster auf dem Bildschirm angezeigt.

Durch das Authentifizieren mittels einer feinmotorischen Bewegung im Falle einer fehlgeschlagenen Authentifizierung, ergibt sich vorteilhafterweise für den Nutzer die Möglichkeit sich trotz einer zunächst fehlgeschlagenen verhaltensbasierten Authentifizierung dennoch mittels verhaltensbasierter Daten zu authentifizieren. Nach Ausführungsformen erfolgt die verhaltensunabhängige Authentifizierung erst in dem Fall, dass auch die verhaltensbasierte Authentifizierung mittels feinmotorischer Bewegungen fehlschlägt.

Aufgrund der Ähnlichkeit der Verarbeitungsstruktur der verschiedenen Daten gelten die folgenden Ausführungen für die grobmotorischen Bewegungsdaten, die feinmotorischen Bewegungsdaten und die Anwendungsdaten, das Grobmotorik-, Anwendungs- und Feinmotorikklassifikationsmodul sowie den mindestens einen ersten, zweiten und dritten Konfidenzwert ebenso wie für das erste, zweite und dritte Klassifikationsergebnis gleichermaßen. Ferner bezeichnen "verhaltensbasierte Daten" im grobmotorische Bewegungsdaten, feinmotorische Bewegungsdaten und/oder Anwendungsdaten. Sind nur grobmotorische Bewegungsdaten des Sensors zur Erfassung einer grobmotorischen Bewegung, feinmotorische Bewegungsdaten oder Anwendungsdaten gemeint, so ist dies explizit angegeben.

Ferner sind gemäß einer weiteren Ausführungsform das Grobmotorikklassifikationsmodul und/oder das Anwendungsklassifikationsmodul und/oder das Feinmotorikklassifikationsmodul als ein Klassifikationsmodul ausgebildet, welches in der Lage ist verhaltensbasierte Daten unterschiedlicher Art zu verarbeiten. Beispielsweise sind gemäß einer weiteren Ausführungsform das Grobmotorikklassifikationsmodul und/oder das Anwendungsklassifikationsmodul und/oder das Feinmotorikklassifikationsmodul von ein und demselben oder verschiedenen Anwendungsprogrammen umfasst, welche zu einer Ausführung einer verhaltensbasierten Authentifizierung konfiguriert sind. Nach Ausführungsformen wird ein Gesamtklassifikationsergebnis generiert, welches das erste, zweite und/oder dritte Klassifikationsergebnis umfasst.

Das bzw. die Klassifikationsmodule, d.h. das Grobmotorikklassifikationsmodul und/oder das Anwendungsklassifikationsmodul und/oder das Feinmotorikklassifikationsmodul, generieren nach Ausführungsformen ein gemeinsames Klassifikationsergebnis unter Verwendung von Konfidenzwerten, welche von dem oder den Klassifikationsmodulen jeweils für klassifikationsmodulspezifische Daten ermittelt wurden. In diesem Fall handelt es sich bei dem ersten, zweiten und/oder dritten Klassifikationsergebnis beispielsweise um ein und dasselbe Klassifikationsergebnis, zu welchem das Grobmotorikklassifikationsmodul und/oder das Anwendungsklassifikationsmodul und/oder das Feinmotorikklassifikationsmodul als einem Gesamtklassifikationsergebnis beitragen.

In einer weiteren Ausführungsform wird bei nichterfolgreicher Prüfung des Klassifikationsergebnisses gegen das Prüfungskriterium ein Signal gesendet, welches die Information der fehlgeschlagenen verhaltensbasierten Authentifizierung umfasst. Ein solches Signal kann gemäß einer Ausführungsform auf die Information der fehlgeschlagenen verhaltensbasierten Authentifizierung beschränkt sein. Gemäß weiterer Ausführungsformen kann das Signal den Grund des Fehlschlags der verhaltensbasierten Authentifizierung spezifizieren. Ein solcher Grund kann nach weiteren Ausführungsformen beispielsweise das Alter des aktuellen Klassifikationsergebnisses, das Klassifikationsergebnis selbst oder einen anders gearteten Grund des Fehlschlagens umfassen. In einer Ausführungsform kann ein Prüfungskriterium umfassen, dass das Klassifikationsergebnis nicht älter als einige Minuten, einige Stunden, ein Tag oder eine Woche ist. In einer weiteren Ausführungsform kann das Prüfungskriterium umfassen, dass das Klassifikationsergebnis einen bestimmten Schwellenwert erreichen muss.

Durch das Senden eines Signals bei einer fehlgeschlagenen verhaltensbasierten Authentifizierung kann sich vorteilhafterweise ergeben, dass der Nutzer darüber informiert wird, dass seine verhaltensbasierte Authentifizierung fehlgeschlagen ist und sich gezielt so verhalten kann, dass er Zugriff auf das System erlangen kann. Beispielsweise zeigt das Signal an, dass die Gangart des Nutzers nicht erkannt wurde. Der Nutzer bemerkt das Signal und beginnt auf und ab zu gehen, bis das Prüfungskriterium erfüllt ist. Ein solches Signal kann dem Nutzer beispielsweise mittels einer Anzeige des mobilen, tragbaren Kommunikationssystems angezeigt werden, akustisch über einen Lautsprecher des mobilen, tragbaren Kommunikationssystems mitgeteilt werden oder mittels eines Vibrationsmusters, erzeugt durch einen Vibrationsmechanismus des mobilen, tragbaren Kommunikationssystems, signalisiert werden.

Nach Ausführungsformen umfasst das Signal neben der Information der fehlgeschlagenen verhaltensbasierten Authentifizierung eine Aufforderung zum Ausführen einer verhaltensunabhängigen Authentifizierung, d.h. zum Nachweis zumindest eines vordefinierten verhaltensunabhängigen Authentifizierungsmerkmals. Nach einer alternativen Ausführungsform wird ein zusätzliches Signal mit der Aufforderung zum Ausführen einer verhaltensunabhängigen Authentifizierung gesendet.

Nach Ausführungsformen wird bei nichterfolgreicher verhaltensunabhängiger Authentifizierung ein Signal gesendet, welches die Information der fehlgeschlagenen verhaltensunabhängigen Authentifizierung umfasst. Ein solches Signal kann gemäß einer Ausführungsform auf die Information der fehlgeschlagenen verhaltensunabhängigen Authentifizierung beschränkt sein. Gemäß weiterer Ausführungsformen kann das Signal den Grund des Fehlschlags der verhaltensunabhängigen Authentifizierung spezifizieren. Durch das Senden eines Signals bei einer fehlgeschlagenen verhaltensbasierten Authentifizierung kann sich vorteilhafterweise ergeben, dass der Nutzer darüber informiert wird, dass seine verhaltensunabhängige Authentifizierung fehlgeschlagen ist.

In einer weiteren Ausführungsform ist in dem Speicher des mobilen, tragbaren Kommunikationssystems mindestens ein Muster in Form einer Musterfunktion und mindestens ein Vergleichsdatensatz gespeichert, wobei der Vergleichsdatensatz Werte für mindestens einen Vergleichsparameter beinhaltet, wobei durch das jeweilige Klassifikationsmodul die folgenden Schritte ausgeführt werden:
a) Vergleich der erfassten verhaltensbasierten Daten mit der mindestens einen Musterfunktion.
b) Zuordnen der verhaltensbasierten Daten zu je einem der Musterfunktion entsprechenden Muster und Erhalten von mindestens einem der dem Muster entsprechenden Klassifikationsparameter durch das Klassifikationsmodul, falls die verhaltensbasierten Daten dem mindestens einen Muster zugeordnet werden können.
c) Generieren eines Konfidenzwertes für jeden Klassifikationsparameter durch einen Vergleich des mindestens einen Klassifikationsparameters mit dem jeweiligen Vergleichsparameter des Vergleichsdatensatzes.

In einer weiteren Ausführungsform werden die Vergleichsparameter neu berechnet und in dem Speicher des mobilen, tragbaren Kommunikationssystems gespeichert, wenn sich der Vergleichsdatensatz ändert.

Durch das Generieren des Klassifikationsergebnisses aus dem mindestens einen Konfidenzwert des mindestens einen Klassifikationsparameters ergibt sich vorteilhafterweise ein Verfahren, welches durch fest definierte Schritte für den Nutzer wiederholbar, jedoch für einen unberechtigten Nutzer sehr schwer zu umgehen ist. Ein Angreifer, welcher versucht mittels eines elektronischen Angriffs auf das mobile, tragbare Kommunikationssystem bzw. auf das Gerät oder die Anwendung zuzugreifen, zu dessen Schutz das Kommunikationssystem die Authentifizierung ausführt, indem der Angreifer versucht die verhaltensbasierten Daten des mindestens einen Sensors, den mindestens einen Klassifikationsparameter oder den mindestens einen Konfidenzwert zu erraten, um dem System ein gefälschtes Klassifikationsergebnis vorzutäuschen, müsste die mindestens eine Musterfunktion kennen oder wissen, welche Klassifikationsparameter zu Konfidenzwerten verarbeitet werden und welche Werte diese aufweisen müssen, damit ein Zugriff auf das Kommunikationssystem, das Gerät und/oder die Anwendung gewährt wird.

In einer Ausführungsform werden die verhaltensbasierten Daten im Speicher des mobilen, tragbaren Kommunikationssystems gespeichert, wenn das aus den verhaltensbasierten Daten resultierende Klassifikationsergebnis erfolgreich zur Authentifizierung des Nutzers beigetragen hat. Das Speichern der verhaltensbasierten Daten erfolgt, indem die verhaltensbasierten Daten den entsprechenden Vergleichsdatensätzen hinzugefügt werden. Die Vergleichsparameter werden erneut aus dem nun modifizierten Vergleichsdatensatz errechnet, um eine nächste Authentifizierung des Nutzers mit aktuellen Vergleichsparametern durchführen zu können.

Durch das Speichern der verhaltensbasierten Daten im Speicher des mobilen, tragbaren Kommunikationssystems und das Hinzufügen der verhaltensbasierten Daten zu dem entsprechenden Vergleichsdatensatz im Falle einer erfolgreichen Authentifizierung des Nutzers ergibt sich vorteilhafterweise ein rückgekoppeltes Trainieren der Klassifikationsmodule. Die Vergleichsdatensätze und somit die Vergleichsparameter passen sich dem Verhalten des Nutzers an, wodurch das Verfahren gegenüber geringfügigen Verhaltensänderungen resistent wird bzw. sich diesen anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Bei solchen und ähnlichen Verhaltensänderungen kann sich der Nutzer aufgrund des Speicherns der verhaltensbasierten Daten in dem Speicher des mobilen, tragbaren Kommunikationssystems und des Hinzufügens der Mess- Daten zu dem entsprechenden Vergleichsdatensatz auch weiterhin erfolgreich authentifizieren.

In einer weiteren Ausführungsform werden die verhaltensbasierten Daten, welche Teil des jeweiligen Vergleichsdatensatzes sind aus dem Speicher des mobilen, tragbaren Kommunikationssystems gelöscht, wenn die Daten älter als eine festgelegte Zeit sind. Die festgelegte Zeit kann beispielsweise Tage, Wochen, Monate oder Jahre betragen. Wird durch das Löschen der verhaltensbasierten Daten der Vergleichsdatensatz vollständig gelöscht, so wird gemäß einer weiteren Ausführungsform ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, d.h. ein neuer Vergleichsdatensatz generiert wurde. Vergleichsdaten für einen solchen neuen Vergleichsdatensatz können beispielsweise erfasst werden, indem sich der Nutzer gegenüber dem mobilen, tragbaren Kommunikationssystem verhaltensunabhängig authentifiziert, beispielsweise über einen Nachweis eines für den registrierten Nutzer charakteristischen Wissens, wie etwa eine alphanumerische Zeichenfolge, eines für den registrierten Nutzer charakteristischen Besitzes, etwa eines ID-Tokens, oder einer für den registrierten Nutzer charakteristischen biologischen Eigenschaft, etwa ein biometrisches Merkmal, und im Voraus oder im Nachhinein so verhält, dass neue verhaltensbasierten Daten erfasst und in dem Speicher des mobilen, tragbaren Kommunikationssystems gespeichert werden, womit die erfassten Daten einen neuen Vergleichsdatensatz bilden.

Durch das Löschen der verhaltensbasierten Daten bei Erreichen eines festgelegten Alters der Daten ergibt sich in vorteilhafter Weise, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete verhaltensbasierte Daten, welche nicht mehr das aktuelle Verhalten des Nutzers korrekt wiederzugeben vermögen, vorsorglich gelöscht werden. Das Löschen von verhaltensbasierten Daten eines bestimmten Alters bewirkt somit, dass das Verhalten des Nutzers in der Vergangenheit, welches nicht notwendiger Weise mit dem Verhalten des Nutzers der Gegenwart übereinstimmen muss, keinen Einfluss auf die verhaltensbasierte Authentifizierung des Nutzers gegenüber dem System nimmt. Das Alter von verhaltensbasierten Daten bemisst sich beispielsweise ab dem Zeitpunkt der Erfassung und/oder Speicherung der verhaltensbasierten Daten.

In einer weiteren Ausführungsform werden die Konfidenzwerte der Klassifikationsparameter in dem Speicher des mobilen, tragbaren Kommunikationssystems gespeichert. Dabei bildet die Summe der Konfidenzwerte der Klassifikationsparameter das Klassifikationsergebnis.

Durch das Speichern der Konfidenzwerte als Klassifikationsergebnis ergibt sich in vorteilhafterweise, dass die Konfidenzwerte einzeln zur Prüfung herangezogen werden können. In einer weiteren Ausführungsform werden für Authentifizierungsanfragen mit einem niedrigen Prüfungskriterium weniger Konfidenzwerte aus dem Speicher ausgelesen und geprüft, als bei einer Authentifizierungsanfrage mit einem höheren Prüfungskriterium. Ein niedriges Prüfungskriterium kann beispielsweise dann vorliegen, wenn der Nutzer den Radiosender wechseln möchte. Ein hohes Prüfungskriterium kann beispielsweise vorliegen, wenn der Nutzer eine Haustür öffnen möchte. In einer weiteren Ausführungsform umfasst das Prüfungskriterium für jeden Konfidenzwert einen anderen Schwellenwert, so dass die Qualität der einzelnen Klassifikationsparameter, aus denen die Konfidenzwerte berechnet werden, bei der Prüfung des Klassifikationsergebnisses gegen das Prüfungskriterium berücksichtigt wird.

In einer weiteren Ausführungsform umfasst das Prüfungskriterium, dass der mindestens eine Konfidenzwert einen bestimmten Schwellenwert erreichen muss, um eine erfolgreiche Authentifizierung des Nutzers zu erreichen.

Dadurch, dass das Prüfungskriterium darin besteht, dass ein Konfidenzwert eine Mindesthöhe erreichen muss, ergibt sich in vorteilhafter Weise, dass die Prüfung des Klassifikationsergebnisses gegen das Prüfungsergebnis durch den Vergleich von nur einem Wert durchgeführt werden kann. Für diesen Schritt sind somit sehr wenige Operationen notwendig, wodurch das mobile, tragbare Kommunikationssystem weniger Rechenoperationen ausführen muss. Somit ergibt sich für das mobile, tragbare Kommunikationssystem ein verringerter Energieverbrauch. Insbesondere für mobile, tragbare Kommunikationssysteme, welche durch eine Batterie betrieben werden, ist eine solche Ausführungsform vorteilhaft.

In einer weiteren Ausführungsform umfasst das Prüfungskriterium, dass mehrere gespeicherte Konfidenzwerte jeweils einen individuellen Schwellenwert erreichen müssen.

Dadurch, dass das Prüfungskriterium jeweils einen individuellen Schwellenwert für mehrere Konfidenzwerte umfasst, kann das Prüfungskriterium individuell an die jeweiligen Genauigkeiten der einzelnen Konfidenzwerte angepasst werden. Dadurch ergibt sich eine erhöhte Genauigkeit der gesamten verhaltensbasierten Authentifizierung.

Nach einer weiteren Ausführungsform wird der mindestens eine zweite Konfidenzwert, welcher auf den Anwendungsdaten beruht, nur dann bei der Generierung des Klassifikationsergebnisses verwendet, wenn in einem vorangegangenen Schritt das Grobmotorikklassifikationsmodul in den erfassten verhaltensbasierten Daten eine grobmotorische Bewegung des Nutzers erkannt hat. So werden beispielsweise Anwendungsnutzungsdaten eines Radios nur dann erfasst, wenn der Nutzer gerade am Gehen ist. In einer weiteren Ausführungsform kann ein Herausziehen des mobilen, tragbaren Kommunikationssystems aus der Tasche erkannt werden, woraufhin beispielsweise ein Ausführen einer Nachrichtenanwendung als ein Teil des Anwendungsnutzungsprofils herangezogen wird.

Durch das Verwenden des mindestens einen zweiten Konfidenzwertes, welcher auf den Anwendungsdaten beruht, in Kombination mit der erkannten grobmotorischen Bewegung des Nutzers ergibt sich in vorteilhafter Weise, dass die Klassifikation des ersten Klassifikationsmoduls, welches die grobmotorischen Bewegungsdaten heranzieht, wesentlich genauer werden kann, da der mindestens eine Konfidenzwert auf Basis der Anwendungsdaten zur Verfeinerung des Klassifikationsergebnisses aufgrund des mindestens einen Konfidenzwerts der grobmotorischen Bewegungsdaten dienen kann.

In einer weiteren Ausführungsform werden die Konfidenzwerte, welche letztendlich aus den grob- und/oder feinmotorischen Bewegungsdaten und/oder den Anwendungsdaten resultieren, zu einem resultierenden Konfidenzwert zusammengefasst. Das Zusammenfassen kann beispielsweise, aber nicht zwangsweise, die Bildung eines Mittelwertes, eines Medians oder eines Modalwerts umfassen. Die Bildung des resultierenden Konfidenzwerts ermöglicht die Angabe der Wahrscheinlichkeit, mit der der aktuelle Nutzer der im mobilen, tragbaren Kommunikationssystem registrierte Nutzer ist.

Durch die Bildung eines resultierenden Konfidenzwertes und die Verwendung des resultierenden Konfidenzwertes zur verhaltensbasierten Authentifizierung des Nutzers gegenüber dem mobilen, tragbaren Kommunikationssystem kann sich in vorteilhafter Weise ergeben, dass nur ein einziger Zahlenwert nötig ist, um den Nutzer zu authentifizieren. Es werden keine Details bezüglich der Anwendungsnutzung oder der Person des Nutzers an ein verbundenes gerät oder eine ausgeführte Anwendung, welche einer Authentifizierung des Nutzers bedürfen, gesendet, um den ihn zu authentifizieren. Dies kann beispielsweise die Datensicherheit bzw. die Anonymität des Nutzers sicherstellen, da aus dem resultierenden Konfidenzwert nicht mehr nachvollziehbar ist, aus welchen Konfidenzwerten oder Klassifikationsparametern sich dieser im Detail zusammensetzt und welche Werte diese jeweils aufwiesen.

In einer weiteren Ausführungsform sind die einzelnen Konfidenzwerte der Klassifikationsparameter bei der Auswertung mit jeweils einem Gewichtungsfaktor gewichtet. Die Gewichtungsfaktoren sind dabei dem jeweiligen Konfidenzwert zugeordnet.

Durch das Verwenden von Gewichtungsfaktoren für die jeweiligen Konfidenzwerte bei der Errechnung des resultierenden Konfidenzwerts kann sich in vorteilhafter Weise eine Erhöhung der Genauigkeit des resultierenden Konfidenzwerts bei einer Prüfung gegen ein Prüfungskriterium ergeben. Die einzelnen Konfidenzwerte, die aus unterschiedlichen Klassifikationsparametern resultieren, können je nach Wichtigkeit und/oder Genauigkeit ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers gegenüber dem mobilen, tragbaren Kommunikationssystem. Ein erster Nutzer eines ersten mobilen, tragbaren Kommunikationssystems könnte beispielsweise regelmäßig eine Radioanwendung seines mobilen, tragbaren Kommunikationssystems nutzen, während ein zweiter Nutzer eines zweiten mobilen, tragbaren Kommunikationssystems niemals eine Radioanwendung nutzt. Durch die Möglichkeit des Gewichtens der einzelnen Konfidenzwerte kann dem Konfidenzwert für die Nutzung einer Radioanwendung für den ersten Nutzer ein höherer Gewichtungsfaktor zugewiesen werden, als dem zweiten Nutzer.

In einer weiteren Ausführungsform sind die Gewichtungsfaktoren der Konfidenzwerte durch das Prüfungskriterium vorgegeben.

Durch das Vorgeben der Gewichtungsfaktoren durch das Prüfungskriterium ergibt sich in vorteilhafter Weise, dass unterschiedliche Konfidenzwerte individuell in Abhängigkeit davon gewichtet werden können, wie hoch der Sicherheitsgrad des Prüfungskriteriums ist. So können beispielsweise bei Prüfungskriterien, die einer sehr hohen Authentifizierungswahrscheinlichkeit bedürfen, alle Parameter miteinbezogen werden, wodurch alle Konfidenzwerte zu einem resultierenden Konfidenzwert ausgelesen werden. Dem gegenüber werden bei einem Prüfungskriterium, welches einer niedrigen Sicherheitsstufe bedarf, nur einige oder ein einzelner Konfidenzwert, bzw. Klassifikationsparameter zur Auswertung herangezogen.

In einer weiteren Ausführungsform sind die einzelnen Gewichtungsfaktoren der jeweiligen Konfidenzwerte fest vorgegeben. Fest vorgegeben meint in diesem Zusammenhang, dass die Gewichtungsfaktoren von vornherein bei einer Erstinbetriebnahme des mobilen, tragbaren Kommunikationssystems festgelegt werden und keine Änderungen der Gewichtungsfaktoren während des bestimmungsmäßigen Betriebes des mobilen, tragbaren Kommunikationssystems vorgesehen sind.

Durch das Vorgeben der Gewichtungsfaktoren für die Konfidenzwerte ergibt sich in vorteilhafter Weise ein reduzierter Rechenaufwand, welcher insbesondere für mobile, tragbare Kommunikationssysteme einen niedrigen Batterieverbrauch zur Folge hat. Das mobile, tragbare Kommunikationssystem muss nicht überprüfen, welche Gewichtungsfaktoren für welchen Konfidenzwert festzulegen sind, sondern letztendlich nur in seinem Speicher die entsprechenden Konfidenzwerte auslesen, die bereits mit den Gewichtungsfaktoren verrechnet sind.

In einer weiteren Ausführungsform legt der Nutzer in einem Initiierungsprozess die Gewichtungsfaktoren der einzelnen Konfidenzwerte selbst fest. Die festgelegten Gewichtungsfaktoren werden dann in einer Konfigurationsdatei in dem Speicher des mobilen, tragbaren Kommunikationssystems gespeichert.

Durch das Festlegen der Gewichtungsfaktoren durch den registrierten Nutzer selbst ergibt sich in vorteilhafter Weise, dass der registrierte Nutzer selbst bestimmen kann, inwieweit seine Anwendungen bzw. Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden der Radioanwendung nicht oder nur sehr schwach in die Generierung des Klassifikationsergebnisses miteingehen soll, da er die Radioanwendung üblicherweise nur unregelmäßig nutzt. Der gleiche Nutzer könnte hingegen die Konfidenzwerte der Positionsbestimmung stärker in die Generierung des Klassifikationsergebnisses miteinfließen lassen, da er einen sehr strukturierten Tagesablauf hat und sich mit hoher Regelmäßigkeit an bestimmten Orten aufhält.

In einer weiteren Ausführungsform wird das Prüfungskriterium durch die ausgeführte Anwendung, welche die Authentifizierung des Nutzers anfragt, festgelegt.

Ein Festlegen des Prüfungskriteriums durch die ausgeführte Anwendung ergibt in vorteilhafter Weise, dass die Sicherheit der Authentifizierung mittels des Prüfungskriteriums durch das mobile, tragbare Kommunikationssystem, ein verbundenes Gerät und/oder eine ausgeführte Anwendung bestimmt werden kann. So können beispielsweise verbundene Geräte oder Anwendungen, die in sensible Bereiche oder Informationen offenbaren, beispielsweise eine Wohnungstür, die die private Wohnung des Nutzers schützt, ein wesentlich höheres Sicherheitsniveau bei der Authentifizierung des Nutzers erfordern, als eine Musikanlage.

In einer weiteren Ausführungsform der Erfindung ist das mobile, tragbare Kommunikationssystem mit einem Netzwerk, wie zum Beispiel dem Internet oder einem lokalen Netzwerk (LAN), einem privaten Netzwerk, insbesondere einem Intranet, oder einem virtuellen privaten Netzwerk (Virtual Private Network - VPN) verbunden. Innerhalb des Netzwerks kann das mobile, tragbare Kommunikationssystem über eine entsprechende Schnittstelle, die üblicherweise als Browser oder Launcher ausgebildet ist, mit einer Online-Anwendung kommunizieren, wobei die Online-Anwendung auf einem Gerät innerhalb des Netzwerkes aber außerhalb des mobilen, tragbaren Kommunikationssystems ausgeführt wird. Die Online-Anwendung ist in der Lage das mobile, tragbare Kommunikationssystem dazu aufzufordern, sich gegenüber der Anwendung zu authentifizieren woraufhin das mobile, tragbare Kommunikationssystem den resultierenden Konfidenzwert an die Online-Anwendung sendet.

Durch das Senden des resultierenden Konfidenzwerts an die Online-Anwendung ergibt sich in vorteilhafter Weise, dass das mobile, tragbare Kommunikationssystem in der Lage ist, den Nutzer gegenüber Anwendungen zu authentifizieren, die nicht auf dem mobilen, tragbaren Kommunikationssystem installiert sind. Das Verfahren benötigt somit keine auf dem mobilen, tragbaren Kommunikationssystem installierte Anwendung.

In einer weiteren Ausführungsform sind auf dem mobilen, tragbaren Kommunikationssystem mehrere Nutzer registriert und das Klassifikationsergebnis wird für jeden registrierten Nutzer generiert. Ein Nutzererkennungsmodul entscheidet dann, welcher Nutzer gerade aktiv ist, wobei das Nutzererkennungsmodul ebenfalls vom Prozessor des mobilen, tragbaren Kommunikationssystems ausgeführt wird.

Nach umfasst die verhaltensbasierte Authentifizierung ferner:
- Wiederholtes Ausführen der Schritte:
   - Generieren mindestens eines zweiten Konfidenzwertes durch das Klassifikationsmodul),
   - Speichern des mindestens einen zweiten Konfidenzwertes in dem Speicher des Kommunikationssystems,
- auf eine Authentifizierungsanfrage hin, Zugreifen auf den Speicher des Kommunikationssystems, um mindestens einen der gespeicherten zweiten Konfidenzwerte aus dem Speicher auszulesen,
- Auswerten des mindestens einen zweiten Konfidenzwertes, um zu überprüfen, ob ein Nutzerwechsel stattgefunden hat,
- Verwerfen der bisherigen Konfidenzwerte, falls ein Nutzerwechsel stattgefunden hat.

In einer weiteren Ausführungsform wird die Identifikation des Nutzers durch das Nutzererkennungsmodul mittels eines Entscheidungsbaums getroffen.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, wobei die Mehrzahl von Mitarbeitern, welche das jeweilige mobile, tragbare Kommunikationssystem abwechselnd benutzen, das Verfahren zur verhaltensbasierten Authentifizierung anwenden können.

In einer weiteren Ausführungsform ist das Nutzererkennungsmodul so konfiguriert, dass es einen Wechsel des Nutzers anhand von grob- und/oder feinmotorischen Bewegungsdaten erkennt. Das Nutzererkennungsmodul generiert ein zweites Klassifikationsergebnis, welches angibt, welcher der registrierten Nutzer gerade der aktuelle Nutzer ist. Das zweite Klassifikationsergebnis wird dann gebildet, wenn das Nutzererkennungsmodul eine Bewegung erkennt, die typisch für einen Nutzerwechsel eines mobilen, tragbaren Kommunikationssystems ist. Eine typische Bewegung kann dabei das Ab- und wieder Anlegen einer Smartwatch, das Übergeben eines Mobiltelefons oder eine vergleichbare Bewegung umfassen.

Das Nutzererkennungsmodul ist konfiguriert einen Nutzerwechsel anhand einer grob- und/oder feinmotorischen Bewegung zu erkennen. Dazu ist das Nutzererkennungsmodul beispielsweise auf ein Erkennen einer grob- und/oder feinmotorischen Bewegung des Ab- und/oder Anlegens des mobilen, tragbaren Kommunikationssystems konfiguriert. Ferner ist das Nutzererkennungsmodul auf ein Erkennen von nutzerspezifischen Bewegungsmustern in den verhaltensbasierten Daten trainiert, wobei das Nutzererkennungsmodul wiederholt die folgenden Schritte ausführt:
- Eingabe der verhaltensbasierten Daten in das Nutzererkennungsmodul,
- Generieren eines vierten Konfidenzwertes durch das Nutzererkennungsmodul, welches angibt, ob ein Nutzerwechsel stattfindet oder das mobile, tragbare Kommunikationssystem ab- oder angelegt wird,
- Speichern des vierten Konfidenzwertes in dem Speicher des mobilen, tragbaren Kommunikationssystems.

Anschließend greift das Nutzererkennungsmodul auf den Speicher des mobilen, tragbaren Kommunikationssystems zu, um mindestens einen der gespeicherten vierten Konfidenzwerte aus dem Speicher auszulesen. Der mindestens eine vierte Konfidenzwert wird ausgewertet, um zu überprüfen, ob ein Nutzerwechsel stattgefunden hat. Die bisherigen ersten, zweiten und/oder dritten Konfidenzwerte werden im Falle eines Nutzerwechsels verworfen, um sicherzustellen, dass bei einem Nutzerwechsel ein nicht authentifizierter Nutzer das mobile, tragbare Kommunikationssystem verwendet. Dieser nicht authentifizierte Nutzer muss sich dann neu authentifizieren.

In einer Ausführungsform ist der durch das Grobmotorikklassifikationsmodul implementierte Maschinenlernverfahren ein Random-Forrest Algorithmus, welcher eine Bewegung als eine dem Grobmotorikklassifikationsmodul bekannte Bewegung klassifiziert.

In einer weiteren Ausführungsform ist das Nutzererkennungsmodul so konfiguriert, dass es eine zumindest vorübergehende Beendigung der Nutzung des mobilen, tragbaren Kommunikationssystems durch den aktuellen Nutzer anhand von grob- und/oder feinmotorischen Bewegungsdaten erkennt. Dazu ist das Nutzererkennungsmodul beispielsweise auf ein Erkennen einer grob- und/oder feinmotorischen Bewegung des Ablegens des mobilen, tragbaren Kommunikationssystems konfiguriert. Wird eine solche Beendigung erkannt, werden beispielsweise die bisherigen Konfidenzwerte verworfen, um sicherzustellen, dass bei einem möglichen Nutzerwechsel ein nicht authentifizierter Nutzer das mobile, tragbare Kommunikationssystem verwendet. Dieser nicht authentifizierte Nutzer muss sich dann neu authentifizieren.

Durch das Implementieren des Maschinenlernverfahrens als Random-Forrest Algorithmus ergibt sich in vorteilhafter Weise, dass die Parameter zur Klassifikation der grobmotorischen Bewegung in besonders effizienter Weise zu der Klassifikation beitragen und ferner, dass sich der Random-Forrest Algorithmus aufgrund der festgelegten Anzahl der zur Verfügung stehenden Parameter besonders leicht implementieren lässt.

Nach Ausführungsformen weist das Kommunikationssystem ferner ein Mittel zur Erfassung zumindest eines Umweltparameters, welcher einen Umwelteinfluss beschreibt, der dazu geeignet ist, das Verhalten des aktuellen Nutzers zu beeinflussen, auf. Das Verfahren zur Authentifizierung eines Nutzers des Kommunikationssystems mittels einer verhaltensbasierten Authentifizierung umfasst nach Ausführungsformen ferner die folgenden Schritte:
- Erfassen des zumindest einen Umweltparameters,
- Auswerten der erfassten verhaltensbasierten Daten durch das Klassifikationsmodul, wobei das Auswerten unter Verwendung des zumindest einen Umweltparameters an den Umwelteinfluss angepasst wird.

Ein Umweltparameter beschreibt einen Umwelteinfluss auf den Nutzer. Als Umweltparameter gelten im Allgemeinen Parameter, die durch die Umwelt bestimmt sind und nicht von dem Nutzer und seinem Verhalten abhängen. Umweltparameter können beispielsweise Parameter sein, die das aktuelle Wetter, insbesondere die Luftfeuchte, den Luftdruck, die Umgebungstemperatur, die Intensität der Sonnenstrahlen, die Windgeschwindigkeit oder die Windrichtung umfassen. Beispielsweise kann sich der Nutzer in einem trockenen Gebiet, in einer (Groß-) Stadt, in einem Wald, an der Küste oder auf dem Meer aufhalten. Umweltparameter können auch die geographischen und/oder politischen Rahmenbedingungen umfassen. Ferner können Umgebungsparameter die Position des Nutzers, insbesondere die Umgebung des Nutzers umfassen. Beispielsweise eine ausgerufene Sicherheits- oder Warnstufe für bestimmte Regionen, eine Lawinenwarnung, eine Terrorwarnung, eine Unfallmeldung, eine Erdbebengefahr oder eine ausgebrochene Krankheit können als Umweltparameter erfasst werden.

Das Verhalten des Nutzers kann durch Umweltparameter beeinflusst werden, sodass die erfassbaren verhaltensbezogenen Daten ebenfalls von dem Umweltparameter abhängen können. Beispielsweise kann ein Nutzer bei Temperaturen über 38° C einen anderen Gang aufweisen als bei Temperaturen, die um die Raumtemperatur liegen. Oder ein Nutzer reagiert nervös auf eine öffentlich ausgerufene Warnmeldung, beispielsweise eine Sturmwarnung, was sich auf den Ruhepuls des Nutzers auswirken kann. Weitere Umweltparameter können die Umgebungslautstärke, insbesondere bei hoher Verkehrsdichte oder an Bahnhöfen, oder eine Umgebungsbewegung sein. Eine Umgebungsbewegung findet statt, wenn sich der Nutzer in einem bewegten Inertialsystem aufhält. Beispielsweise in einem Zug oder auf einem Schiff, insbesondere bei Wellengang.

Bei bekannten Authentifizierungsverfahren werden die Umgebung und ihre Einflüsse nicht berücksichtigt. Das erfindungsgemäße Verfahren berücksichtigt den Einfluss eines Umweltparameters auf den Nutzer für eine Authentifizierung anhand von verhaltensbasierten Daten. Das Auswerten der verhaltensbasierten Daten wird erfindungsgemäß entsprechend dem zumindest einen erfassten Umweltparameter angepasst.

Dadurch ergibt sich in vorteilhafter Weise, dass sich der Nutzer auch unter verschiedenen Umwelteinflüssen erfolgreich Authentifizieren kann.

In einer weiteren Ausführungsform umfasst das Kommunikationssystem ein Umweltparameterklassifikationsmodul. Das Umweltparameterklassifikationsmodul ist mit Trainingsdatensätzen einer Nutzerkohorte für ein Bestimmen von Korrekturen zum Anpassen der Auswertung der erfassten verhaltensbasierten Daten des registrierten Nutzers an Umwelteinflüsse trainiert. Das Anpassen der Auswertung der erfassten verhaltensbasierten Daten an den zumindest einen Umweltparameter umfasst:
I. die Eingabe des erfassten zumindest einen Umweltparameters in das Umweltparameterklassifikationsmodul,
II. das Bestimmen von zumindest einer Korrektur für die Auswertung der erfassten verhaltensbasierten Daten des registrierten Nutzers durch das Umweltparameterklassifikationsmodul,
III. Anpassen der Auswertung der erfassten verhaltensbasierten Daten des registrierten Nutzers an den Umwelteinfluss unter Verwendung der Korrektur.
Die erfassten verhaltensbasierten Daten des registrierten Nutzers beschreiben dabei das Verhalten des registrierten Nutzers. Durch den erfolgreichen Vergleich der verhaltensbasierten Daten des aktuellen Nutzers mit den gespeicherten verhaltensbasierten Daten des registrierten Nutzers, kann der aktuelle Nutzer als der registrierte Nutzer identifiziert werden. Dieser Vergleich wird unter Verwendung der, aus dem Umweltparameter bestimmten, Korrektur angepasst.

Das Umweltparameterklassifikationsmodul kann ferner als ein Teil des Klassifikationsmoduls ausgebildet sein. Alternativ kann das Umweltparameterklassifikationsmodul als ein separates Modul ausgebildet sein.

In einer weiteren Ausführungsform umfasst das Kommunikationssystem eine Kommunikationsschnittstelle, wobei das Kommunikationssystem über die Kommunikationsschnittstelle den zumindest einen Umweltparameter empfängt. Die Kommunikationsschnittstelle kann insbesondere als eine Drahtloskommunikationsschnittstelle ausgebildet sein.

In vorteilhafter Weise kann das Kommunikationssystem Informationen von anderen Systemen verwenden, um eine Korrektur aus einem Umweltparameter zu bestimmen. Beispielsweise kann das Kommunikationssystem über die Drahtloskommunikationsschnittstelle mit einem öffentlichen Funknetzwerk oder dem Internet kommunizieren und darüber einen oder mehrere Umweltparameter empfangen. In einer weiteren Ausführungsform kann das Kommunikationssystem die über die Drahtloskommunikationsschnittstelle empfangenen Umweltparameter mit Umweltparametern ergänzen, die durch einen Sensor des Kommunikationssystems erfasst wurden. Insbesondere über die Drahtlosschnittstelle empfangene Nachrichten können über einen Sensor erfasste Umweltparameter, wie beispielsweise Wetterdaten, ergänzen.

In einer weiteren Ausführungsform umfasst das Erfassen des zumindest einen Umweltparameters über die Kommunikationsschnittstelle das Empfangen von Nachrichten, amtliche Mitteilungen und/oder Wetterdaten.

In vorteilhafter Weise kann der zumindest eine Umweltparameter mit Daten übertragen werden, die dem Kommunikationssystem über ein Netzwerk sowieso zur Verfügung stehen. Insbesondere Nachrichten und Wetterdaten stehen in öffentlichen Netzwerken zur Verfügung, sodass Smartphone-Nutzer sich Nachrichten über eine entsprechende Software anschauen oder lesen können und stets über das aktuelle Wetter informiert sind. Mit oder aus diesen Daten können beispielsweise Umweltparameter bestimmt werden, welche sich dazu eignen, das Verhalten des Nutzers zu beeinflussen. Wird beispielsweise eine Sturmwarnung von einem Wetterdienst oder eine polizeiliche Warnung vor Verkehrsstau ausgesprochen, so kann dies den Nutzer vorsichtiger werden lassen. Der Nutzer kann dadurch angespannt sein und beispielsweise vorsichtiger am Verkehr teilnehmen, was sich beispielsweise an seiner Gangart zeigen kann. Ferner kann sich das Verhalten des Nutzers aufgrund der Umweltparameter ändern, weil der Nutzer von seiner täglichen Routine abweicht. Beispielsweise nimmt er einen anderen Weg, um nach der Arbeit nach Hause zu kommen, weil er eine Staumeldung empfangen hat. Nachrichten können das Verhalten des Nutzers ebenfalls beeinflussen. Beispielsweise starke und kurzfristige wirtschaftliche Schwankungen können ein Nutzer zum Beispiel euphorisch, verärgert oder deprimiert stimmen, wodurch sich das Verhalten des Nutzers ebenfalls ändert.

In einer weiteren Ausführungsform umfasst das Kommunikationssystem zumindest einen zweiten Sensor, mit dem das Kommunikationssystem die Umweltdaten, insbesondere in Form von Wetterdaten, erfassen kann.

In vorteilhafter Weise kann das Kommunikationssystem durch den zweiten Sensor dazu in der Lage sein, den zumindest einen Umweltparameter selbst zu erfassen. Das Kommunikationssystem kann damit unabhängig von einer hinreichenden Verbindungsstärke zu einem entsprechenden Netzwerk Umweltparameter erfassen, um die Auswertung der erfassten verhaltensbasierten Daten des registrierten Nutzers zu korrigieren.

In einer weiteren Ausführungsform umfasst das Anpassen der Auswertung der erfassten verhaltensbasierten Daten des registrierten Nutzers an den Umwelteinfluss eine Auswahl der Klassifikationsparameter.

In vorteilhafter Weise können so Klassifikationsparameter für die Authentifizierung des Nutzers je nach Situation der Umwelt aus- oder angeschaltet werden. Beispielsweise kann ein Klassifikationsparameter das Trainingsverhalten des Nutzers im Freien anhand eines Startens einer Anwendung zur Überwachung der Pulsfrequenz während einer Trainingseinheit charakterisieren. Mit anderen Worten, durch den Start der Anwendung signalisiert der Nutzer dem Kommunikationssystem den Beginn einer Trainingseinheit. Der Start der Trainingseinheit sowie die Dauer des Trainings sind für den Nutzer charakteristisch und beschreiben sein Verhalten. Wenn es jedoch regnet und der Nutzer nicht trainieren kann, möchte der Nutzer trotzdem sein Kommunikationssystem verwenden können. Damit er sich verhaltensbasiert authentifizieren kann, erfasst das Kommunikationssystem die aktuellen Wetterdaten. Aufgrund des Wetters "Regen" werden die Klassifikationsparameter, die die Trainingseinheit beschreiben, nicht für eine Authentifizierung herangezogen.

In einem weiteren Beispiel gehört zum Verhalten des Nutzers, dass er eine Bestimmte Route für eine regelmäßige Reisestrecke wählt. Durch ein Empfangen einer Warnmeldung vor Verzögerungen auf der Route kann der Nutzer eine alternative Route wählen. Die Parameter für die Reise unter normalen Umständen werden in einem solchen Fall abgeschaltet.

In einer weiteren Ausführungsform umfasst das Anpassen der Auswertung der erfassten verhaltensbasierten Daten des registrierten Nutzers an den Umwelteinfluss ein Anpassen der Gewichtungsfaktoren durch die Korrektur.

In vorteilhafter Weise können die einzelnen Klassifikationsparameter feiner an die aktuellen Umweltparameter angepasst werden. Ein Klassifikationsparameter kann beispielsweise lediglich weniger stark gewichtet werden, anstatt vollständig außen vor gelassen zu werden. Dies kann eine feinere Einstellungsmöglichkeit und somit eine höhere Genauigkeit der Zuordnungswahrscheinlichkeit bewirken.

In einer weiteren Ausführungsform umfasst das Authentifizieren des Nutzers aufgrund der Zuordnungswahrscheinlichkeit ein Überprüfen, ob die Zuordnungswahrscheinlichkeit eine Schwellenwahrscheinlichkeit überschreitet, wobei das Anpassen der Auswertung der erfassten verhaltensbasierten Daten des registrierten Nutzers an den Umwelteinfluss ein Senken oder ein Erhöhen der Schwellenwahrscheinlichkeit umfasst. Beispielsweise kann bei vielen gleichzeitig auftretenden Umwelteinflüssen auf den Nutzer das Verhalten des Nutzers so stark von dem gewöhnlichen Verhalten abweichen, dass eine Korrektur von vielen Parametern oder Gewichtungsfaktoren sehr rechenintensiv wird.

In vorteilhafter Weise wird durch das Erhöhen oder Senken der Schwellenwahrscheinlichkeit das Verfahren zu Authentifizierung vereinfacht, da durch ein Korrigieren nur eines Wertes das Authentifizieren an den zumindest einen Umweltparameter angepasst werden kann.

In einer weiteren Ausführungsform umfasst das Anpassen der Auswertung der erfassten verhaltensbasierten Daten des registrierten Nutzers an den Umwelteinfluss ein Anpassen der Vergleichsparameter durch die Korrektur.

In vorteilhafter Weise können so Klassifikationsparameter, die bei unterschiedlichen Umweltbedingungen unterschiedliche Werte annehmen, mit zu der Bestimmung der Zuordnungswahrscheinlichkeit beitragen, ohne dass der jeweilige Gewichtungsfaktor geändert wird. Beispielsweise gehört es zum Verhalten eines Nutzers, dass er oft einen bestimmten Musikradiosender hört. Der Nutzer bekommt mit, dass in seiner unmittelbaren Umgebung eine akute Gefahr im Straßenverkehr, beispielsweise Personen auf der Fahrbahn, zu erwarten ist. Der Umweltparameter "Gefahr im Straßenverkehr" könnte beispielsweise durch eine amtliche (polizeiliche) Mitteilung empfangen worden sein. Damit der Nutzer sein Kommunikationssystem weiterverwenden und er trotzdem über das Radio die Nachrichten über einen Nachrichtenradiosender, also einen anderen als den gewohnten Musikradiosender, mitverfolgen kann, kann der Umweltparameter "Gefahr im Straßenverkehr" den Klassifikationsparameter, der die Senderauswahl quantifiziert, ändern.

Nach Ausführungsformen ergibt ein Auswerten der erfassten Umweltparameter durch das Umweltparameterklassifikationsmodul, dass eine verhaltensbasierte Authentifizierung unter Verwendung der erfassten verhaltensbasierten Daten nicht möglich ist. Beispielsweise liegen Umwelteinflüsse vor, welche das Verhalten des Nutzers so beeinflussen können, dass es derart vom charakteristischen Verhalten des registrierten Nutzers abweichen kann, dass das resultierende verhalten nicht mehr mit ausreichender Sicherheit dem registrierten Nutzer zugeordnet werden kann. Beispielsweise werden die möglichen Abweichungen derart groß, dass die Anzahl möglicher Nutzer, welche ein Verhalten innerhalb der Toleranzen der möglich Abweichung so groß wird, dass die Gefahr besteht, dass ein unberechtigter Nutzer des mobilen, Kommunikationssystems auf Basis einer verhaltensbasierten Authentifizierung fälschlicherweise als registrierte Nutzer erkannt wird. Beispielsweise sind alle verhaltensbasierten Daten von Umwelteinflüssen derart beeinflusst, dass keine zuverlässige verhaltensbasierte Authentifizierung möglich ist. Beispielsweise ist ein Teil der verhaltensbasierten Daten von Umwelteinflüssen derart beeinflusst, dass keine zuverlässige verhaltensbasierte Authentifizierung auf Basis dieser Daten möglich ist, wobei die verbleibenden unbeeinflussten verhaltensbasierten Daten nicht ausreichen für eine verhaltensbasierte Authentifizierung. Beispielsweise betreffen die unbeeinflussten verhaltensbasierten Daten Verhaltensmuster, welche eine große Anzahl an Menschen gemein, d.h. weit verbreitet, sind.

Nach Ausführungsformen wird die verhaltensunabhängige Authentifizierung ausgeführt, falls das Auswerten der erfassten Umweltparameter durch das Umweltparameterklassifikationsmodul ergibt, dass eine verhaltensbasierte Authentifizierung unter Verwendung der erfassten verhaltensbasierten Daten nicht möglich ist. Beispielsweise ergibt die Auswertung, dass die möglichen Abweichungen des charakteristischen Verhaltens aufgrund der Umwelteinflüsse größer als ein vordefinierter Schwellenwert sind. Beispielsweise ergibt die Auswertung, dass erfasste Umweltparameter im Vergleich zu Standardumweltparametern, für welche das bzw. die Klassifikationsparameter trainiert sind, Abweichungen aufweisen, welche größer als ein vordefinierter Schwellenwert sind. Entsprechende Standardumweltparametern sind beispielsweise im Speicher des mobilen, tragbaren Kommunikationssystems gespeichert. Nach Ausführungsformen legen die Standardumweltparametern Standardumweltparameterbereiche fest. Nach Ausführungsformen werden im Zuge des Trainierens des bzw. der Klassifikationsmodule des mobilen, tragbaren Kommunikationssystems jeweils auch die Umweltparameter erfasst, unter welchen das Training erfolgt ist. Liegen die erfassten Umweltparameter außerhalb des Standardumweltparameterbereichs, wird der Standardumweltparameterbereich um die Umweltparameter erweitert. Nach Ausführungsformen wird der Standardumweltparameterbereich nur unter der Voraussetzung um die erfassten Umweltparameter erweitert, dass die Abweichung der erfassten Umweltparameter vom Standardumweltparameterbereich kleiner als ein vordefinierter Schwellenwert ist. Nach Ausführungsformen werden im Zuge des Trainings des mobilen, tragbaren Kommunikationssystems erfasste verhaltensbasierte Daten nur unter der Voraussetzung für das Training berücksichtigt, dass die Umweltparameter unter welchen die entsprechenden verhaltensbasierte Daten erfasst wurden innerhalb des Standardumweltparameterbereich liegen oder dass eine Abweichung zwischen Umweltparameter unter welchen die entsprechenden verhaltensbasierte Daten erfasst wurden und dem Standardumweltparameterbereich kleiner als ein vordefinierter Schwellenwert ist.

Im Weiteren werden Ausführungsformen der Erfindung mit Bezugnahme auf die Zeichnungen näher erläutert. Es zeigen:
- Figur 1: einen schematischen Aufbau eines beispielhaften mobilen, tragbaren Kommunikationssystems zur verhaltensbasierten Authentifizierung eines Nutzers,
- Figur 2a: einen schematischen Ablauf einer verhaltensbasierten Authentifizierung in einem Ablaufdiagramm,
- Figur 2b: einen schematischen Ablauf einer verhaltensunabhängigen Authentifizierung in einem Ablaufdiagramm,
- Figur 3: einen schematischen Ablauf einer Authentifizierung in einem Ablaufdiagramm,
- Figur 4a: Schritte der verhaltensbasierten Authentifizierung in einem Ablaufdiagramm,
- Figur 4b: Schritte eines Trainings eines Klassifikationsmoduls in einem Ablaufdiagramm,
- Figur 5: ein schematisches Verfahren zur Abarbeitung von verhaltensbasierten Daten durch das mobile, tragbare Kommunikationssystem,
- Figur 6a: ein Kommunikationssystem gemäß einer zweiten Ausführungsform,
- Figur 6b: ein Kommunikationssystem gemäß einer dritten Ausführungsform, und
- Figur 7: ein Verfahren gemäß einer weiteren Ausführungsform.

Elemente der nachfolgenden Ausführungsformen, die einander entsprechen, werden mit denselben Bezugszeichen gekennzeichnet.

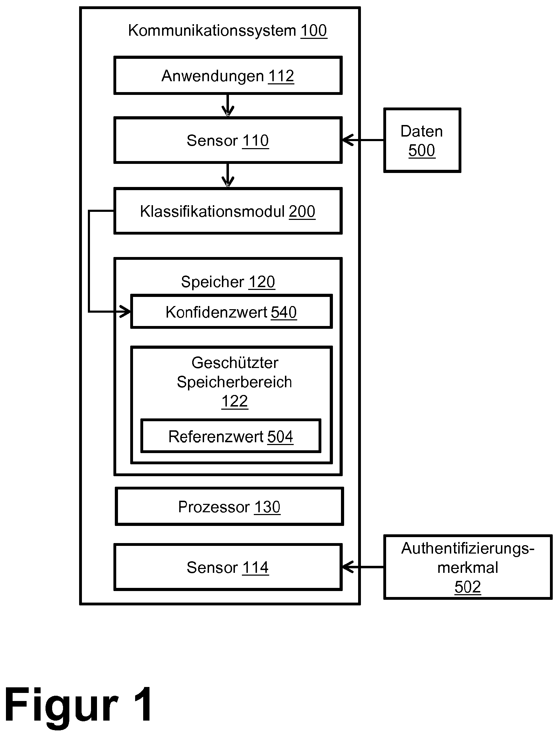

Figur 1 zeigt den schematischen Aufbau einer Ausführungsform eines mobilen, tragbaren Kommunikationssystems 100, welches von einem Nutzer mitgeführt wird. Das mobile, tragbare Kommunikationssystem 100 kann in verschiedenen Ausführungsformen ein einzelnes mobiles, tragbares Kommunikationsgerät oder mehrere mobile, tragbare Kommunikationsgeräte umfassen. Das mobile, tragbare Kommunikationssystem 100 ist dazu konfiguriert eine verhaltensbasierte Authentifizierung eines Nutzers auszuführen. Ferner kann das mobile, tragbare Kommunikationssystem 100 dazu konfiguriert sein, die verhaltensbasierte Authentifizierung des Nutzers gegenüber einem mit dem mobile, tragbare Kommunikationssystem 100 kommunikativ verbundenen Computersystem auszuführen. Das mobile, tragbare Kommunikationssystem 100 weist einen Sensor 110 auf, welcher dazu konfiguriert ist, verhaltensbasierte Daten 500, beispielsweise grobmotorische Bewegungsdaten, des Nutzers zu erfassen. Ferner weist das mobile, tragbare Kommunikationssystem 100 ein Klassifikationsmodul 200 auf, welches beispielsweise als Grobmotorikklassifikationsmodul ausgebildet und dazu konfiguriert ist, die verhaltensbasierten Daten 500 des Sensors 110 zu verarbeiten. Das mobile, tragbare Kommunikationssystem 100 weist ferner einen Speicher 120 auf, in dem die verhaltensbasierten Daten 500 in verarbeiteter Form als Konfidenzwert 540 gespeichert werden können. Das mobile, tragbare Kommunikationssystem 100 weist ferner einen Prozessor 130 auf, welcher das Klassifikationsmodul 200 ausführt.

In einer weiteren Ausführungsform implementiert das mobile, tragbare Kommunikationssystem 100 Anwendungen 112. Der Sensor kann nach Ausführungsformen dazu konfiguriert sein, ferner Anwendungsdaten als verhaltensbasierte Daten 500 zu erfassen. Das Klassifikationsmodul 200 kann ferner als Anwendungsklassifikationsmodul konfiguriert sein zum Verarbeiten der Anwendungsdaten der Anwendungen 112.

In einer weiteren Ausführungsform ist der Sensor 110 des mobile, tragbare Kommunikationssystems 100 dazu konfiguriert feinmotorische Bewegungsdaten des Nutzers als verhaltensbasierte Daten 500 zu erfassen. Ferner ist das Das Klassifikationsmodul 200 des mobilen, tragbaren Kommunikationssystem 100 dazu konfiguriert feinmotorische Bewegungsdaten des Nutzers zu verarbeiten.

Führt der Nutzer eine grobmotorische Bewegung aus und trägt dabei das mobile Kommunikationssystem 100 bei sich (z.B. in einer Tasche eines Bekleidungsstücks des Nutzers, wie z.B. in seiner Jacken- oder Hosentasche, oder direkt am Körper), so kann der Sensor 110 diese Bewegung in Form von Daten 500 erfassen, und zwar aufgrund der Bewegung des Kommunikationssystems, die mittelbar (über das Bekleidungsstück) oder unmittelbar (wenn der Nutzer das Kommunikationssystem am Körper trägt) durch die grobmotorische Bewegung des Nutzers verursacht wurde. Der Sensor 110 kann beispielsweise einen Beschleunigungssensor oder ein Gyroskop oder eine Kombination aus beidem umfassen. Die Bewegung des Nutzers kann beispielsweise ein Gehen, ein Joggen, ein Rennen oder eine Bewegung des Armes sein, falls der Teil des mobilen, tragbaren Kommunikationssystems 100, welches den Sensor aufweist ist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems 100 aus einer Tasche verstanden werden.

Nutzt der Nutzer eine Anwendung 112, welche auf seinem mobilen, tragbaren Kommunikationssystem 100 implementiert ist, so erfasst das mobile, tragbare Kommunikationssystem 100 die Anwendungsdaten als verhaltensbasierte Daten 500.

Führt der Nutzer eine feinmotorische Bewegung aus, so kann der Sensor 110 diese Bewegung in Form von verhaltensbasierten Daten 500 erfassen. Der Sensor 110 kann beispielsweise ein Touch-Display, eine Tastatur oder eine Kombination aus beidem umfassen. Die feinmotorische Bewegung des Nutzers kann beispielsweise als Tippgeschwindigkeit, Eingabefrequenz oder Eingabegenauigkeit erfasst werden.

Das Klassifikationsmodul 200 empfängt die Daten 500 und klassifiziert die Daten 500 als ein Muster. Das Klassifikationsmodul 200 wird dabei von einem Prozessor 130 des mobilen, tragbaren Kommunikationssystems 100 ausgeführt. Aus der Klassifikation generiert das Klassifikationsmodul 200 den mindestens einen Konfidenzwert 540. Dieser mindestens eine Konfidenzwert 540 wird in dem Speicher 120 des mobilen, tragbaren Kommunikationssystems 100 gespeichert.

Muss sich der Nutzer gegenüber dem System 150 authentifizieren, wird der mindestens eine Konfidenzwert 540 aus dem Speicher 120 ausgelesen und verarbeitet. Dabei wird das Klassifikationsergebnis 600 generiert.

Ist der Nutzer gemäß dem Klassifikationsergebnis 600 authentifiziert, so werden die Daten 500, die zu der erfolgreichen Authentifizierung beigetragen haben, in dem Speicher 120 des mobilen, tragbaren Kommunikationssystems 100 gespeichert bzw. zu einem in dem Speicher 120 gespeicherten Vergleichsdatensatz hinzugefügt, um für zukünftige Authentifizierungsversuche bei der Generierung der zukünftigen Konfidenzwerte 540 verwendet zu werden.

Ist der Nutzer gemäß dem Klassifikationsergebnis 600 nicht authentifiziert, so kann eine verhaltensunabhängige Authentifizierung als Rückfallposition ausgeführt werden.

Bei dem Sensor 110 kann es sich nach Ausführungsformen um einen Sensor oder eine Mehrzahl von unterschiedlichen Sensoren zum Erfassen unterschiedlicher verhaltensbasierter Daten 500 handeln.

Bei dem Klassifikationsmodul 200 kann es sich nach Ausführungsformen um ein Klassifikationsmodul handeln, welches zur Klassifikation einer Mehrzahl von unterschiedlichen Typen von verhaltensbasierten Daten 500 konfiguriert ist, oder um eine Mehrzahl von Klassifikationsmodulen, welche jeweils zur Klassifikation eines bestimmten Typs von verhaltensbasierten Daten 500 konfiguriert sind.

Das mobile, tragbare Kommunikationssystem 100 umfasst ferner einen Sensor 114 zum Erfassen eines verhaltensunabhängigen Authentifizierungsmerkmals 502. Dazu umfasst der Sensor 114 beispielsweise eine Nutzerschnittstelle, wie etwa ein Touch-Display zur Eingabe eines charakteristischen Wissens des Nutzers, einen biometrischen Sensor, wie etwa einen Fingerabdrucksensor, zur Erfassung eines charakteristischen biometrischen Merkmals des Nutzers und/oder eine Kommunikationsschnittstelle zur Kommunikation mit einem ID-Token im Besitz des Nutzers, sodass eine für den ID-Token charakteristische Kennung abgefragt werden kann z.B. in Form einer Signatur. Ferner sind in einem geschützten Speicherbereich 122 des Speichers 120 des mobile, tragbare Kommunikationssystem 100 ein oder mehrere Referenzwerte 504 zum Vergleich mit den erfassten Authentifizierungsmerkmalen 502 des aktuellen Nutzers. Die Referenzwerte 122 sind beispielsweise Referenzwerte für die Authentifizierungsmerkmale des registrierten Nutzers.

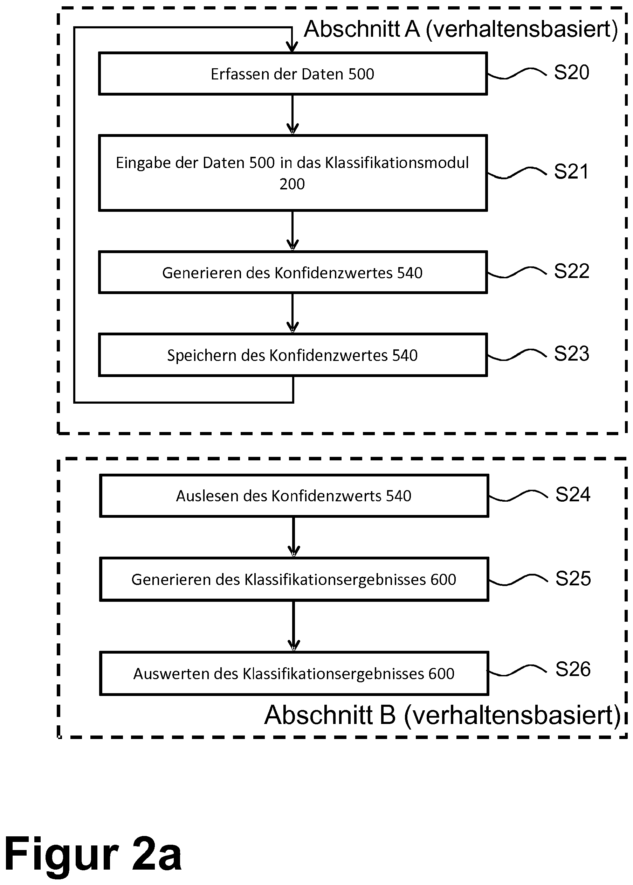

Figur 2a zeigt die verhaltensbasierte Authentifizierung eines Nutzers gegenüber einem System 150 in einem Ablaufdiagramm. Die verhaltensbasierte Authentifizierung kann dabei in zwei Abschnitte A und B unterteilt werden. Abschnitt A wird wiederholt ausgeführt, und bildet so eine schleifenartige Ausführungsstruktur. Das mobile, tragbare Kommunikationssystem 100 erfasst in Schritt S20 die verhaltensbasierten Daten 500. Die verhaltensbasierten Daten 500 werden in Schritt S21 in das Klassifikationsmodul 200 eingegeben. Aus den verhaltensbasierten Daten 500 generiert das Klassifikationsmodul 200 in Schritt S22 den mindestens einen Konfidenzwert 540. Der mindestens eine generierte Konfidenzwert 540 wird in Schritt S23 in dem Speicher 120 des mobilen, tragbaren Klassifikationssystems 100 gespeichert. Das mobile, tragbare Kommunikationssystem 100 erfasst dann neue verhaltensbasierten Daten 500. Das ganze Verfahren gemäß Abschnitt A wird wiederholt ausgeführt.

In einer Ausführungsform erfasst das mobile, tragbare Kommunikationssystem 100 die verhaltensbasierten Daten 500 als Datenstrom (Stream), wobei das Klassifikationsmodul 200 die verhaltensbasierten Daten 500 als Stream empfängt und verarbeitet. Die Konfidenzwerte 540 werden dabei in sehr kurzen zeitlichen Abständen, die durch die Taktrate des Prozessors und/oder des Sensors vorgegeben werden, im Speicher 120 des mobilen, tragbaren Kommunikationssystems 100 abgespeichert.

Abschnitt B wird dann ausgeführt, wenn sich der Nutzer authentifizieren muss und eine Authentifizierungsanfrage an das Betriebssystem gesendet wurde. Die Authentifizierungsanfrage umfasst eine Anforderung zum Auslesen von mindestens einem Konfidenzwert 540 aus dem Speicher 120. Der mindestens eine Konfidenzwert 540 wird dann aus dem Speicher 120 in Schritt S24 ausgelesen.

Aus dem mindestens einen Konfidenzwert 540 wird in Schritt S25 das Klassifikationsergebnis 600 generiert. Anschließend wird das Klassifikationsergebnis 600 in Schritt S26 ausgewertet. Eine Auswertung des Klassifikationsergebnisses 600 umfasst beispielsweise das Prüfen des Klassifikationsergebnisses 600 gegen ein Prüfungskriterium. Erfüllt das Klassifikationsergebnis 600 das Prüfungskriterium, so wird gemäß einer Ausführungsform ein Authentifizierungssignal erzeugt. Erfüllt das Klassifikationsergebnis 600 das Prüfungskriterium nicht, so wird kein Authentifizierungssignal erzeugt und ein verhaltensunabhängiges Authentifizierungsverfahren als Rückfallposition ausgeführt. Beispielsweise besteht das Prüfungskriterium darin, dass ein kombinierter Konfidenzwert aller berechneten Konfidenzwerte einen vordefinierten Schwellenwert überschreitet,

Ist der Nutzer gemäß dem Klassifikationsergebnis 600 authentifiziert, wodurch ein Senden eines Authentifizierungssignals veranlasst wurde, so werden die verhaltensbasierten Daten 500, die zu der erfolgreichen Authentifizierung beigetragen haben, in dem Speicher 120 des mobilen, tragbaren Kommunikationssystems gespeichert bzw. zu einem Vergleichsdatensatz hinzugefügt, um für zukünftige Authentifizierungsversuche bei der Generierung zukünftiger Klassifikationsergebnisse 600 verwendet zu werden.

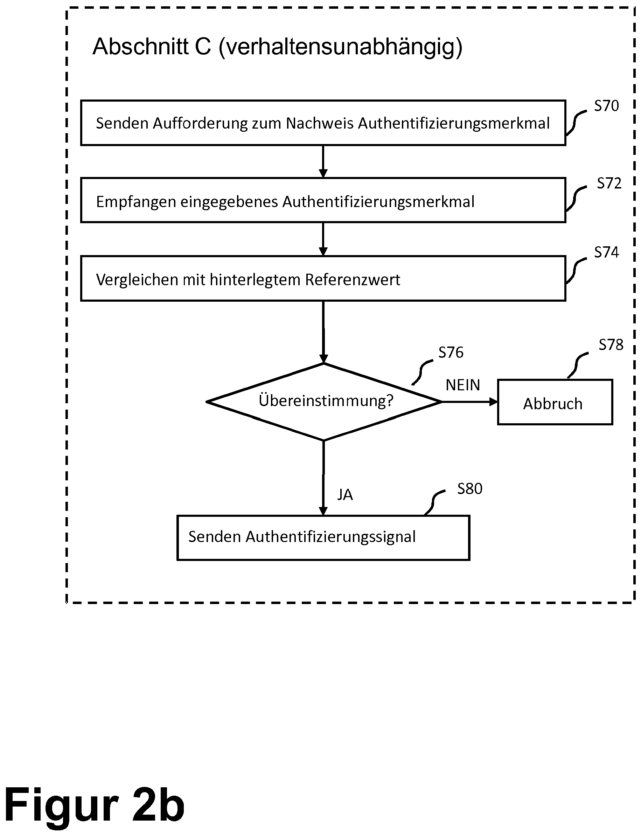

Figur 2b zeigt einen beispielhaften Verfahrensablauf für eine verhaltensunabhängige Authentifizierung in einem Abschnitt C des Authentifizierungsverfahrens. Falls die Auswertung des Klassifikationsergebnisses in Schritt S26 der Figur 2a ergibt, dass der Nutzer aufgrund seines Verhaltens nicht authentifiziert ist, erzeugt die verhaltensbasierte Authentifizierung kein Authentifizierungssignal. Vielmehr erfolgt in dem zusätzlichen operativen Abschnitt C eine verhaltensunabhängige Authentifizierung. In Schritt S70 wird beispielsweise durch das Betriebssystem des mobilen, tragbaren Kommunikationssystems und/oder ein für die Authentifizierung konfiguriertes Anwendungsprogramm eine Aufforderung zum Nachweis eines oder mehrerer vordefinierter Authentifizierungsmerkmale an den aktuellen Nutzer gesendet. Beispielswiese wird die Aufforderung auf einem Bildschirm des mobilen, tragbaren Kommunikationssystems 100 bzw. auf einem Bildschirm eines von dem des mobilen, tragbaren Kommunikationssystems 100 umfassten Kommunikationsgeräts 102 angezeigt. Ferner kann die Aufforderung den Nutzer darauf hinweisen, dass die verhaltensbasierte Authentifizierung fehlgeschlagen ist. Die nachzuweisenden vordefinierten Authentifizierungsmerkmale umfassen beispielsweise ein Wissen, einen Besitz und/oder ein biologisches Merkmal des Nutzers. Diese können beispielsweise ein oder mehrere Benutzernamen, Kennwörter, Einmalkennwörter, persönliche Identifikationsnummern, Transaktionsnummern, Muster, biometrische Merkmale und/oder ein ID Token des registrierten Nutzers umfassen.

In Schritt S72 werden über eine Nutzerschnittstelle des mobilen, tragbaren Kommunikationssystems 100 ein oder mehrere von dem aktuellen Nutzer eingegebene Authentifizierungsmerkmale 502 empfangen und an das die Authentifizierung ausführende Betriebssystem und/oder Anwendungsprogramm weitergeleitet. Die Eingabe der ein oder mehrere Authentifizierungsmerkmale 502 erfolgt über ein oder mehrere dazu ausgelegte Sensoren 114. Diese Sensoren 114 umfassen beispielsweise eine Nutzerschnittstelle, wie etwa eine Tastatur, ein Touchpad bzw. Touchscreen, ein Mikrophon, eine Kamera, eine Kommunikationsschnittstelle und/oder biometrische Sensoren zur Erfassung biometrischer Merkmale des aktuellen Nutzers. In Schritt S74 erfolgt ein Vergleich der von dem aktuellen Nutzer eingegebenen Authentifizierungsmerkmale 502 jeweils mit einem in einem geschützten Speicherbereich des Speichers 120 hinterlegten Referenzwert für das vordefinierte Authentifizierungsmerkmal durch den Prozessor 130 des mobilen, tragbaren Kommunikationssystems 100. Eine erfolgreiche nicht verhaltensbasierte Authentifizierung setzt eine Übereinstimmung der eingegebenen Authentifizierungsmerkmale mit den hinterlegten Referenzwerten voraus. Wird in Schritt S76 festgestellt, dass keine Übereinstimmung vorliegt, kommt es in Schritt S78 zu einem Abbruch der Authentifizierung. Bei einer fehlgeschlagenen Authentifizierung wird kein Authentifizierungssignal erzeugt und der aktuelle Nutzer erhält keinen Zugriff auf das mobilen, tragbaren Kommunikationssystem 100 und/oder der Anwendungen, welche die Authentifizierungsanfrage 700 gestellt hat. Wird in Schritt S76 festgestellt, dass keine Übereinstimmung vorliegt, wird in Schritt S80 ein Authentifizierungssignal 720 erzeugt, welches eine erfolgreiche nicht verhaltensbasierte Authentifizierung des aktuellen Nutzers signalisiert.

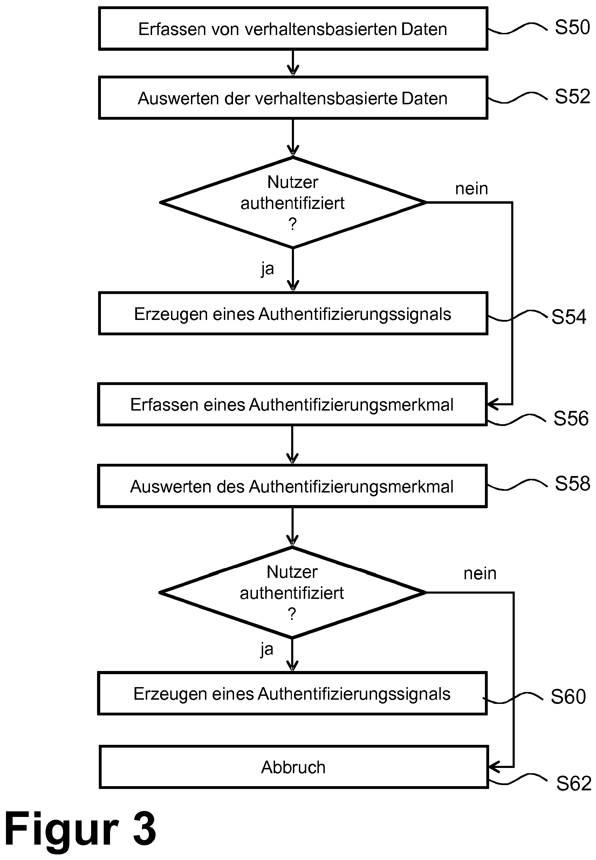

Figur 3 zeigt Verfahren zum Ausführen einer verhaltensbasierten Authentifizierung mit einer verhaltensunabhängigen Authentifizierung als Rückfallposition. In Schritt S50 werden verhaltensbasierte Daten 500 erfasst und in Schritt S52 durch das mobile, tragbare Kommunikationssystem 100 unter Verwendung eines Klassifikationsmoduls 200 ausgewertet. Wird der Nutzer auf Basis der erfassten verhaltensbasierten Daten 500 authentifiziert, so wird in Schritt S54 ein entsprechendes Authentifizierungssignal erzeugt. Kann der Nutzer auf Basis der erfassten verhaltensbasierten Daten 500 nicht authentifiziert werden, wird das Verfahren in Schritt S56 mit einer verhaltensunabhängigen Authentifizierung fortgesetzt.

In Schritt S56 wird zumindest ein Authentifizierungsmerkmal 502 zur verhaltensunabhängigen Authentifizierung erfasst. Authentifizierungsmerkmale 502 können beispielsweise ein Wissen, einen Besitz und/oder eine biologische Eigenschaft des registrierten Nutzers umfassen, welche zum Zwecke der Authentifizierung durch den aktuellen Nutzer des mobilen, tragbaren Kommunikationssystems nachzuweisen sind. In Schritt S58 wird das erfasste Authentifizierungsmerkmal 502 ausgewertet. Wird der Nutzer auf Basis des erfassten Authentifizierungsmerkmals 502 authentifiziert, etwa weil der Grad der Übereinstimmung zwischen dem erfassten Authentifizierungsmerkmal 502 und einem in dem Speicher 120 des mobilen, tragbaren Kommunikationsgeräts hinterlegten Referenzwert einen vordefinierten Schwellenwert überschreitet, so wird in Schritt S54 ein entsprechendes Authentifizierungssignal erzeugt. Kann der Nutzer auf Basis der erfassten verhaltensbasierten Daten 500 nicht authentifiziert werden, wird das Authentifizierungsverfahren in Schritt S56 abgebrochen.

Nach Ausführungsformen wird die verhaltensbasierte Authentifizierung S50 bis S52 bei einem Fehlschlag beispielswiese wiederholt bis eine vordefinierte Höchstzahl an erfolglosen Wiederholungen erreicht wird. Ist die vordefinierte Höchstzahl an Wiederholungen erreicht, wird das Verfahren mit der verhaltensunabhängigen Authentifizierung fortgesetzt. Nach Ausführungsformen wird die verhaltensunabhängige Authentifizierung S56 bis S58 bei einem Fehlschlag ebenfalls wiederholt bis eine vordefinierte Höchstzahl an erfolglosen Wiederholungen erreicht wird. Ist die vordefinierte Höchstzahl an Wiederholungen erreicht, wird das Authentifizierungsverfahren abgebrochen. Nach Ausführungsformen wird bei jeder Wiederholung der verhaltensunabhängigen Authentifizierung eine andere Kombination an Authentifizierungsmerkmalen bzw. ein anderes Authentifizierungsmerkmal abgefragt.

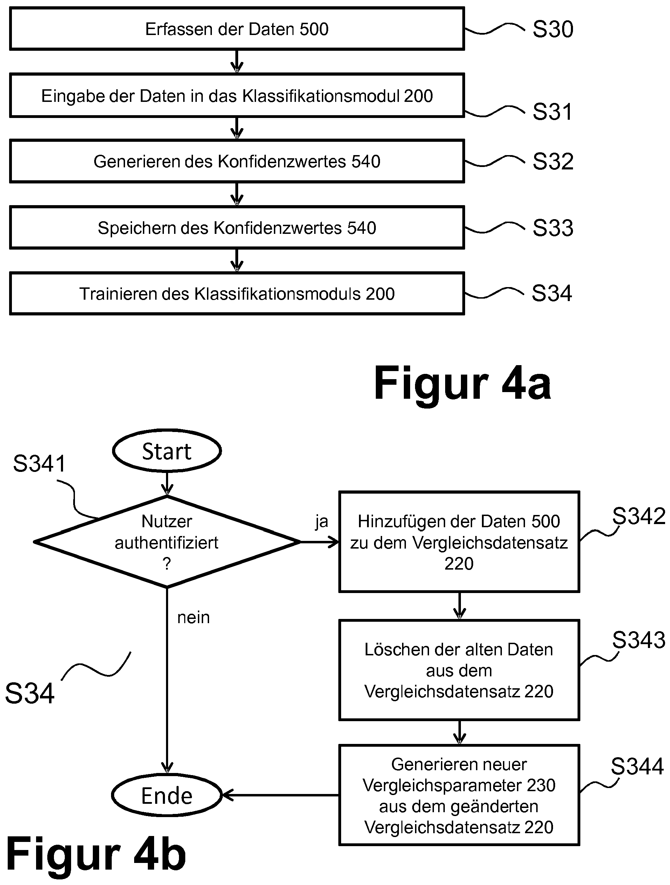

Figur 4a zeigt ein Ablaufdiagramm, welches die Verfahrensschleife A gemäß Figur 2a darstellt. In Schritt S30 werden die verhaltensbasierten Daten 500 erfasst. Die erfassten verhaltensbasierten Daten 500 werden in Schritt S31 in das Klassifikationsmodul 200 eingegeben. Die grobmotorischen Bewegungsdaten werden in das Grobmotorikklassifikationsmodul eingegeben. Die feinmotorischen Bewegungsdaten werden in das Feinmotorikklassifikationsmodul eingegeben. Die Anwendungsdaten werden in das Anwendungsklassifikationsmodul eingegeben.

In Schritt S32 generiert die Klassifikationsmodul 200 mindestens einen Konfidenzwert 540. Beispielsweise wird ein Konfidenzwert 540 generiert, welcher die Auswertung der grobmotorischen Bewegungsdaten, die feinmotorischen Bewegungsdaten und/oder die Anwendungsdaten umfasst. Der mindestens eine generierte Konfidenzwert 540 wird in Schritt S33 in dem Speicher 120 des mobilen, tragbaren Kommunikationssystems 100 gespeichert. Schließlich wird das Klassifikationsmodul 200 in Schritt S34 trainiert, wobei das Training von dem Klassifikationsergebnis 600 (vgl. Figur 2a) abhängt.

Figur 4b zeigt das Training gemäß Schritt S34 der Figur 3a im Detail. Zunächst wird geprüft in Schritt S341, ob sich der Nutzer durch das Klassifikationsergebnis 600 gegenüber dem System 100 authentifizieren konnte. Ist dies nicht der Fall, so werden die erfassten Daten 500 verworfen und es findet kein Training statt.

War die Authentifizierung des Nutzers erfolgreich, werden die verhaltensbasierten Daten 500 in Schritt S342 einem entsprechenden Vergleichsdatensatz 220 hinzugefügt und somit in dem Speicher 120 des mobilen, tragbaren Kommunikationssystems gespeichert. Beispielsweise umfasst der Speicher 120 separate Vergleichsdatensätze 200 für die grobmotorischen Bewegungsdaten, die feinmotorischen Bewegungsdaten und/oder die Anwendungsdaten. Beispielsweise umfasst der Speicher 120 einen Vergleichsdatensatz für die verhaltensbasierten Daten 500.

In einer Ausführungsform wird nun geprüft, ob der oder die Vergleichsdatensätze 220 verhaltensbasierte Daten 500 enthalten, welche älter als ein bestimmtes Schwellenalter sind. Das Schwellenalter ist beispielsweise durch den Nutzer, das System 150 oder das mobile, tragbare Kommunikationssystem 100 festgelegt. Beispielsweise kann dieses Schwellenalter Tage, Wochen, Monate oder Jahre betragen. Beispielsweise beträgt es vier Wochen, drei Monate oder ein Jahr. Enthalten der oder die Vergleichsdatensätze 220 verhaltensbasierte Daten 500 enthalten, welche älter als das Schwellenalter sind, werden diese in Schritt S343 gelöscht.

Haben sich die Vergleichsdatensätze 220 durch das Hinzufügen neuer verhaltensbasierten Daten 500 und/oder das Löschen alter verhaltensbasierten Daten 500 verändert, werden die jeweiligen Vergleichsparameter 230 in Schritt S344 erneut bestimmt. Diese neuen Vergleichsparameter 230 werden beispielsweise in dem Speicher 120 des mobilen, tragbaren Kommunikationssystems 100 gespeichert und stehen bei einem nächsten Authentifizierungsversuch dem Klassifikationsmodul 200 zur Verfügung. Alternativ werden die Vergleichsparameter 230 bei jedem Authentifizierungsversuch neu berechnet, so dass sichergestellt werden kann, dass stets aktuelle auf den berechtigten bzw. registrierten Nutzer trainierte Vergleichsparameter 230 für die Authentifizierung verwendet werden.

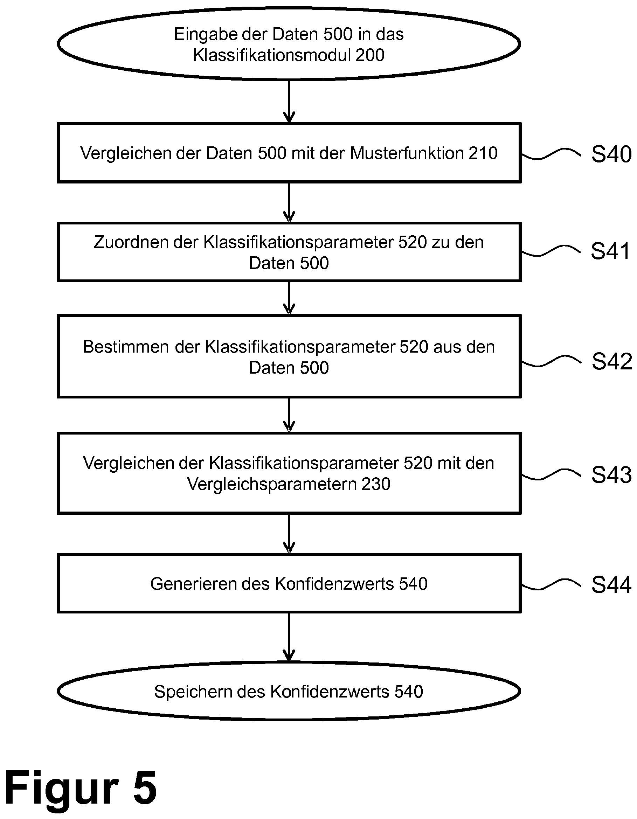

Figur 5 zeigt den schematischen Ablauf zur Generierung des Konfidenzwertes 540 aus den verhaltensbasierten Daten 500. Zunächst werden die verhaltensbasierten Daten 500, etwa durch einen dazu konfigurierten Sensor, erfasst. Die verhaltensbasierten Daten 500 werden dann an das Klassifikationsmodul 200 gesendet. Das Klassifikationsmodul 200 ruft aus dem Speicher eine Musterfunktion 210 ab und vergleicht in Schritt S40 die Musterfunktion 210 mit den erfassten verhaltensbasierten Daten 500. Die verhaltensbasierten Daten 500 werden in Schritt S41 einer Musterfunktion 210 zugeordnet. Auf das Zuordnen der Musterfunktion 210 hin, werden in Schritt S42 die der Musterfunktion 210 zugeordneten Klassifikationsparameter 520 aus den verhaltensbasierten Daten 500 bestimmt.

In dem Speicher 120 des mobilen, tragbaren Kommunikationssystems 100 ist ein Vergleichsdatensatz 220 gespeichert, welcher verhaltensbasierten Daten umfasst, wobei die Daten des Vergleichsdatensatzes 220 die Struktur der erfassten verhaltensbasierten Daten 500 aufweisen. Dem Vergleichsdatensatz 220 sind Vergleichsparameter 230 zugeordnet, welche aus den Daten des Vergleichsdatensatzes 220 errechnet wurden. Das Klassifikationsmodul 200 liest die Vergleichsparameter 230 aus dem Speicher 120 des mobilen, tragbaren Kommunikationssystems aus und vergleicht die Vergleichsparameter 230 mit den Klassifikationsparametern 520 in Schritt S43. Aus dem Unterschied generiert das Klassifikationsmodul 200 in Schritt S44 mindestens einen Konfidenzwert 540, wobei jeder Konfidenzwert 540 einem Klassifikationsparameter 520 zugeordnet ist und somit die Anzahl der Klassifikationsparameter 520 gleich der Anzahl der Konfidenzwerte 540 ist.

Die Konfidenzwerte 540 werden dann gemäß einer Ausführungsform der Erfindung, zum Beispiel durch Bildung des Mittelwerts, des Medians, des Modus oder durch eine komplexere Berechnung, zu einem resultierenden Konfidenzwert zusammengefasst. Der resultierende Konfidenzwert wird in dem Speicher 120 des mobilen, tragbaren Kommunikationssystems 100 gespeichert. Bei einer Authentifizierungsanfrage wird der resultierende Konfidenzwert aus dem Speicher 120 des mobilen, tragbaren Kommunikationssystems 100 ausgelesen.

In einer weiteren Ausführungsform wird der mindestens eine Konfidenzwert 540 im Speicher 120 des mobilen, tragbaren Kommunikationssystems 100 gespeichert und kann bei einer Authentifizierungsanfrage ausgelesen werden.

Ist der Nutzer gemäß dem Klassifikationsergebnis 600 authentifiziert, so werden die verhaltensbasierten Daten 500, die zu der erfolgreichen verhaltensbasierten Authentifizierung beitrugen, in dem Speicher 120 des mobilen, tragbaren Kommunikationssystems hinzugefügt, um für zukünftige Authentifizierungsversuche bei der Generierung der zukünftigen Konfidenzwerte 540 verwendet zu werden.

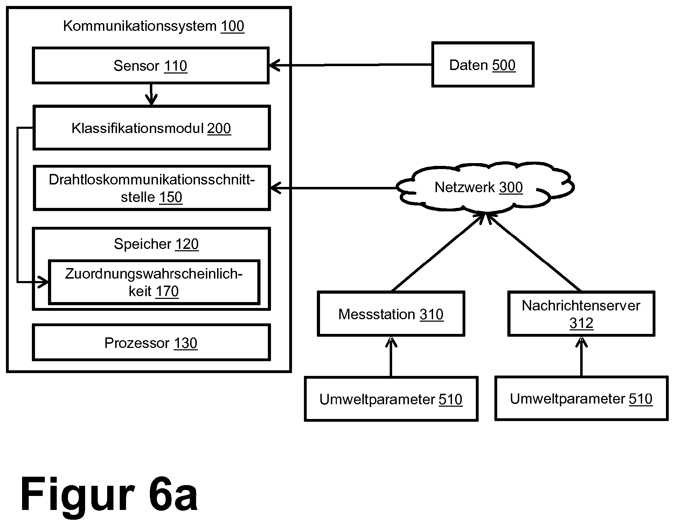

Figur 6a zeigt eine weitere Ausführungsform eines mobilen, tragbaren Kommunikationssystems 100, welches zudem dazu konfiguriert ist Umweltparameter zu erfassen. Das Kommunikationssystem 100 umfasst beispielsweise eine Drahtloskommunikationsschnittstelle 150, einen Speicher 120 und einen Prozessor 130. Über die Drahtloskommunikationsschnittstelle 150 kann das Kommunikationssystem 100 mit einem Netzwerk 300 kommunizieren. Das Netzwerk 300 kann beispielsweise das Internet, ein öffentliches oder privates Funknetzwerk oder ein anderes beliebiges Netzwerk sein. In einer weiteren Ausführungsform umfasst das Kommunikationssystem 100 eine Kommunikationsschnittstelle, um mit dem Netzwerk 300 über eine kabelgebundene Verbindung zu kommunizieren.

Über das Netzwerk 300 kann das Kommunikationssystem 100 Informationen von einem externen System abrufen. Zwei externe System sind in Figur 6a als Messstation 310 und als Nachrichtenserver 312 dargestellt. Eine Messstation 310 kann beispielsweise eine Wetterstation oder eine Verkehrsüberwachungsanlage sein. Ein Nachrichtenserver 312 kann beispielsweise mit einem Portal einer Tageszeitung verbunden sein und regelmäßig Nachrichten bereitstellen. In einer weiteren Ausführungsform sind das externe System 310, 312 und das Kommunikationssystem 100 bilateral oder unilateral miteinander verbunden. Beispielsweise kann das externe System 312 auch ein Radiosender sein, welcher die Informationen für das Kommunikationssystem 100 ausstrahlt.

Das externe System, bzw. in Figur 6a die Messstation 310 und/oder der Nachrichtenserver 312, erfasst zumindest einen Umweltparameter 510 und sendet diesen, gegebenenfalls über das Netzwerk 300, an das Kommunikationssystem 100. Ferner erfasst das Kommunikationssystem 100 die verhaltensbasierten Daten 500 des Nutzers. Die verhaltensbasierten Daten 500 werden durch das Klassifikationsmodul 200 ausgewertet. Dabei wird die Auswertung der verhaltensbasierten Daten 500 an den durch die Drahtloskommunikationsschnittstelle 150 empfangenen zumindest einen Umweltparameter 510 angepasst. Das Klassifikationsmodul 200 wird durch den Prozessor 130 ausgeführt. Schließlich werden aus den Daten 500 und unter Verwendung des zumindest einen Umweltparameters 510 eine Zuordnungswahrscheinlichkeit 170 und ein Authentifizierungssignal erzeugt. Die Zuordnungswahrscheinlichkeit 170 wird in dem Speicher 120 für spätere Authentifizierungsversuche gespeichert. Das Authentifizierungssignal signalisiert die erfolgreiche Authentifizierung des Nutzers.

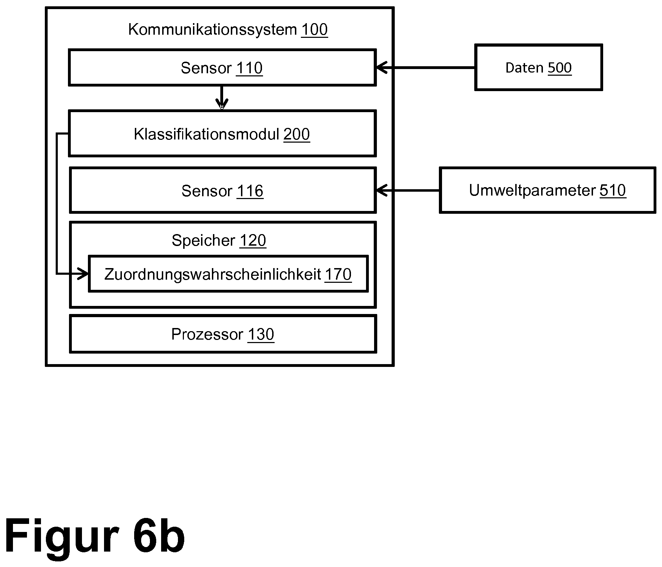

Figur 6b zeigt ein ähnliches Kommunikationssystem 100, wie das Kommunikationssystem, das in Figur 6a gezeigt ist. Das Kommunikationssystem 100 in Figur 6b umfasst jedoch einen Sensor 116, mit dem es in der Lage ist, den zumindest einen Umweltparameter 510 selbst zu erfassen. Beispielsweise kann der Sensor 116 als Temperatursensor oder Luftdrucksensor ausgebildet sein, um die Umweltparameter "lokale Temperatur" des Kommunikationssystems 100 zu erfassen. Die Übrigen Komponenten und Eigenschaften des Kommunikationssystems 100 sind analog zu denen, die in Figur 6a beschrieben sind.

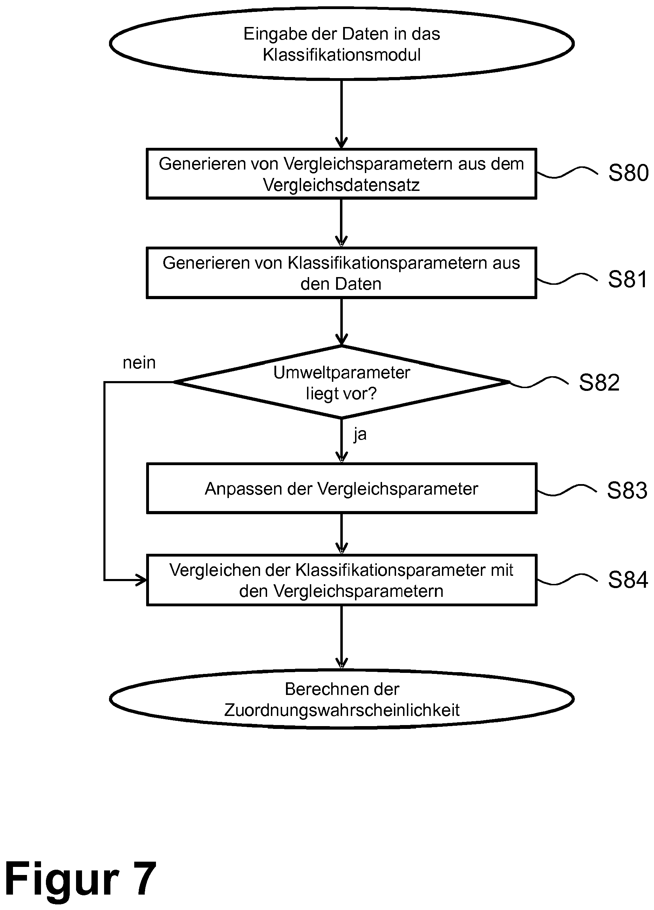

Figur 7 zeigt eine detaillierte Ausführungsform des Schrittes S52 aus Figur 3, dem Auswerten der verhaltensbasierten Daten. Die verhaltensbasierten Daten werden in das Klassifikationsmodul eingegeben. Zunächst werden in Schritt S80 aus dem Vergleichsdatensatz Vergleichsparameter generiert. Dieser Schritt kann nach Ausführungsformen im Anschluss an eine erfolgreiche Authentifizierung erfolgen (siehe insbesondere Figur 3b). In Schritt S81 werden aus den erfassten Daten Klassifikationsparameter analog zu den Vergleichsparametern generiert. Nun liegen Vergleichsparameter und Klassifikationsparameter vor, deren Anzahl identisch ist. In Schritt S82 erfolgt eine Überprüfung, ob ein Umweltparameter vorliegt. Ist dies der Fall folgt Schritt S83. Liegt kein Umweltparameter vor, wird der Schritt S83 übersprungen und das Verfahren fährt mit Schritt S84 fort.

Schritt S83 ist eine beispielhafte Ausführungsform der Korrektur. In Abhängigkeit von dem zumindest einen Umweltparameter werden die Vergleichsparameter modifiziert. Ergibt die Auswertung des Umweltparameters, dass die Korrektur einen vordefinierten Schwellenwert überschreitet oder überschreitet der Umweltparameter selbst einen vordefinierten Schwellenwert wird die verhaltensbasierte Authentifizierung abgebrochen und eine verhaltensunabhängige Authentifizierung als Rückfallposition ausgeführt. In Schritt S84 werden die Klassifikationsparameter mit den eventuell angepassten Vergleichsparametern vergleichen. Die Vergleichsparameter repräsentieren ein quantisiertes Verhalten des registrierten Nutzers, da sie aus verhaltensbasierten Daten generiert wurden, die zu einer erfolgreichen Authentifizierung in der Vergangenheit geführt haben. Die Klassifikationsparameter hingegen repräsentieren den aktuellen Nutzer, da sie aus den aktuell erfassten verhaltensbasierten Daten generiert wurden. Im Grunde wird in Schritt S84 das Verhalten des registrierten Nutzers mit dem Verhalten des aktuellen Nutzers verglichen.

Durch den Vergleich kann eine Zuordnungswahrscheinlichkeit berechnet werden, die aussagt, inwiefern die beiden Verhaltensweisen übereinstimmen. Die einzelnen Parameter können dabei nach Ausführungsformen unterschiedlich gewichtet sein. Liegt die berechnete Zuordnungswahrscheinlichkeit über einer vorgegebenen Schwellenwahrscheinlichkeit, so stimmt das Verhalten des aktuellen Nutzers mit dem Verhalten des registrierten Nutzers zumindest soweit überein, dass das Kommunikationssystem den aktuellen Nutzer als den registrierten Nutzer identifiziert. Der aktuelle Nutzer hat sich damit erfolgreich authentifiziert.

In weiteren Ausführungen können beispielsweise Gewichte der einzelnen Parameter bei der Berechnung der Zuordnungswahrscheinlichkeit durch die Korrektur geändert werden, oder eine Schwellwahrscheinlichkeit für die Authentifizierung des Nutzers erhöht oder gesenkt werden.

### Bezugszeichenliste

- 100:: Kommunikationssystem
- 110:: Sensor
- 114:: Sensor
- 116:: Sensor
- 112:: Anwendung
- 120:: Speicher
- 122:: geschützter Speicherbereich
- 130:: Prozessor
- 150:: Drahtloskommunikationsschnittstelle
- 170:: Zuordnungswahrscheinlichkeit
- 200:: Klassifikationsmodul
- 210:: Musterfunktion
- 220:: Vergleichsdatensatz
- 230:: Vergleichsparameter
- 300:: Netzwerk
- 310:: Messstation
- 312:: Nachrichtenserver
- 400:: Authentifizierungsverfahren
- 500:: verhaltensbasierte Daten
- 502:: Authentifizierungsmerkmale
- 504:: Referenzwert
- 510:: Umweltparameter
- 520:: Klassifikationsparameter
- 540:: Konfidenzwerte
- 600:: Klassifikationsergebnis

## Patentansprüche

1. Verfahren zur Authentifizierung eines aktuellen Nutzers gegenüber einem mobilen, tragbaren Kommunikationssystem (100),
wobei das mobile, tragbare Kommunikationssystem (100) dazu konfiguriert ist, verhaltensbasierte Daten (500) des Nutzers zu erfassen,
wobei die verhaltensbasierten Daten grobmotorische Bewegungsdaten (500) umfassen, wobei das mobile, tragbare Kommunikationssystem (100) mindestens einen ersten Sensor (110) zur Erfassung der grobmotorischen Bewegungsdaten (500) und ein Grobmotorikklassifikationsmodul (200) aufweist,
wobei der erste Sensor (110) zur Erfassung der grobmotorischen Bewegungsdaten (500) einer grobmotorischen Bewegung des aktuellen Nutzers des mobilen, tragbaren Kommunikationssystems (100) ausgebildet ist,
wobei der erste Sensor (110) ein interner Sensor des Kommunikationssystems (100) ist zur Erfassung einer durch eine grobmotorische Bewegung des aktuellen Nutzers des Kommunikationssystems verursachten Bewegung des Kommunikationssystems (100), während der Nutzer das Kommunikationssystem bei sich trägt,
wobei das Grobmotorikklassifikationsmodul (200) zur Erkennung eines generischen grobmotorischen Bewegungsmusters mit Hilfe von Trainingsdatensätzen einer Nutzerkohorte trainiert ist, wobei das Grobmotorikklassifikationsmodul (200) durch den Prozessor (130) des mobilen, tragbaren Kommunikationssystems (100) ausgeführt wird,
wobei das Verfahren eine verhaltensbasierte Authentifizierung durch das mobile, tragbare Kommunikationssystem (100) mit folgenden Schritten umfasst:
• Erfassen von verhaltensbasierten Daten (500) des aktuellen Nutzers,
• Auswerten der erfassten verhaltensbasierten Daten (500),
• Erzeugen eines ersten Authentifizierungssignals, falls die ausgewerteten verhaltensbasierten Daten (500) des aktuellen Nutzers einem charakteristischen Verhalten eines registrierten Nutzers des mobilen, tragbaren Kommunikationssystems (100) entsprechen, wobei das erste Authentifizierungssignal eine erfolgreiche Authentifizierung des aktuellen Nutzers signalisiert,
wobei das Erfassen und Auswerten der verhaltensbasierten Daten (500) umfasst:
a) Wiederholtes Ausführen der folgenden Schritte:
i. Erfassen der grobmotorischen Bewegungsdaten (500) durch den mindestens einen ersten Sensor (110) des mobilen, tragbaren Kommunikationssystems (100), wobei die grobmotorischen Bewegungsdaten (500) die Bewegungsdaten der grobmotorischen Bewegung des aktuellen Nutzers sind,
ii. Eingabe der grobmotorischen Bewegungsdaten (500) in das Grobmotorikklassifikationsmodul (200),
iii. Generieren mindestens eines ersten Konfidenzwertes (540) durch das Grobmotorikklassifikationsmodul (200), wobei der erste Konfidenzwert (540) eine Wahrscheinlichkeit dafür angibt, dass die eingegebenen grobmotorischen Bewegungsdaten (500) Daten einer grobmotorischen Bewegung des registrierten Nutzers sind,
iv. Speichern des mindestens einen ersten Konfidenzwertes (540) in dem Speicher (120) des mobilen, tragbaren Kommunikationssystems (100),
b) auf eine Authentifizierungsanfrage hin, Zugreifen auf den Speicher (120) des mobilen, tragbaren Kommunikationssystems (100), um mindestens einen der gespeicherten ersten Konfidenzwerte (540) aus dem Speicher (120) auszulesen,
c) Generieren des Klassifikationsergebnisses (600) unter Verwendung des mindestens einen ersten Konfidenzwertes (540),
d) Auswerten des mindestens einen ersten Klassifikationsergebnisses (600) gemäß einem vorgegebenen Prüfungskriterium, wobei eine erfolgreiche verhaltensbasierte Authentifizierung des aktuellen Nutzers vorliegt, falls das Prüfungskriterium erfüllt ist,
wobei das mobile, tragbare Kommunikationssystem (100) ferner dazu konfiguriert ist zumindest ein vordefiniertes Authentifizierungsmerkmal (502) des Nutzers zu erfassen, wobei es sich bei dem zumindest einen vordefinierten Authentifizierungsmerkmal (502) um ein Merkmal eines für den registrierten Nutzer charakteristischen Wissens, eines für den registrierten Nutzer charakteristischen Besitzes und/oder einer für den registrierten Nutzer charakteristischen biologischen Eigenschaft handelt,
wobei das Verfahren, falls die ausgewerteten verhaltensbasierten Daten (500) des aktuellen Nutzers keinem charakteristischen Verhalten des registrierten Nutzers entsprechen, als Rückfallposition ferner eine verhaltensunabhängige Authentifizierung auf Basis des zumindest einen vordefinierten Authentifizierungsmerkmals (502) durch das mobile, tragbare Kommunikationssystem (100) mit folgenden Schritten umfasst:
• Erfassen des zumindest einen vordefinierten Authentifizierungsmerkmals (502) des aktuellen Nutzers,
• Auswerten des erfassten vordefinierten Authentifizierungsmerkmals (502),
• Erzeugen eines zweiten Authentifizierungssignals, falls das ausgewertete vordefinierte Authentifizierungsmerkmal (502) des aktuellen Nutzers einem charakteristischen Wissen, Besitz und/oder einer biologischen Eigenschaft des registrierten Nutzers entspricht, wobei das zweite Authentifizierungssignal eine erfolgreiche Authentifizierung des aktuellen Nutzers signalisiert.

2. Verfahren nach Anspruch 1, wobei das mobile, tragbare Kommunikationssystem (100) einen Prozessor (130) und einen zweiten Sensor (114) umfasst, wobei das zumindest eine vordefinierte Authentifizierungsmerkmal (502) des aktuellen Nutzers von dem zweiten Sensor (114) erfasst wird, wobei die verhaltensunabhängige Authentifizierung auf Basis des zumindest einen vordefinierten Authentifizierungsmerkmals (502) ferner folgende durch den Prozessor (130) ausgeführte Schritte umfasst:
• Senden eines Signals an den aktuellen Nutzer, welches eine Aufforderung zum Nachweis des zumindest einen vordefinierten Authentifizierungsmerkmals (502) umfasst,
• Empfang des von dem zweiten Sensor (114) erfassten vordefinierten Authentifizierungsmerkmals (502) des aktuellen Nutzers,
wobei das Auswerten des erfassten vordefinierten Authentifizierungsmerkmals (502) durch den Prozessor (130) erfolgt und umfasst:
• Vergleichen des empfangenen Authentifizierungsmerkmals (502) mit zumindest einem in einem geschützten Speicherbereich (122) eines Speichers (120) des mobilen, tragbaren Kommunikationssystems (100) gespeicherten Referenzwert (504) für das charakteristische Wissen, den charakteristischen Besitz und/oder die charakteristische biologische Eigenschaft des registrierten Nutzers,
wobei eine ausreichende Übereinstimmung zwischen dem empfangenen Authentifizierungsmerkmal (502) und dem Referenzwert (504) Voraussetzung für das Erzeugen des zweiten Authentifizierungssignals ist.

3. Verfahren nach Anspruch 2, wobei das zumindest eine vordefinierte Authentifizierungsmerkmal (502) zum Nachweis eines charakteristischen Wissens eine alphanumerische Zeichenfolge oder ein geometrisches Muster umfasst, zum Nachweis eines charakteristischen Besitzes eine Kennung eines ID-Token und/oder zum Nachweis einer charakteristischen biologischen Eigenschaft einen Messwert der biologischen Eigenschaft.

4. Verfahren nach einem der Ansprüche 2 oder 3, wobei eine ausreichende Übereinstimmung zwischen dem empfangenen Authentifizierungsmerkmal (502) und dem gespeicherten Referenzwert (504) vorliegt, falls der Grad der Übereinstimmung einen vordefinierten Schwellenwert überschreitet, und/oder
wobei eine ausreichende Übereinstimmung zwischen dem empfangenen Authentifizierungsmerkmal (502) und dem gespeicherten Referenzwert (504) vorliegt, falls das empfangene Authentifizierungsmerkmal (502) und der Referenzwert (504) identisch sind, und/oder
wobei eine Mehrzahl von Authentifizierungsmerkmalen (502) erfasst und jeweils mit einem zugehörigen Referenzwert (504) einer Mehrzahl von gespeicherten Referenzwerten (504) verglichen wird, wobei eine ausreichende Übereinstimmung zwischen den empfangenen Authentifizierungsmerkmalen (502) und den Referenzwerten (504) vorliegt, falls eine gewichtete Summe der individuellen Übereinstimmungen zwischen den einzelnen Authentifizierungsmerkmalen (502) und den zugehörigen Referenzwerten (504) einen vordefinierten Schwellenwert überschreitet.

5. Verfahren nach einem der vorherigen Ansprüche, wobei sich der aktuelle Nutzer des mobilen, tragbaren Kommunikationssystems (100) nach einer Erstinbetriebnahme gegenüber dem mobilen, tragbaren Kommunikationssystem (100) unter Verwendung einer verhaltensunabhängigen initialen Authentifizierung auf Basis zumindest eines vordefinierten initialen Authentifizierungsmerkmals authentifizieren muss, wobei es sich bei dem vordefinierten initialen Authentifizierungsmerkmal um ein Merkmal eines für einen berechtigten initialen Nutzer charakteristischen Wissens und/oder charakteristischen Besitzes handelt, wobei in dem geschützten Speicherbereich des Speichers (120) des mobilen, tragbaren Kommunikationssystems (100) zumindest ein initialer Referenzwert für das charakteristische Wissen und/oder den charakteristischen Besitz des berechtigten initialen Nutzers gespeichert ist.

6. Verfahren nach Anspruch 5, wobei das mobile, tragbare Kommunikationssystem (100) nach der Erstinbetriebnahme ein Signal an den aktuellen Nutzer sendet, welches eine Aufforderung zu einer Personalisierung des mobilen, tragbaren Kommunikationssystems (100) durch den aktuellen Nutzer enthält, welche einen Empfang des zumindest einen Referenzwerts (504) für das vordefinierte Authentifizierungsmerkmal (502) durch das mobile, tragbare Kommunikationssystem (100) und ein Speichern des Referenzwerts in dem geschützten Speicherbereich (122) des Speichers (120) umfasst, wobei die verhaltensunabhängige initiale Authentifizierung eine Voraussetzung für die Personalisierung ist.

7. Verfahren nach einem der vorangehenden Ansprüche, wobei das mobile, tragbare Kommunikationssystem (100) ein Anwendungsklassifikationsmodul (200) aufweist,
wobei das Anwendungsklassifikationsmodul (200) von dem Prozessor (130) des mobilen, tragbaren Kommunikationssystems (100) ausgeführt wird,
wobei das Erfassen und Auswerten der verhaltensbasierten Daten (500) ferner umfasst:
a) Wiederholtes Ausführen der folgenden Schritte:
i. Erfassen von Anwendungsdaten (500),
ii. Eingabe der Anwendungsdaten (500) in das Anwendungsklassifikationsmodul (200),
iii. Generieren mindestens eines zweiten Konfidenzwertes (540) durch das Anwendungsklassifikationsmodul (200), wobei der zweite Konfidenzwert (540) eine Wahrscheinlichkeit dafür angibt, dass die eingegebenen Anwendungsdaten (500) Daten eines Anwendungsverhaltens des registrierten Nutzers sind,
iv. Speichern des mindestens einen zweiten Konfidenzwertes (540) im Speicher (120) des mobilen, tragbaren Kommunikationssystems (100),
b) auf eine Authentifizierungsanfrage hin, Zugreifen auf den Speicher (120) des mobilen, tragbaren Kommunikationssystems (100), um mindestens einen der gespeicherten zweiten Konfidenzwerte (540) aus dem Speicher (120) auszulesen,
wobei für die Generierung des Klassifikationsergebnisses (600) ferner der mindestens eine zweite Konfidenzwert (540) verwendet wird.

8. Verfahren nach einem der vorangehenden Ansprüche, wobei das mobile, tragbare Kommunikationssystem (100) ein Feinmotorikklassifikationsmodul (200) aufweist,
wobei das Feinmotorikklassifikationsmodul (200) für eine Klassifikation von feinmotorischen Bewegungsdaten (500) konfiguriert und auf ein Erkennen einer feinmotorischen Bewegung eines registrierten Nutzers trainiert ist, wobei das Feinmotorikklassifikationsmodul (200) von dem Prozessor (130) des mobilen, tragbaren Kommunikationssystems (100) ausgeführt wird,
wobei das Erfassen und Auswerten der verhaltensbasierten Daten (500) ferner umfasst:
a) Wiederholtes Ausführen der folgenden Schritte:
i. Erfassen der feinmotorischen Bewegungsdaten (500),
ii. Eingabe der feinmotorischen Bewegungsdaten (500) in das Feinmotorikklassifikationsmodul (200),
iii. Generieren mindestens eines dritten Konfidenzwertes (540) durch das Feinmotorikklassifikationsmodul (200), wobei der dritte Konfidenzwert (540) eine Wahrscheinlichkeit dafür angibt, dass die eingegebenen feinmotorischen Bewegungsdaten (500) Daten einer feinmotorischen Bewegung des registrierten Nutzers sind,
iv. Speichern des mindestens einen dritten Konfidenzwertes (540) in dem Speicher (120) des mobilen, tragbaren Kommunikationssystems (100),
b) auf eine Authentifizierungsanfrage hin, Zugreifen auf den Speicher (120) des mobilen, tragbaren Kommunikationssystems (100), um mindestens einen der gespeicherten dritten Konfidenzwerte (540) aus dem Speicher (120) auszulesen,
wobei für die Generierung des Klassifikationsergebnisses (600) ferner der mindestens eine dritte Konfidenzwert (540) verwendet wird.

9. Verfahren nach einem der vorangehenden Ansprüche, wobei die verhaltensbasierte Authentifizierung ferner das Trainieren des Grobmotorikklassifikationsmoduls (200) mit den grobmotorischen Bewegungsdaten (500) des aktuellen Nutzers umfasst, wobei das Grobmotorikklassifikationsmodul (200) auf das nutzerspezifische grobmotorische Bewegungsmuster des aktuellen Nutzers unter der Voraussetzung trainiert wird, dass gemäß dem Klassifikationsergebnis (600) der aktuelle Nutzer der im mobilen, tragbaren Kommunikationssystem (100) registrierte Nutzer ist, und/oder
das Trainieren des Anwendungsklassifikationsmoduls (200) mit den Anwendungsdaten (500) des aktuellen Nutzers, wobei das Anwendungsklassifikationsmodul (200) auf das nutzerspezifische Anwendungsverhaltensmuster des aktuellen Nutzers unter der Voraussetzung trainiert wird, dass gemäß dem Klassifikationsergebnis (600) der aktuelle Nutzer der im System registrierte Nutzer ist, und/oder,
das Trainieren des Feinmotorikklassifikationsmoduls (200) mit den feinmotorischen Bewegungsdaten (500) des aktuellen Nutzers, wobei das Feinmotorikklassifikationsmodul (200) auf das nutzerspezifische feinmotorische Bewegungsmuster des aktuellen Nutzers unter der Voraussetzung trainiert wird, dass nach dem Klassifikationsergebnis (600) der aktuelle Nutzer der im System registrierte Nutzer ist.

10. Verfahren nach einem der vorangehenden Ansprüche, wobei in dem Speicher (120) des mobilen, tragbaren Kommunikationssystems (100) mindestens ein erstes Muster in Form einer ersten Musterfunktion (210) und mindestens ein erster Vergleichsdatensatz (220) gespeichert sind,
wobei der erste Vergleichsdatensatz (220) eine Mehrzahl der grobmotorischen Bewegungsdaten (500) umfasst, wobei aus der Mehrzahl der grobmotorischen Bewegungsdaten (500) des ersten Vergleichsdatensatzes (220) mindestens ein erster Vergleichsparameter (230) errechnet wird,
wobei das Grobmotorikklassifikationsmodul (200) auf die Eingabe der grobmotorischen Bewegungsdaten (500) hin die folgenden Schritte im Zuge der Auswertung der verhaltensbasierten Daten (500) ausführt:
a) Vergleichen der erfassten grobmotorischen Bewegungsdaten (500) mit der mindestens einen ersten Musterfunktion (210),
b) Zuordnen der grobmotorischen Bewegungsdaten (500) zu dem der ersten Musterfunktion (210) zugeordneten ersten Muster und erhalten von mindestens einem dem ersten Muster entsprechenden ersten Klassifikationsparameter (230), falls die grobmotorischen Bewegungsdaten (500) dem mindestens einen, ersten Muster zugeordnet werden können,
c) Generieren eines der ersten Konfidenzwerte (540) für jeden ersten Klassifikationsparameter (230) durch einen Vergleich des mindestens einen ersten Klassifikationsparameters (230) mit dem jeweiligen ersten Vergleichsparameter (230) des ersten Vergleichsdatensatzes (220),
und wobei der Schritt des Trainierens ein Hinzufügen der erfassten grobmotorischen Bewegungsdaten (500) zu dem ersten Vergleichsdatensatz (220) umfasst.

11. Verfahren nach Anspruch 7 bis 10, wobei in dem Speicher (120) des mobilen, tragbaren Kommunikationssystems (100) mindestens ein zweites Muster in Form einer zweiten Musterfunktion (210) und mindestens ein zweiter Vergleichsdatensatz (220) gespeichert sind,
wobei der zweite Vergleichsdatensatz (220) eine Mehrzahl der Anwendungsdaten (500) umfasst, wobei aus der Mehrzahl der Anwendungsdaten (500) des zweiten Vergleichsdatensatzes (220) mindestens ein zweiter Vergleichsparameter (230) errechnet wird,
wobei das Anwendungsklassifikationsmodul (200) auf die Eingabe der Anwendungsdaten (500) hin im Zuge der Auswertung der verhaltensbasierten Daten (500) die folgenden Schritte ausführt:
a) Vergleich der erfassten Anwendungsdaten (500) mit der mindestens einen zweiten Musterfunktion (210),
b) Zuordnen der Anwendungsdaten (500) zu dem der zweiten Musterfunktion (210) zugeordneten zweiten Muster und erhalten von mindestens einem dem zweiten Muster entsprechenden zweiten Klassifikationsparameter (520), falls die Anwendungsdaten (500) dem mindestens einen, zweiten Muster zugeordnet werden können,
c) Generieren eines der zweiten Konfidenzwerte (540) für jeden der zweiten Klassifikationsparameter (520) durch einen Vergleich der zweiten Klassifikationsparameter (520) mit dem jeweiligen zweiten Vergleichsparameter (520) des zweiten Vergleichsdatensatzes (220),
und wobei der Schritt des Trainierens ein Hinzufügen der erfassten Anwendungsdaten (500) zu dem zweiten Vergleichsdatensatz (220) umfasst.

12. Verfahren nach einem der Ansprüche 8 bis 11, wobei in dem Speicher (120) des mobilen, tragbaren Kommunikationssystems (100) mindestens ein drittes Muster in Form einer dritten Musterfunktion (210) und mindestens ein dritter Vergleichsdatensatz (220) gespeichert sind,
wobei der dritte Vergleichsdatensatz (220) eine Mehrzahl der feinmotorischen Bewegungsdaten (500) umfasst, wobei aus der Mehrzahl der feinmotorischen Bewegungsdaten (500) des dritten Vergleichsdatensatzes (220) mindestens ein dritter Vergleichsparameter (230) errechnet wird,
wobei das Feinmotorikklassifikationsmodul (200) auf die Eingabe der feinmotorischen Bewegungsdaten (500) hin im Zuge der Auswertung der verhaltensbasierten Daten (500) die folgenden Schritte ausführt:
a) Vergleich der erfassten feinmotorischen Bewegungsdaten (500) mit der mindestens einen dritten Musterfunktion (210),
b) Zuordnen der feinmotorischen Bewegungsdaten (500) zu dem der dritten Musterfunktion (210) zugeordneten dritten Muster und erhalten von mindestens einem dem dritten Muster entsprechenden dritten Klassifikationsparameter (520), falls die feinmotorischen Bewegungsdaten (500) dem mindestens einen, dritten Muster zugeordnet werden können,
c) Generieren eines der dritten Konfidenzwerte (540) für jeden der dritten Klassifikationsparameter (520) durch einen Vergleich der dritten Klassifikationsparameter (520) mit dem jeweiligen dritten Vergleichsparameter (520) des dritten Vergleichsdatensatzes (220),
und wobei der Schritt des Trainierens ein Hinzufügen der erfassten feinmotorischen Bewegungsdaten (500) zu dem dritten Vergleichsdatensatz (220) umfasst.

13. Verfahren nach einem der vorangehenden Ansprüche, wobei das Prüfungskriterium erfüllt ist, falls:
- das mindestens eine Klassifikationsergebnis (600) einen durch das Prüfungskriterium vorgegebenen Schwellenwert überschreitet und/oder
- ein durch das Prüfungskriterium vorgegebenes Höchstalter des mindestens einen Klassifikationsergebnisses (600) nicht überschritten wird und/oder
- eine Mindestanzahl an Klassifikationsergebnissen (600) vorliegt, welche den Schwellenwert überschreitet.

14. Mobiles, tragbares Kommunikationssystem (100) zur verhaltensbasierten Authentifizierung (400) eines aktuellen Nutzers gegenüber einem mobilen, tragbaren Kommunikationssystem (100),
wobei das mobile, tragbare Kommunikationssystem (100) einen Prozessor (130), einen Speicher (120) sowie einen ersten und einen zweiten Sensor (110, 114) umfasst, wobei in dem Speicher (120) maschinenlesbare Programminstruktionen gespeichert sind,
wobei das mobile, tragbare Kommunikationssystem (100) dazu konfiguriert ist, verhaltensbasierte Daten (500) des Nutzers zu erfassen,
wobei die verhaltensbasierten Daten grobmotorische Bewegungsdaten (500) umfassen, wobei das mobile, tragbare Kommunikationssystem (100) ein Grobmotorikklassifikationsmodul (200) aufweist,
wobei der erste Sensor (110) zur Erfassung der grobmotorischen Bewegungsdaten (500) einer grobmotorischen Bewegung des aktuellen Nutzers des mobilen, tragbaren Kommunikationssystems (100) ausgebildet ist,
wobei der erste Sensor (110) ein interner Sensor des Kommunikationssystems (100) ist zur Erfassung einer durch eine grobmotorische Bewegung des aktuellen Nutzers des Kommunikationssystems verursachten Bewegung des Kommunikationssystems (100), während der Nutzer das Kommunikationssystem bei sich trägt,
wobei das Grobmotorikklassifikationsmodul (200) zur Erkennung eines generischen grobmotorischen Bewegungsmusters mit Hilfe von Trainingsdatensätzen einer Nutzerkohorte trainiert ist, wobei das Grobmotorikklassifikationsmodul (200) durch den Prozessor (130) des mobilen, tragbaren Kommunikationssystems (100) ausgeführt wird,
und ein Ausführen der Programminstruktion durch den Prozessor (130) den Prozessor (130) dazu veranlasst das mobile, tragbare Kommunikationssystem (100) so zu steuern, dass das mobile, tragbare Kommunikationssystem (100) ein Verfahren zur verhaltensbasierten Authentifizierung des Nutzers mit folgenden Schritten ausführt:
• Erfassen von verhaltensbasierten Daten (500) des aktuellen Nutzers unter Verwendung des ersten Sensors (110),
• Auswerten der erfassten verhaltensbasierten Daten (500),
• Erzeugen eines ersten Authentifizierungssignals, falls die ausgewerteten verhaltensbasierten Daten (500) des aktuellen Nutzers einem charakteristischen Verhalten eines registrierten Nutzers des mobilen, tragbaren Kommunikationssystems (100) entsprechen, wobei das erste Authentifizierungssignal eine erfolgreiche Authentifizierung des aktuellen Nutzers signalisiert,
wobei das Erfassen und Auswerten der verhaltensbasierten Daten (500) umfasst:
a) Wiederholtes Ausführen der folgenden Schritte:
i. Erfassen der grobmotorischen Bewegungsdaten (500) durch den mindestens einen ersten Sensor (110) des mobilen, tragbaren Kommunikationssystems (100), wobei die grobmotorischen Bewegungsdaten (500) die Bewegungsdaten der grobmotorischen Bewegung des aktuellen Nutzers sind,
ii. Eingabe der grobmotorischen Bewegungsdaten (500) in das Grobmotorikklassifikationsmodul (200),
iii. Generieren mindestens eines ersten Konfidenzwertes (540) durch das Grobmotorikklassifikationsmodul (200), wobei der erste Konfidenzwert (540) eine Wahrscheinlichkeit dafür angibt, dass die eingegebenen grobmotorischen Bewegungsdaten (500) Daten einer grobmotorischen Bewegung des registrierten Nutzers sind,
iv. Speichern des mindestens einen ersten Konfidenzwertes (540) in dem Speicher (120) des mobilen, tragbaren Kommunikationssystems (100),
b) auf eine Authentifizierungsanfrage hin, Zugreifen auf den Speicher (120) des mobilen, tragbaren Kommunikationssystems (100), um mindestens einen der gespeicherten ersten Konfidenzwerte (540) aus dem Speicher (120) auszulesen,
c) Generieren des Klassifikationsergebnisses (600) unter Verwendung des mindestens einen ersten Konfidenzwertes (540),
d) Auswerten des mindestens einen ersten Klassifikationsergebnisses (600) gemäß einem vorgegebenen Prüfungskriterium, wobei eine erfolgreiche verhaltensbasierte Authentifizierung des aktuellen Nutzers vorliegt, falls das Prüfungskriterium erfüllt ist,
wobei ein Ausführen der Programminstruktion durch den Prozessor (130) den Prozessor (130) ferner dazu veranlasst das mobile, tragbare Kommunikationssystem (100) so zu steuern, dass das mobile, tragbare Kommunikationssystem (100) ein Verfahren zur verhaltensunabhängigen Authentifizierung des Nutzers unter Verwendung zumindest eines vordefinierten Authentifizierungsmerkmals (502) des Nutzers ausführt, wobei es sich bei dem zumindest einen vordefinierten Authentifizierungsmerkmal (502) um ein Merkmal eines für den registrierten Nutzer charakteristischen Wissens, eines für den registrierten Nutzer charakteristischen Besitzes und/oder einer für den registrierten Nutzer charakteristischen biologischen Eigenschaft handelt,
wobei die verhaltensunabhängige Authentifizierung auf Basis des zumindest einen vordefinierten Authentifizierungsmerkmals (502) als Rückfallposition, falls die ausgewerteten verhaltensbasierten Daten (500) des aktuellen Nutzers keinem charakteristischen Verhalten des registrierten Nutzers entsprechen, die folgenden Schritte umfasst:
• Erfassen des zumindest einen vordefinierten Authentifizierungsmerkmals (502) des aktuellen Nutzers,
• Auswerten des erfassten vordefinierten Authentifizierungsmerkmals (502),
• Erzeugen eines zweiten Authentifizierungssignals, falls das ausgewertete vordefinierte Authentifizierungsmerkmal (502) des aktuellen Nutzers einem charakteristischen Wissen, Besitz und/oder einer biologischen Eigenschaft des registrierten Nutzers entspricht, wobei das zweite Authentifizierungssignal eine erfolgreiche Authentifizierung des aktuellen Nutzers signalisiert.

## Claims

1. Method for authenticating a current user to a mobile, portable communication system (100),
wherein the mobile, portable communication system (100) is configured to capture behavior-based data (500) of the user,
wherein the behavior-based data comprises gross motor movement data (500), wherein the mobile, portable communication system (100) comprises at least one first sensor (110) for capturing the gross motor movement data (500) and a gross motor classification module (200),
wherein the first sensor (110) is configured to capture the gross motor movement data (500) of a gross motor movement of the current user of the mobile, portable communication system (100),
wherein the first sensor (110) is an internal sensor of the communication system (100) for capturing a movement of the communication system (100) caused by a gross motor movement of the current user of the communication system while the user is carrying the communication system,
wherein the gross motor classification module (200) is trained to recognize a generic gross motor movement pattern using training data sets from a user cohort, wherein the gross motor classification module (200) is executed by the processor (130) of the mobile, portable communication system (100),
wherein the method comprises behavior-based authentication by the mobile, portable communication system (100) comprising the steps of:
• capturing behavior-based data (500) of the current user,
• evaluating the captured behavior-based data (500),
• generating a first authentication signal if the evaluated behavior-based data (500) of the current user corresponds to behavior characteristic of a registered user of the mobile, portable communication system (100), wherein the first authentication signal signals successful authentication of the current user,
wherein the capturing and evaluating of the behavior-based data (500) comprise:
a) repeatedly executing the following steps:
i. capturing the gross motor movement data (500) by the at least one first sensor (110) of the mobile, portable communication system (100), wherein the gross motor movement data (500) is the movement data of the gross motor movement of the current user,
ii. inputting the gross motor movement data (500) into the gross motor classification module (200),
iii. generating at least one first confidence value (540) by the gross motor classification module (200), wherein the first confidence value (540) indicates a probability that the input gross motor movement data (500) is data of a gross motor movement of the registered user,
iv. storing the at least one first confidence value (540) in the memory (120) of the mobile, portable communication system (100),
b) in response to an authentication request, accessing the memory (120) of the mobile, portable communication system (100) to read at least one of the stored first confidence values (540) from the memory (120),
c) generating the classification result (600) using the at least one first confidence value (540),
d) evaluating the at least one first classification result (600) according to a predetermined verification criterion, wherein successful behavior-based authentication of the current user is given if the verification criterion is met,
wherein the mobile, portable communication system (100) is further configured to capture at least one predefined authentication feature (502) of the user,
wherein the at least one predefined authentication feature (502) is a feature of knowledge characteristic of the registered user, a feature of possession characteristic of the registered user, and/or a feature of a biological feature characteristic of the registered user,
wherein, if the evaluated behavior-based data (500) of the current user does not correspond to any behavior characteristic of the registered user, the method further comprises, as a fallback, a behavior-independent authentication based on the at least one predefined authentication feature (502) by the mobile, portable communication system (100), comprising the following steps:
• capturing the at least one predefined authentication feature (502) of the current user,
• evaluating the acquired predefined authentication feature (502),
• generating a second authentication signal if the evaluated predefined authentication feature (502) of the current user corresponds to a knowledge, possession, and/or biological feature characteristic of the registered user, wherein the second authentication signal signals successful authentication of the current user.

2. Method according to claim 1, wherein the mobile, portable communication system (100) comprises a processor (130) and a second sensor (114), wherein the at least one predefined authentication feature (502) of the current user is captured by the second sensor (114), wherein the behavior-independent authentication based on the at least one predefined authentication feature (502) further comprises the following steps performed by the processor (130):
• sending a signal to the current user, which comprises a request to provide the at least one predefined authentication feature (502),
• receiving the predefined authentication feature (502) of the current user captured by the second sensor (114),
wherein the evaluating of the captured predefined authentication feature (502) is performed by the processor (130) and comprises:
• comparing the received authentication feature (502) with at least one reference value (504) stored in a secured memory area (122) of a memory (120) of the mobile, portable communication system (100) for the knowledge, possession, and/or biological feature characteristic of the registered user,
wherein a sufficient match between the received authentication feature (502) and the reference value (504) is a prerequisite for generating the second authentication signal.

3. Method according to claim 2, wherein the at least one predefined authentication feature (502) comprises an alphanumeric character string or a geometric pattern for verifying characteristic knowledge, an identifier of an ID token for verifying characteristic possession, and/or a measured value of the biological feature for verifying a characteristic biological feature.

4. Method according to any of claims 2 or 3, wherein there is a sufficient match between the received authentication feature (502) and the stored reference value (504) if the degree of matching exceeds a predefined threshold value, and/or
wherein there is a sufficient match between the received authentication feature (502) and the stored reference value (504) if the received authentication feature (502) and the reference value (504) are identical, and/or
wherein a plurality of authentication features (502) is acquired and each compared with an associated reference value (504) from a plurality of stored reference values (504), wherein a sufficient match between the received authentication features (502) and the reference values (504) is given, if a weighted sum of the individual matches between the individual authentication features (502) and the associated reference values (504) exceeds a predefined threshold value.

5. Method according to any of the previous claims, wherein the current user of the mobile, portable communication system (100) must authenticate to the mobile, portable communication system (100) after an initial activation using a behavior-independent initial authentication based on at least one predefined initial authentication feature, wherein the predefined initial authentication feature is a feature of knowledge and/or possession characteristic of an authorized initial user, wherein at least one initial reference value for the knowledge and/or possession characteristic of the authorized initial user is stored in the secured memory area of the memory (120) of the mobile, portable communication system (100).

6. Method according to claim 5, wherein the mobile, portable communication system (100) sends a signal to the current user after the initial activation, which comprises a request for the current user to personalize the mobile, portable communication system (100), which comprises receiving the at least one reference value (504) for the predefined authentication feature (502) by the mobile, portable communication system (100) and storing the reference value in the secured memory area (122) of the memory (120), wherein the behavior-independent initial authentication is a prerequisite for the personalization.

7. Method according to any of the previous claims, wherein the mobile, portable communication system (100) comprises an application classification module (200)
wherein the application classification module (200) is executed by the processor (130) of the mobile, portable communication system (100),
wherein the capturing and evaluating of the behavior-based data (500) further comprise:
a) repeatedly executing the following steps:
i. capturing application data (500),
ii. inputting the application data (500) into the application classification module (200),
iii. generating at least one second confidence value (540) by the application classification module (200), wherein the second confidence value (540) indicates a probability that the input application data (500) is data of an application related behavior of the registered user,
iv. storing the at least one second confidence value (540) in the memory (120) of the mobile, portable communication system (100),
b) in response to an authentication request, accessing the memory (120) of the mobile, portable communication system (100) to read at least one of the stored second confidence values (540) from the memory (120),
wherein the at least one second confidence value (540) is further used to generate the classification result (600).

8. Method according to any of the previous claims, wherein the mobile, portable communication system (100) has a fine motor classification module (200),
wherein the fine motor classification module (200) is configured for classification of fine motor movement data (500) and is trained to recognize a fine motor movement of a registered user, wherein the fine motor classification module (200) is executed by the processor (130) of the mobile, portable communication system (100),
wherein the capturing and evaluating of the behavior-based data (500) further comprises:
a) repeatedly executing the following steps:
i. capturing the fine motor movement data (500),
ii. inputting the fine motor movement data (500) into the fine motor classification module (200),
iii. generating at least one third confidence value (540) by the fine motor classification module (200), wherein the third confidence value (540) indicates a probability that the input fine motor movement data (500) is data of a fine motor movement of the registered user,
iv. storing the at least one third confidence value (540) in the memory (120) of the mobile, portable communication system (100),
b) in response to an authentication request, accessing the memory (120) of the mobile, portable communication system (100) to read at least one of the stored third confidence values (540) from the memory (120),
wherein the at least one third confidence value (540) is further used to generate the classification result (600).

9. Method according to any of the previous claims, wherein the behavior-based authentication further comprises training the gross motor classification module (200) with the gross motor movement data (500) of the current user, wherein the gross motor classification module (200) is trained on the user-specific gross motor movement pattern of the current user, provided that, according to the classification result (600), the current user is the user registered in the mobile, portable communication system (100), and/or
training the application classification module (200) with the application data (500) of the current user, wherein the application classification module (200) is trained on the user-specific application behavior pattern of the current user, provided that, according to the classification result (600), the current user is the user registered in the system, and/or
training the fine motor classification module (200) with the fine motor movement data (500) of the current user, wherein the fine motor classification module (200) is trained on the user-specific fine motor movement pattern of the current user, provided that, according to the classification result (600), the current user is the user registered in the system.

10. Method according to any of the previous claims, wherein at least one first pattern in the form of a first pattern function (210) and at least one first comparison data set (220) are stored in the memory (120) of the mobile, portable communication system (100),
wherein the first comparison data set (220) comprises a plurality of gross motor movement data (500), wherein at least one first comparison parameter (230) is calculated from the plurality of gross motor movement data (500) of the first comparison data set (220),
wherein the gross motor classification module (200) performs the following steps in the course of evaluating the behavior-based data (500) in response to the input of the gross motor movement data (500):
a) comparing the acquired gross motor movement data (500) with the at least one first pattern function (210),
b) assigning the gross motor movement data (500) to the first pattern assigned to the first pattern function (210) and obtaining at least one first classification parameter (230) corresponding to the first pattern if the gross motor movement data (500) can be assigned to the at least one first pattern,
c) generating one of the first confidence values (540) for each first classification parameter (230) by comparing the at least one first classification parameter (230) with the respective first comparison parameter (230) of the first comparison data set (220),
and wherein the step of training comprises adding the acquired gross motor movement data (500) to the first comparison data set (220).

11. Method according to any of claims 7 to 10, wherein at least one second pattern in the form of a second pattern function (210) and at least one second comparison data set (220) are stored in the memory (120) of the mobile, portable communication system (100),
wherein the second comparison data set (220) comprises a plurality of application data (500), wherein at least one second comparison parameter (230) is calculated from the plurality of application data (500) of the second comparison data set (220),
wherein the application classification module (200) performs the following steps in response to the input of the application data (500) in the course of evaluating the behavior-based data (500):
a) comparing the acquired application data (500) with the at least one second pattern function (210),
b) assigning the application data (500) to the second pattern assigned to the second pattern function (210) and obtaining at least one second classification parameter (520) corresponding to the second pattern if the application data (500) can be assigned to the at least one second pattern,
c) generating one of the second confidence values (540) for each of the second classification parameters (520) by comparing the second classification parameters (520) with the respective second comparison parameter (520) of the second comparison data set (220),
and wherein the step of training comprises adding the captured application data (500) to the second comparison data set (220).

12. Method according to any of claims 8 to 11, wherein at least one third pattern in the form of a third pattern function (210) and at least one third comparison data set (220) are stored in the memory (120) of the mobile, portable communication system (100),
wherein the third comparison data set (220) comprises a plurality of fine motor movement data (500), wherein at least one third comparison parameter (230) is calculated from the plurality of fine motor movement data (500) of the third comparison data set (220),
wherein the fine motor classification module (200) performs the following steps in response to the input of the fine motor movement data (500) in the course of evaluating the behavior-based data (500):
a) comparing the acquired fine motor movement data (500) with the at least one third pattern function (210),
b) assigning the fine motor movement data (500) to the third pattern assigned to the third pattern function (210) and obtaining at least one third classification parameter (520) corresponding to the third pattern if the fine motor movement data (500) can be assigned to the at least one third pattern,
c) generating one of the third confidence values (540) for each of the third classification parameters (520) by comparing the third classification parameters (520) with the respective third comparison parameter (520) of the third comparison data set (220),
and wherein the step of training comprises adding the acquired fine motor movement data (500) to the third comparison data set (220).

13. Method according to any of the previous claims, wherein the verification criterion is satisfied if:
- the at least one classification result (600) exceeds a threshold value specified by the verification criterion; and/or
- a maximum age of the at least one classification result (600) specified by the verification criterion is not exceeded; and/or
- there is a minimum number of classification results (600) that exceed the threshold value.

14. Mobile, portable communication system (100) for behavior-based authentication (400) of a current user to a mobile, portable communication system (100),
wherein the mobile, portable communication system (100) comprises a processor (130), a memory (120), and a first and a second sensor (110, 114), wherein machine-readable program instructions are stored in the memory (120),
wherein the mobile, portable communication system (100) is configured to capture behavior-based data (500) of the user,
wherein the behavior-based data comprises gross motor movement data (500), wherein the mobile, portable communication system (100) comprises a gross motor classification module (200),
wherein the first sensor (110) is configured to capture the gross motor movement data (500) of a gross motor movement of the current user of the mobile, portable communication system (100),
wherein the first sensor (110) is an internal sensor of the communication system (100) for capturing movement of the communication system (100) caused by a gross motor movement of the current user of the communication system while the user is carrying the communication system,
wherein the gross motor classification module (200) is trained to recognize a generic gross motor movement pattern using training data sets from a user cohort, wherein the gross motor classification module (200) is executed by the processor (130) of the mobile, portable communication system (100),
and executing the program instruction by the processor (130) causes the processor (130) to control the mobile, portable communication system (100) such that the mobile, portable communication system (100) performs a method for behavior-based authentication of the user, comprising the following steps:
• capturing behavior-based data (500) of the current user using the first sensor (110),
• evaluating the captured behavior-based data (500),
• generating a first authentication signal if the evaluated behavior-based data (500) of the current user corresponds to a behavior characteristic of a registered user of the mobile, portable communication system (100), wherein the first authentication signal signals successful authentication of the current user,
wherein the capturing and evaluating of the behavior-based data (500) comprises:
a) repeatedly executing the following steps:
i. capturing the gross motor movement data (500) by the at least one first sensor (110) of the mobile, portable communication system (100), wherein the gross motor movement data (500) is the movement data of the gross motor movement of the current user,
ii. inputting the gross motor movement data (500) into the gross motor classification module (200),
iii. generating at least one first confidence value (540) by the gross motor classification module (200), wherein the first confidence value (540) indicates a probability that the input gross motor movement data (500) is data of a gross motor movement of the registered user,
iv. storing the at least one first confidence value (540) in the memory (120) of the mobile, portable communication system (100),
b) in response to an authentication request, accessing the memory (120) of the mobile, portable communication system (100) to read at least one of the stored first confidence values (540) from the memory (120),
c) generating the classification result (600) using the at least one first confidence value (540),
d) evaluating the at least one first classification result (600) according to a predetermined verification criterion, wherein successful behavior-based authentication of the current user is given if the verification criterion is met,
wherein executing the program instruction by the processor (130) further causes the processor (130) to control the mobile, portable communication system (100) such that the mobile, portable communication system (100) performs a method for a behavior-independent authentication of the user using at least one predefined authentication feature (502) of the user, wherein the at least one predefined authentication feature (502) is a feature of knowledge characteristic of the registered user, a feature of possession characteristic of the registered user, and/or a feature of a biological feature characteristic of the registered user,
wherein the behavior-independent authentication based on the at least one predefined authentication feature (502) as a fallback, if the evaluated behavior-based data (500) of the current user does not correspond to any behavior characteristic of the registered user, comprises the following steps:
• capturing the at least one predefined authentication feature (502) of the current user,
• evaluating the acquired predefined authentication feature (502),
• generating a second authentication signal if the evaluated predefined authentication feature (502) of the current user corresponds to knowledge, possession, and/or a biological feature characteristic of the registered user, wherein the second authentication signal signals successful authentication of the current user.

## Revendications

1. Procédé d'authentification d'un utilisateur actuel vis-à-vis d'un système de communication mobile et portable (100),
le système de communication mobile et portable (100) étant configuré pour collecter des données comportementales (500) de l'utilisateur,
les données comportementales comprenant des données de mouvement moteur grossier (500),
le système de communication mobile et portable (100) comportant au moins un premier capteur (110) destiné à collecter les données de mouvement moteur grossier (500) et un module de classification de motricité globale (200),
le premier capteur (110) étant configuré pour collecter les données de mouvement moteur grossier (500) d'un mouvement moteur grossier de l'utilisateur actuel du système de communication mobile et portable (100),
le premier capteur (110) étant un capteur interne du système de communication (100) destiné à détecter un mouvement du système de communication (100) provoqué par un mouvement moteur grossier de l'utilisateur actuel du système de communication, pendant que l'utilisateur porte le système de communication sur lui,
le module de classification de motricité globale (200) étant entraîné pour reconnaître un modèle générique de mouvements moteurs grossiers à l'aide d'ensembles de données d'entraînement d'une cohorte d'utilisateurs, le module de classification de motricité globale (200) étant exécuté par le processeur (130) du système de communication mobile et portable (100),
le procédé comprenant une authentification basée sur le comportement par le système de communication mobile et portable (100), comprenant les étapes consistant à :
collecter des données comportementales (500) de l'utilisateur actuel,
évaluer les données comportementales collectées (500),
générer un premier signal d'authentification lorsque les données comportementales évaluées (500) de l'utilisateur actuel correspondent à un comportement caractéristique d'un utilisateur enregistré du système de communication mobile et portable (100), le premier signal d'authentification signalant une authentification réussie de l'utilisateur actuel,
la collecte et l'évaluation des données comportementales (500) comprenant :
a) exécuter de manière répétée les étapes consistant à :
i. collecter les données de mouvement moteur grossier (500) au moyen du au moins un premier capteur (110) du système de communication mobile et portable (100), les données de mouvement moteur grossier (500) étant des données de mouvement du mouvement moteur grossier de l'utilisateur actuel,
ii. introduire les données de mouvement moteur grossier (500) dans le module de classification de motricité globale (200),
iii. générer au moins une première valeur de confiance (540) au moyen du module de classification de motricité globale (200), la première valeur de confiance (540) indiquant une probabilité selon laquelle les données de mouvement moteur grossier (500) introduites sont des données d'un mouvement moteur grossier de l'utilisateur enregistré,
iv. stocker la au moins une première valeur de confiance (540) dans la mémoire (120) du système de communication mobile et portable (100),
b) en réponse à une demande d'authentification, accéder à la mémoire (120) du système de communication mobile et portable (100) afin de lire au moins une des premières valeurs de confiance (540) stockées depuis la mémoire (120),
c) générer le résultat de classification (600) en utilisant la au moins une première valeur de confiance (540),
d) évaluer le au moins un premier résultat de classification (600) selon un critère de vérification prédéfini, une authentification basée sur le comportement réussie de l'utilisateur actuel étant obtenue lorsque le critère de vérification est rempli,
le système de communication mobile et portable (100) étant en outre configuré pour collecter au moins une caractéristique d'authentification prédéfinie (502) de l'utilisateur, la au moins une caractéristique d'authentification prédéfinie (502) étant une caractéristique d'une connaissance caractéristique de l'utilisateur enregistré, d'une possession caractéristique de l'utilisateur enregistré et/ou d'une caractéristique biologique caractéristique de l'utilisateur enregistré,
et le procédé comprenant en outre, lorsque les données comportementales évaluées (500) de l'utilisateur actuel ne correspondent pas à un comportement caractéristique de l'utilisateur enregistré, à titre de solution de repli, une authentification indépendante du comportement sur la base de la au moins une caractéristique d'authentification prédéfinie (502) par le système de communication mobile et portable (100), comprenant les étapes consistant à :
collecter la au moins une caractéristique d'authentification prédéfinie (502) de l'utilisateur actuel,
évaluer la caractéristique d'authentification prédéfinie collectée (502),
générer un deuxième signal d'authentification lorsque la caractéristique d'authentification prédéfinie évaluée (502) de l'utilisateur actuel correspond à une connaissance caractéristique, à une possession caractéristique et/ou à une caractéristique biologique caractéristique de l'utilisateur enregistré, le deuxième signal d'authentification signalant une authentification réussie de l'utilisateur actuel.

2. Procédé selon la revendication 1, dans lequel le système de communication mobile et portable (100) comprend un processeur (130) et un deuxième capteur (114), la au moins une caractéristique d'authentification prédéfinie (502) de l'utilisateur actuel étant collectée par le deuxième capteur (114),
l'authentification indépendante du comportement sur la base de la au moins une caractéristique d'authentification prédéfinie (502) comprenant en outre les étapes suivantes exécutées par le processeur (130) :
envoyer à l'utilisateur actuel un signal comprenant une invitation à fournir une preuve de la au moins une caractéristique d'authentification prédéfinie (502),
recevoir la caractéristique d'authentification prédéfinie (502) de l'utilisateur actuel collectée par le deuxième capteur (114),
l'évaluation de la caractéristique d'authentification prédéfinie collectée (502) étant effectuée par le processeur (130) et comprenant :
comparer la caractéristique d'authentification reçue (502) avec au moins une valeur de référence (504) stockée dans une zone mémoire protégée (122) d'une mémoire (120) du système de communication mobile et portable (100), pour la connaissance caractéristique, la possession caractéristique et/ou la caractéristique biologique caractéristique de l'utilisateur enregistré,
une correspondance suffisante entre la caractéristique d'authentification reçue (502) et la valeur de référence (504) constituant une condition préalable à la génération du deuxième signal d'authentification.

3. Procédé selon la revendication 2, dans lequel la au moins une caractéristique d'authentification prédéfinie (502) comprend :
pour prouver une connaissance caractéristique, une chaîne de caractères alphanumériques ou un motif géométrique,
pour prouver une possession caractéristique, un identifiant d'un jeton d'identification, et/ou
pour prouver une caractéristique biologique caractéristique, une valeur mesurée de la caractéristique biologique.

4. Procédé selon l'une des revendications 2 ou 3, dans lequel une correspondance suffisante entre la caractéristique d'authentification reçue (502) et la valeur de référence stockée (504) est obtenue lorsque le degré de correspondance dépasse une valeur seuil prédéfinie, et/ou
dans lequel une correspondance suffisante entre la caractéristique d'authentification reçue (502) et la valeur de référence stockée (504) est obtenue lorsque la caractéristique d'authentification reçue (502) et la valeur de référence (504) sont identiques, et/ou
dans lequel une pluralité de caractéristiques d'authentification (502) est collectée et comparée chacune avec une valeur de référence associée (504) parmi une pluralité de valeurs de référence stockées (504), une correspondance suffisante entre les caractéristiques d'authentification reçues (502) et les valeurs de référence (504) étant obtenue lorsque une somme pondérée des correspondances individuelles entre les caractéristiques d'authentification individuelles (502) et les valeurs de référence associées (504) dépasse une valeur seuil prédéfinie.

5. Procédé selon l'une des revendications précédentes, dans lequel l'utilisateur actuel du système de communication mobile et portable (100), après une première mise en service, doit s'authentifier vis-à-vis du système de communication mobile et portable (100) au moyen d'une authentification initiale indépendante du comportement sur la base d'au moins une caractéristique d'authentification initiale prédéfinie,
la caractéristique d'authentification initiale prédéfinie étant une caractéristique d'une connaissance caractéristique et/ou d'une possession caractéristique d'un utilisateur initial autorisé,
et dans lequel au moins une valeur de référence initiale pour la connaissance caractéristique et/ou la possession caractéristique de l'utilisateur initial autorisé est stockée dans la zone mémoire protégée de la mémoire (120) du système de communication mobile et portable (100).

6. Procédé selon la revendication 5, dans lequel le système de communication mobile et portable (100), après la première mise en service, envoie un signal à l'utilisateur actuel, ledit signal comprenant une invitation à personnaliser le système de communication mobile et portable (100) par l'utilisateur actuel,
la personnalisation comprenant une réception, par le système de communication mobile et portable (100), de la au moins une valeur de référence (504) pour la caractéristique d'authentification prédéfinie (502) et un stockage de la valeur de référence dans la zone mémoire protégée (122) de la mémoire (120),
l'authentification initiale indépendante du comportement constituant une condition préalable à la personnalisation.

7. Procédé selon l'une des revendications précédentes, dans lequel le système de communication mobile et portable (100) comporte un module de classification d'applications (200),
le module de classification d'applications (200) étant exécuté par le processeur (130) du système de communication mobile et portable (100),
la collecte et l'évaluation des données comportementales (500) comprenant en outre :
a) exécuter de manière répétée les étapes consistant à :
i. collecter des données d'application (500),
ii. introduire les données d'application (500) dans le module de classification d'applications (200),
iii. générer au moins une deuxième valeur de confiance (540) au moyen du module de classification d'applications (200), la deuxième valeur de confiance (540) indiquant une probabilité selon laquelle les données d'application introduites (500) sont des données d'un comportement d'application de l'utilisateur enregistré,
iv. stocker la au moins une deuxième valeur de confiance (540) dans la mémoire (120) du système de communication mobile et portable (100),
b) en réponse à une demande d'authentification, accéder à la mémoire (120) du système de communication mobile et portable (100) afin de lire au moins une des deuxièmes valeurs de confiance (540) stockées depuis la mémoire (120),
la au moins une deuxième valeur de confiance (540) étant en outre utilisée pour générer le résultat de classification (600).

8. Procédé selon l'une des revendications précédentes, dans lequel le système de communication mobile et portable (100) comporte un module de classification de motricité fine (200),
le module de classification de motricité fine (200) étant configuré pour classer des données de mouvement de motricité fine (500) et étant entraîné pour reconnaître un mouvement de motricité fine d'un utilisateur enregistré, le module de classification de motricité fine (200) étant exécuté par le processeur (130) du système de communication mobile et portable (100),
la collecte et l'évaluation des données comportementales (500) comprenant en outre :
a) exécuter de manière répétée les étapes consistant à :
i. collecter des données de mouvement de motricité fine (500),
ii. introduire les données de mouvement de motricité fine (500) dans le module de classification de motricité fine (200),
iii. générer au moins une troisième valeur de confiance (540) au moyen du module de classification de motricité fine (200), la troisième valeur de confiance (540) indiquant une probabilité selon laquelle les données de mouvement de motricité fine introduites (500) sont des données d'un mouvement de motricité fine de l'utilisateur enregistré,
iv. stocker la au moins une troisième valeur de confiance (540) dans la mémoire (120) du système de communication mobile et portable (100),
b) en réponse à une demande d'authentification, accéder à la mémoire (120) du système de communication mobile et portable (100) afin de lire au moins une des troisièmes valeurs de confiance (540) stockées depuis la mémoire (120),
la au moins une troisième valeur de confiance (540) étant en outre utilisée pour générer le résultat de classification (600).

9. Procédé selon l'une des revendications précédentes, dans lequel l'authentification basée sur le comportement comprend en outre :
l'entraînement du module de classification de motricité globale (200) au moyen des données de mouvement moteur grossier (500) de l'utilisateur actuel, le module de classification de motricité globale (200) étant entraîné sur le modèle de mouvement moteur grossier spécifique à l'utilisateur actuel sous la condition que, selon le résultat de classification (600), l'utilisateur actuel est l'utilisateur enregistré dans le système de communication mobile et portable (100), et/ou
l'entraînement du module de classification d'applications (200) au moyen des données d'application (500) de l'utilisateur actuel, le module de classification d'applications (200) étant entraîné sur le modèle de comportement d'application spécifique à l'utilisateur actuel sous la condition que, selon le résultat de classification (600), l'utilisateur actuel est l'utilisateur enregistré dans le système, et/ou
l'entraînement du module de classification de motricité fine (200) au moyen des données de mouvement de motricité fine (500) de l'utilisateur actuel, le module de classification de motricité fine (200) étant entraîné sur le modèle de mouvement de motricité fine spécifique à l'utilisateur actuel sous la condition que, selon le résultat de classification (600), l'utilisateur actuel est l'utilisateur enregistré dans le système.

10. Procédé selon l'une des revendications précédentes, dans lequel au moins un premier modèle sous la forme d'une première fonction de modèle (210) et au moins un premier ensemble de données de comparaison (220) sont stockés dans la mémoire (120) du système de communication mobile et portable (100),
le premier ensemble de données de comparaison (220) comprenant une pluralité de données de mouvement moteur grossier (500),
au moins un premier paramètre de comparaison (230) étant calculé à partir de la pluralité de données de mouvement moteur grossier (500) du premier ensemble de données de comparaison (220),
le module de classification de motricité globale (200) exécutant, en réponse à l'introduction des données de mouvement moteur grossier (500), les étapes suivantes lors de l'évaluation des données comportementales (500) :
a) comparer les données de mouvement moteur grossier collectées (500) avec la au moins une première fonction de modèle (210),
b) attribuer les données de mouvement moteur grossier (500) au premier modèle attribué à la première fonction de modèle (210) et obtenir au moins un premier paramètre de classification (230) correspondant au premier modèle lorsque les données de mouvement moteur grossier (500) peuvent être attribuées au moins à un premier modèle,
c) générer l'une des premières valeurs de confiance (540) pour chaque premier paramètre de classification (230) par comparaison du au moins un premier paramètre de classification (230) avec le premier paramètre de comparaison (230) respectif du premier ensemble de données de comparaison (220),
et dans lequel l'étape d'entraînement comprend l'ajout des données de mouvement moteur grossier collectées (500) au premier ensemble de données de comparaison (220).

11. Procédé selon l'une des revendications 7 à 10, dans lequel au moins un deuxième modèle sous la forme d'une deuxième fonction de modèle (210) et au moins un deuxième ensemble de données de comparaison (220) sont stockés dans la mémoire (120) du système de communication mobile et portable (100),
le deuxième ensemble de données de comparaison (220) comprenant une pluralité de données d'application (500),
au moins un deuxième paramètre de comparaison (230) étant calculé à partir de la pluralité de données d'application (500) du deuxième ensemble de données de comparaison (220),
le module de classification d'applications (200) exécutant, en réponse à l'introduction des données d'application (500), les étapes suivantes lors de l'évaluation des données comportementales (500) :
a) comparer les données d'application collectées (500) avec la au moins une deuxième fonction de modèle (210),
b) attribuer les données d'application (500) au deuxième modèle attribué à la deuxième fonction de modèle (210) et obtenir au moins un deuxième paramètre de classification (520) correspondant au deuxième modèle lorsque les données d'application (500) peuvent être attribuées au moins à un deuxième modèle,
c) générer l'une des deuxièmes valeurs de confiance (540) pour chacun des deuxièmes paramètres de classification (520) par comparaison des deuxièmes paramètres de classification (520) avec le deuxième paramètre de comparaison (520) respectif du deuxième ensemble de données de comparaison (220),
et dans lequel l'étape d'entraînement comprend l'ajout des données d'application collectées (500) au deuxième ensemble de données de comparaison (220).

12. Procédé selon l'une des revendications 8 à 11, dans lequel au moins un troisième modèle sous la forme d'une troisième fonction de modèle (210) et au moins un troisième ensemble de données de comparaison (220) sont stockés dans la mémoire (120) du système de communication mobile et portable (100),
le troisième ensemble de données de comparaison (220) comprenant une pluralité de données de mouvement de motricité fine (500),
au moins un troisième paramètre de comparaison (230) étant calculé à partir de la pluralité de données de mouvement de motricité fine (500) du troisième ensemble de données de comparaison (220),
le module de classification de motricité fine (200) exécutant, en réponse à l'introduction des données de mouvement de motricité fine (500), les étapes suivantes lors de l'évaluation des données comportementales (500) :
a) comparer les données de mouvement de motricité fine collectées (500) avec la au moins une troisième fonction de modèle (210),
b) attribuer les données de mouvement de motricité fine (500) au troisième modèle attribué à la troisième fonction de modèle (210) et obtenir au moins un troisième paramètre de classification (520) correspondant au troisième modèle lorsque les données de mouvement de motricité fine (500) peuvent être attribuées au moins à un troisième modèle,
c) générer l'une des troisièmes valeurs de confiance (540) pour chacun des troisièmes paramètres de classification (520) par comparaison des troisièmes paramètres de classification (520) avec le troisième paramètre de comparaison (520) respectif du troisième ensemble de données de comparaison (220),
et dans lequel l'étape d'entraînement comprend l'ajout des données de mouvement de motricité fine collectées (500) au troisième ensemble de données de comparaison (220).

13. Procédé selon l'une des revendications précédentes, dans lequel le critère de vérification est rempli lorsque :
le au moins un résultat de classification (600) dépasse une valeur seuil prédéfinie par le critère de vérification, et/ou
un âge maximal prédéfini par le critère de vérification pour le au moins un résultat de classification (600) n'est pas dépassé, et/ou
un nombre minimal de résultats de classification (600) est présent, ledit nombre minimal dépassant la valeur seuil.

14. Système de communication mobile et portable (100) destiné à une authentification basée sur le comportement (400) d'un utilisateur actuel vis-à-vis d'un système de communication mobile et portable (100),
le système de communication mobile et portable (100) comprenant un processeur (130), une mémoire (120), ainsi qu'un premier et un deuxième capteur (110, 114), des instructions de programme lisibles par machine étant stockées dans la mémoire (120),
le système de communication mobile et portable (100) étant configuré pour collecter des données comportementales (500) de l'utilisateur,
les données comportementales comprenant des données de mouvement moteur grossier (500), le système de communication mobile et portable (100) comportant un module de classification de motricité globale (200),
le premier capteur (110) étant configuré pour collecter les données de mouvement moteur grossier (500) d'un mouvement moteur grossier de l'utilisateur actuel du système de communication mobile et portable (100),
le premier capteur (110) étant un capteur interne du système de communication (100) destiné à détecter un mouvement du système de communication (100) provoqué par un mouvement moteur grossier de l'utilisateur actuel du système de communication pendant que l'utilisateur porte le système de communication sur lui,
le module de classification de motricité globale (200) étant entraîné pour reconnaître un modèle générique de mouvements moteurs grossiers à l'aide d'ensembles de données d'entraînement d'une cohorte d'utilisateurs, le module de classification de motricité globale (200) étant exécuté par le processeur (130) du système de communication mobile et portable (100),
et l'exécution des instructions de programme par le processeur (130) amenant le processeur (130) à commander le système de communication mobile et portable (100) de sorte que le système de communication mobile et portable (100) exécute un procédé d'authentification de l'utilisateur basé sur le comportement comprenant les étapes consistant à :
collecter des données comportementales (500) de l'utilisateur actuel en utilisant le premier capteur (110),
évaluer les données comportementales collectées (500),
générer un premier signal d'authentification lorsque les données comportementales évaluées (500) de l'utilisateur actuel correspondent à un comportement caractéristique d'un utilisateur enregistré du système de communication mobile et portable (100), le premier signal d'authentification signalant une authentification réussie de l'utilisateur actuel,
la collecte et l'évaluation des données comportementales (500) comprenant :
a) exécuter de manière répétée les étapes consistant à :
i. collecter les données de mouvement moteur grossier (500) au moyen du au moins un premier capteur (110) du système de communication mobile et portable (100), les données de mouvement moteur grossier (500) étant des données de mouvement du mouvement moteur grossier de l'utilisateur actuel,
ii. introduire les données de mouvement moteur grossier (500) dans le module de classification de motricité globale (200),
iii. générer au moins une première valeur de confiance (540) au moyen du module de classification de motricité globale (200), la première valeur de confiance (540) indiquant une probabilité selon laquelle les données de mouvement moteur grossier (500) introduites sont des données d'un mouvement moteur grossier de l'utilisateur enregistré,
iv. stocker la au moins une première valeur de confiance (540) dans la mémoire (120) du système de communication mobile et portable (100),
b) en réponse à une demande d'authentification, accéder à la mémoire (120) du système de communication mobile et portable (100) afin de lire au moins une des premières valeurs de confiance (540) stockées depuis la mémoire (120),
c) générer le résultat de classification (600) en utilisant la au moins une première valeur de confiance (540),
d) évaluer le au moins un premier résultat de classification (600) selon un critère de vérification prédéfini, une authentification basée sur le comportement réussie de l'utilisateur actuel étant obtenue lorsque le critère de vérification est rempli,
et l'exécution des instructions de programme par le processeur (130) amenant en outre le processeur (130) à commander le système de communication mobile et portable (100) de sorte que le système de communication mobile et portable (100) exécute un procédé d'authentification indépendante du comportement de l'utilisateur en utilisant au moins une caractéristique d'authentification prédéfinie (502) de l'utilisateur, la au moins une caractéristique d'authentification prédéfinie (502) étant une caractéristique d'une connaissance caractéristique de l'utilisateur enregistré, d'une possession caractéristique de l'utilisateur enregistré et/ou d'une caractéristique biologique caractéristique de l'utilisateur enregistré,
l'authentification indépendante du comportement sur la base de la au moins une caractéristique d'authentification prédéfinie (502) comprenant, à titre de solution de repli, lorsque les données comportementales évaluées (500) de l'utilisateur actuel ne correspondent pas à un comportement caractéristique de l'utilisateur enregistré, les étapes consistant à :
collecter la au moins une caractéristique d'authentification prédéfinie (502) de l'utilisateur actuel,
évaluer la caractéristique d'authentification prédéfinie collectée (502),
générer un deuxième signal d'authentification lorsque la caractéristique d'authentification prédéfinie évaluée (502) de l'utilisateur actuel correspond à une connaissance caractéristique, à une possession caractéristique et/ou à une caractéristique biologique caractéristique de l'utilisateur enregistré, le deuxième signal d'authentification signalant une authentification réussie de l'utilisateur actuel.
